# EUROPÄISCHE PATENTSCHRIFT

(11) **EP 3 484 936 B1**
(45) Veröffentlichungstag und Bekanntmachung des Hinweises auf die Patenterteilung: **08.09.2021**
(21) Anmeldenummer: 17737603.5
(22) Anmeldetag: 12.07.2017
(51) Int. Cl.: C08G 18/75, C09D 5/44, C08G 18/08, C08G 18/12, C08G 18/32, C08G 18/42, C08L 33/12, C08L 75/06

(54) **WÄSSRIGER BASISLACK UND HERSTELLUNG VON MEHRSCHICHTLACKIERUNGEN UNTER EINSATZ DES BASISLACKS**
AQUEOUS BASE COAT AND PRODUCTION OF MULTILAYER COATINGS USING THE BASE COAT
APPRET EN BASE AQUEUSE ET FABRICATION DE PEINTURES MULTICOUCHES A L'AIDE DE L'APPRET

(30) Priorität: 15.07.2016 EP 16179635
(43) Veröffentlichungstag der Anmeldung: 22.05.2019
(73) Patentinhaber: BASF Coatings GmbH, 48165 Münster (DE)
(72) Erfinder: BAUER, Juergen, 82166 Gräfelfing (DE); EIERHOFF, Dirk, 48165 Muenster (DE); FECHTNER, Katharina, 48165 Muenster (DE); REUTER, Hardy, 48165 Muenster (DE); BUERMANN, Marita, 48165 Muenster (DE); SCHWARZ, Joerg, 48165 Muenster (DE); WILM, Patrick, 48165 Muenster (DE)
(74) Vertreter: BASF IP Association
(86) Internationale Anmeldenummer: PCT/EP2017/067628
(87) Internationale Veröffentlichungsnummer: WO 2018/011311

(56) Entgegenhaltungen:
- EP-A1- 1 736 246
- WO-A1-2016/091546
- DE-A1- 19 719 925

## Beschreibung

Die vorliegende Erfindung betrifft einen wässrigen Basislack. Die vorliegende Erfindung betrifft auch ein Verfahren zur Herstellung einer Mehrschichtlackierung, bei dem mindestens eine Basislackschicht unter Einsatz mindestens eines solchen wässrigen Basislacks hergestellt wird. Zudem betrifft die vorliegende Erfindung eine Mehrschichtlackierung, die nach dem erfindungsgemäßen Verfahren hergestellt wurde.

### Stand der Technik

Mehrschichtlackierungen auf metallischen Substraten oder Kunststoffsubstraten, beispielsweise Mehrschichtlackierungen im Bereich der Automobilindustrie, sind bekannt. Auf metallischen Substraten umfassen solche Mehrschichtlackierungen in der Regel, vom metallischen Substrat aus betrachtet, eine separat gehärtete Elektrotauchlackschicht, eine direkt auf die Elektrotauchlackschicht aufgebrachte und separat gehärtete, meist als Füllerschicht bezeichnete Schicht, mindestens eine Farb- und/oder Effektpigmente enthaltende und in der Regel als Basislackschicht bezeichnete Schicht sowie eine Klarlackschicht. Basislackschicht und Klarlackschicht werden in der Regel gemeinsam gehärtet.

Auf Kunststoffsubstraten, die im Bereich der Fahrzeuganbauteile relevant sind, werden in der Regel ebenfalls entsprechende Basis- und Klarlackschichten aufgebracht. Teils werden auch vor der Applikation des Basislacks bestimmte Füller oder Haftprimer aufgebracht.

Insbesondere im Zusammenhang mit Metallsubstraten gibt es Ansätze, in denen versucht wird, auf den separaten Härtungsschritt des direkt auf die gehärtete Elektrotauchlackschicht aufgebrachten Beschichtungsmittels (des im Rahmen des oben beschriebenen Standardverfahrens als Füller bezeichneten Beschichtungsmittels) zu verzichten, gegebenenfalls dabei auch die Schichtdicke der aus diesem Beschichtungsmittel hergestellten Beschichtungsschicht herabzusetzen. In der Fachwelt wird diese also nicht separat gehärtete Beschichtungsschicht dann häufig als Basislackschicht (und nicht mehr als Füllerschicht) bezeichnet beziehungsweise in Abgrenzung zu einer darauf aufgebrachten zweiten Basislackschicht als erste Basislackschicht bezeichnet. Teilweise wird sogar versucht, vollständig auf diese Beschichtungsschicht zu verzichten (wobei dann also lediglich eine so genannte Basislackschicht direkt auf der Elektrotauchlackschicht hergestellt wird, welche ohne separaten Härtungsschritt mit einem Klarlack überschichtet wird, letztlich also ebenfalls auf einen separaten Härtungsschritt verzichtet wird). Anstelle des separaten Härtungsschritts und eines zusätzlichen abschließenden Härtungsschritts soll also lediglich ein abschließender Härtungsschritt nach Applikation aller auf der Elektrotauchlackschicht aufgebrachten Beschichtungsschichten erfolgen.

Das Verzichten eines separaten Härtungsschritts des direkt auf die Elektrotauchlackschicht aufgebrachten Beschichtungsmittels ist unter ökologischen und ökonomischen Gesichtspunkten sehr vorteilhaft. Denn dies führt zu Energieeinsparung und der gesamte Herstellungsprozess kann selbstverständlich wesentlich stringenter ablaufen.

Ähnliche Verfahren sind im Zusammenhang mit Kunststoffverfahren bekannt, wobei hierbei selbstverständlich keine Elektrotauchlackschicht hergestellt wird. Der gemeinsam zu härtende Aufbau aus erstem Basislack, zweitem Basislack und Klarlack wird also beispielsweise direkt auf dem gegebenenfalls oberflächenaktivierend vorbehandelten Kunststoffsubstrat oder auf einer zunächst auf das Substrat aufgebrachten Füllerbeziehungsweise Haftprimerschicht aufgebracht.

Ebenfalls bekannt sind Reparaturverfahren zur Wiederherstellung von Mehrschichtlackierungen. Es handelt sich also um Verfahren, bei denen wie oben beschrieben hergestellte Mehrschichtlackierungen, die allerdings bestimmte Fehlstellen besitzen, ausgebessert werden sollen. Solche Reparaturverfahren erfolgen beispielsweise durch lokale Ausbesserung von Fehlstellen ("Spot-Repair") oder durch komplette Überlackierung der Fehlstellen aufweisenden Originallackierung (Doppellackierung). In der Regel werden dabei nach lokalem Anschleifen der Fehlstellen wie oben beschriebene Aufbauten aus Füller, Basislack und Klarlack beziehungsweise erstem Basislack, zweiten Basislack und Klarlack aufgebracht. Möglich ist auch, lediglich einen Basislack und einen darauf aufgebrachten Klarlack aufzubringen und dann gemeinsam zu härten. Hier dient also praktisch die Fehlstellen aufweisende Mehrschichtlackierung (Originallackierung) als Substrat.

Auch wenn die technologischen Eigenschaften bestehender Mehrschichtlackierungen bereits oft die Spezifikationen der Automobilhersteller zu erfüllen wissen, besteht weiterhin der Bedarf, diese zu verbessern. Dies gilt insbesondere im Zusammenhang mit dem zuletzt beschriebenen Herstellungsverfahren von Mehrschichtlackierungen, bei dem wie angegeben auf einen separaten Härtungsschritt verzichtet wird. Aber auch die weiter oben beschriebenen Standardverfahren zur Herstellung von Mehrschichtlackierungen sind an dieser Stelle noch optimierbar.

Insbesondere ist es herausfordernd, Mehrschichtlackierungen bereitzustellen, bei denen einerseits sehr gute optische Eigenschaften (beispielsweise Vermeidung von Kochern oder Nadelstichen), andererseits aber auch eine optimale mechanische Widerstandsfähigkeit, insbesondere optimale Haftungseigenschaften, erreicht werden. Ganz besonders herausfordernd ist der Erhalt guter Haftungseigenschaften im Bereich der Reparaturlackierung.

### Aufgabe

Aufgabe der vorliegenden Erfindung war es demzufolge, eine Mehrschichtlackierung beziehungsweise im Rahmen der Herstellung solcher Mehrschichtlackierungen einzusetzende Beschichtungsmittel bereitzustellen, durch die die oben angesprochenen Nachteile beseitigt werden können. Es sollte also ermöglicht werden, Mehrschichtlackierungen (Originallackierungen) sowie reparierte Mehrschichtlackierungen bereitzustellen, die neben ausgezeichneten ästhetischen Eigenschaften zudem sehr gute Haftungseigenschaften aufweisen.

### Technische Lösung

Es wurde gefunden, dass die genannten Aufgaben gelöst werden konnten durch einen wässrigen Basislack enthaltend
mindestens eine wässrige Polyurethan-Polyharnstoff-Dispersion (PD) mit in der Dispersion enthaltenen Polyurethan-Polyharnstoff-Partikeln mit einer mittleren Teilchengröße von 40 bis 2000 nm und einem Gelanteil von mindestens 50 %, wobei die Polyurethan-Polyharnstoff-Partikel, jeweils in umgesetzter Form,
(Z.1.1) mindestens ein Isocyanatgruppen-haltiges Polyurethan-Präpolymer enthaltend anionische und/oder in anionische Gruppen überführbare Gruppen sowie
(Z.1.2) mindestens ein Polyamin enthaltend zwei primäre Aminogruppen und ein oder zwei sekundäre Aminogruppen enthalten,
sowie
mindestens eine wässrige Dispersion (wD) enthaltend ein Polymerisat mit einer Teilchengröße von 100 bis 500 nm, dessen Herstellung die aufeinanderfolgende radikalische Emulsionspolymerisation von drei unterschiedlichen Mischungen (A), (B) und (C) von olefinisch ungesättigten Monomeren umfasst,
wobei
ein Polymer, welches aus der Mischung (A) hergestellt wird, eine Glasübergangstemperatur von 10 bis 65°C besitzt,
ein Polymer, welches aus der Mischung (B) hergestellt wird, eine Glasübergangstemperatur von -35 bis 15°C besitzt,
und
ein Polymer, welches aus der Mischung (C) hergestellt wird, eine Glasübergangstemperatur von -50 bis 15°C besitzt.

Der oben genannte wässrige Basislack wird in der Folge auch als erfindungsgemäßer Basislack bezeichnet und ist dementsprechend Gegenstand der vorliegenden Erfindung. Bevorzugte Ausführungsformen des erfindungsgemäßen Basislacks sind der weiter unten folgenden Beschreibung sowie den Unteransprüchen zu entnehmen.

Weiterhin Gegenstand der vorliegenden Erfindung ist ein Verfahren zur Herstellung einer Mehrschichtlackierung, bei dem mindestens eine Basislackschicht unter Einsatz mindestens eines erfindungsgemäßen wässrigen Basislacks hergestellt wird. Zudem betrifft die vorliegende Erfindung eine Mehrschichtlackierung, die nach dem erfindungsgemäßen Verfahren hergestellt wurde.

Durch den Einsatz des erfindungsgemäßen Basislacks werden Mehrschichtlackierungen erhalten, die hervorragende anwendungstechnische Eigenschaften, insbesondere ausgezeichnete ästhetische Eigenschaften und zudem sehr gute Haftungseigenschaften, aufweisen. Unter Einsatz des Basislacks können auch Mehrschichtlackierungen, die Fehlstellen aufweisen, auf besonders hochwertige Art repariert werden. Auch in diesem gerade im Hinblick auf die Haftung und die mechanische Widerstandsfähigkeit herausfordernden Bereich der Reparaturlackierung wird ein ausgezeichnetes Eigenschaftsprofil erreicht.

### Ausführliche Beschreibung

Der erfindungsgemäße wässrige Basislack enthält mindestens eine, bevorzugt genaue eine, spezielle wässrige Polyurethan-Polyharnstoff-Dispersion (PD), das heißt eine Dispersion, in der die vorhandenen Polymer-Partikel Polyurethan-Polyharnstoff basiert sind. Solche Polymere sind grundsätzlich durch an sich bekannte Polyaddition von beispielsweise Polyisocyanaten mit Polyolen sowie Polyaminen herstellbar. Im Hinblick auf die erfindungsgemäße Dispersion (PD) beziehungsweise die in ihr enthaltenen Polymer-Partikel sind jedoch spezielle, in der Folge erläuterte Bedingungen zu beachten.

Die in der wässrigen Polyurethan-Polyharnstoff-Dispersion (PD) enthaltenen Polyurethan-Polyharnstoff-Partikel besitzen einen Gelanteil von mindestens 50 % (Messmethode siehe Beispielteil). Zudem besitzen die in der Dispersion (PD) enthaltenen Polyurethan-Polyharnstoff-Partikel eine mittlere Teilchengröße (auch mittlere Partikelgröße genannt) von 40 bis 2000 Nanometern (nm) (Messmethode siehe Beispielteil).

Bei den erfindungsgemäß einzusetzenden Dispersionen (PD) handelt es sich also um Mikrogel-Dispersionen. Denn wie bereits oben beschrieben, handelt es sich bei einer Mikrogel-Dispersion um Polymer-Dispersionen, in welchen zum einen das Polymer in Form von vergleichsweise kleinen Partikeln beziehungsweise Mikro-Partikeln vorliegt, zum anderen die Polymer-Partikel zumindest teilweise intramolekular vernetzt sind. Letzteres bedeutet, dass die innerhalb eines Partikels vorhandenen Polymerstrukturen einem typischen makroskopischen Netzwerk gleichen mit dreidimensionaler Netzwerkstruktur. Makroskopisch betrachtet handelt es sich bei einer solchen Mikrogel-Dispersion aber nach wie vor um eine Dispersion von Polymerpartikeln in einem Dispersionsmedium, beispielsweise Wasser. Zwar können die Partikel auch untereinander zum Teil Vernetzungsbrücken aufweisen (dies ist rein herstellungsbedingt kaum auszuschließen), jedoch ist das System jedenfalls eine Dispersion mit darin enthaltenen diskreten Partikeln, die eine messbare mittlere Teilchengröße aufweisen.

Da die Mikrogele Strukturen repräsentieren, welche zwischen verzweigten und makroskopisch vernetzten Systemen liegen, sie folglich die Charakteristika von in geeigneten organischen Lösungsmitteln löslichen Makromolekülen mit Netzwerkstruktur und unlöslichen makroskopischen Netzwerken kombinieren, kann der Anteil der vernetzten Polymeren beispielsweise erst nach Isolation des festen Polymeren nach Entfernung von Wasser und gegebenenfalls organischen Lösungsmitteln und nachfolgender Extraktion ermittelt werden. Dabei macht man sich zunutze, dass die ursprünglich in geeigneten organischen Lösungsmitteln löslichen Mikrogel-Partikel nach Isolation ihre innere Netzwerkstruktur behalten und sich im Feststoff wie ein makroskopisches Netzwerk verhalten. Die Vernetzung kann über den experimentell zugänglichen Gelanteil überprüft werden. Letztlich handelt es sich beim Gelanteil um den Anteil des Polymers aus der Dispersion, der sich als isolierter Feststoff nicht molekular dispers in einem Lösemittel lösen lässt. Dabei muss ausgeschlossen werden, dass bei der Isolierung des polymeren Feststoffs nachgeschaltete Vernetzungsreaktionen den Gelanteil weiter erhöhen. Dieser unlösliche Anteil entspricht wiederum dem Anteil des in der Dispersion in Form von intramolekular vernetzen Partikeln beziehungsweise Partikelanteilen vorliegenden Polymers.

Im Rahmen der vorliegenden Erfindung hat sich gezeigt, dass lediglich Mikrogel-Dispersionen mit Polymerpartikeln mit Teilchengrößen im erfindungswesentlichen Bereich alle der geforderten anwendungstechnischen Eigenschaften aufweisen. Es kommt also insbesondere auf die Kombination von eher geringen Teilchengrößen und einem trotzdem vorhandenen signifikanten vernetzten Anteil beziehungsweise Gelanteil an. Nur auf diese Weise sind die vorteilhaften Eigenschaften, insbesondere die Kombination von guten optischen und mechanischen Eigenschaften von Mehrschichtlackierungen zu erreichen.

Die in der wässrigen Polyurethan-Polyharnstoff-Dispersion (PD) enthaltenen Polyurethan-Polyharnstoff-Partikel besitzen vorzugsweise einen Gelanteil von mindestens 60 %, besonders bevorzugt von mindestens 70 %, insbesondere bevorzugt von mindestens 80 %. Der Gelanteil kann also bis zu 100 % beziehungsweise annähernd 100 %, beispielsweise 99 % oder 98 % betragen. In einem solchen Fall liegt also das gesamte beziehungsweise annähernd das gesamte Polyurethan-Polyharnstoff-Polymer in Form von vernetzten Partikeln vor.

Die in der Dispersion (PD) enthaltenen Polyurethan-Polyharnstoff-Partikel besitzen vorzugsweise eine mittlere Teilchengröße von 40 bis 1500 nm, nochmals bevorzugt von 100 bis 1000 nm, darunter bevorzugt 110 bis 500 nm und nochmals bevorzugt 120 bis 300 nm. Ein ganz besonders bevorzugter Bereich liegt von 130 bis 250 nm.

Die erhaltene Polyurethan-Polyharnstoff-Dispersion (PD) ist wässrig. Der Ausdruck "wässrig" ist dem Fachmann in diesem Zusammenhang bekannt. Gemeint ist grundsätzlich ein System, das als Dispersionsmedium nicht ausschließlich oder hauptsächlich organische Lösemittel (auch Lösungsmittel genannt) enthält, sondern das im Gegenteil als Dispersionsmedium einen signifikanten Anteil Wasser enthält.

Bevorzugte Ausführungsformen des wässrigen Charakters, die anhand des Maximalgehalts organischer Lösemittel und/oder anhand des Gehalts an Wasser definiert sind, werden weiter unten für unterschiedliche Komponenten und Systeme, beispielsweise für Dispersionen (PD), Dispersionen (wD) oder Basislacke, beschrieben. Die in der Dispersion (PD) enthaltenen Polyurethan-Polyharnstoff-Partikel enthalten, jeweils in umgesetzter Form, (Z.1.1) mindestens ein Isocyanatgruppen-haltiges Polyurethan-Präpolymer enthaltend anionische und/oder in anionische Gruppen überführbare Gruppen sowie (Z.1.2) mindestens einem Polyamin enthaltend zwei primäre Aminogruppen und ein oder zwei sekundäre Aminogruppen.

Sofern im Rahmen der vorliegenden Erfindung angegeben ist, dass Polymere, beispielsweise die Polyurethan-Polyharnstoff-Partikel der Dispersion (PD), bestimmte Komponenten in umgesetzter Form enthalten, ist hierunter zu verstehen, dass bei der Herstellung der jeweiligen Polymere diese bestimmten Komponenten als Ausgangsverbindungen eingesetzt werden. Je nach Art der Ausgangsverbindungen erfolgt die jeweilige Umsetzung zum Zielpolymer nach unterschiedlichen Mechanismen. So werden augenscheinlich bei der Herstellung von Polyurethan-Polyharnstoff-Partikeln beziehungsweise Polyurethan-Polyharnstoff-Polymeren die Komponenten (Z.1.1) und (Z.1.2) durch Reaktion der Isocyanatgruppen von (Z.1.1) mit den Aminogruppen von (Z.1.2) unter Ausbildung von Harnstoffbindungen miteinander umgesetzt. Das Polymer enthält dann natürlich die vorher vorhandenen Aminogruppen und Isocyanatgruppen in Form von Harnstoffgruppen, das heißt in ihrer entsprechend umgesetzten Form. Trotzdem enthält das Polymer letztlich die beiden Komponenten (Z.1.1) und (Z.1.2), denn abgesehen von den umgesetzten Isocyanatgruppen und Aminogruppen verbleiben die Komponenten unverändert. Demnach wird der Übersicht halber angegeben, dass das jeweilige Polymer die Komponenten, jeweils in umgesetzter Form, enthält. Die Bedeutung des Ausdrucks "das Polymer enthält, in umgesetzter Form, eine Komponente (X)", ist also gleichzusetzen mit der Bedeutung des Ausdrucks "bei der Herstellung des Polymers wurde die Komponente (X) einsetzt".

Bevorzugt bestehen die Polyurethan-Polyharnstoff-Partikel aus den beiden Komponenten (Z.1.1) und (Z.1.2), das heißt sie werden aus diesen beiden Komponenten hergestellt. Die wässrige Dispersion (PD) kann beispielsweise durch ein spezielles dreistufiges Verfahren, erhalten werden. Im Rahmen der Beschreibung dieses Verfahrens werden auch bevorzugte Ausführungsformen der Komponenten (Z.1.1) und (Z.1.2) genannt.

In einem ersten Schritt (I) dieses Verfahrens wird eine spezielle Zusammensetzung (Z) hergestellt.

Die Zusammensetzung (Z) enthält mindestens ein, bevorzugt genau ein spezielles Isocyanatgruppen-haltiges Intermediat (Z.1) mit maskierten primären Aminogruppen.

Die Herstellung des Intermediats (Z.1) umfasst die Umsetzung mindestens eines der Isocyanatgruppen-haltigen Polyurethan-Präpolymers (Z.1.1) enthaltend anionische und/oder in anionische Gruppen überführbare Gruppen mit mindestens einem von einem Polyamin (Z.1.2) abgeleiteten Polyamin (Z.1.2a) enthaltend mindestens zwei maskierte primäre Aminogruppen und mindestens eine freie sekundäre Aminogruppe.

Isocyanatgruppen-haltige Polyurethan-Polymere enthaltend anionische und/oder in anionische Gruppen überführbare Gruppen sind grundsätzlich bekannt. Im Rahmen der vorliegenden Erfindung wird die Komponente (Z.1.1) der besseren Übersichtlichkeit halber als Präpolymer bezeichnet. Es handelt sich nämlich um ein als Vorstufe zu bezeichnendes Polymer, da es als Ausgangskomponente zur Herstellung einer anderen Komponente, nämlich dem Intermediat (Z.1), eingesetzt wird.

Für die Herstellung der Isocyanatgruppen-haltigen Polyurethan-Präpolymere (Z.1.1) enthaltend anionische und/oder in anionische Gruppen überführbare Gruppen können die dem Fachmann bekannten aliphatischen, cycloaliphatischen, aliphatischcycloaliphatischen, aromatischen, aliphatisch-aromatischen und/oder cycloaliphatischaromatischen Polyisocyanate eingesetzt werden. Bevorzugt werden Diisocyanate eingesetzt. Beispielhaft seien folgende Diisocyanate genannt: 1,3- oder 1,4-Phenylendiisocyanat, 2,4- oder 2,6-Toluylendiisocyanat, 4,4'- oder 2,4'-Diphenylmethandiisocyanat, 1,4- oder 1,5-Naphthylendiisocyanat, Diisocyanatodiphenylether, Trimethylendiisocyanat, Tetramethylendiisocyanat, Ethylethylendiisocyanat, 2,3-Dimethylethylendiisocyanat, 1-Methyltrimethylendiisocyanat, Pentamethylendiisocyanat, 1,3-Cyclopentylendiisocyanat, Hexamethylendiisocyanat, Cyclohexylendiisocyanat, 1,2-Cyclohexylendiisocyanat, Octamethylendiisocyanat, Trimethylhexandiisocyanat, Tetramethylhexandiisocyanat, Decamethylendiisocyanat, Dodecamethylendiisocyanat, Tetradecamethylendiisocyanat, Isophorondiisocyanat (IPDI), 2-lsocyanato-propylcyclohexyl-isocyanat, Dicyclohexylmethan-2,4'-diisocyanat, Dicyclohexylmethan-4,4'-diisocyanat, 1,4- oder 1,3-Bis(isocyanatomethyl)cyclohexan, 1,4- oder 1,3- oder 1,2-Diisocyanatocyclohexan, 2,4- oder 2,6-Diisocyanato-1-methylcyclohexan, 1-Isocyanatomrthyl-5-isocyanato-1,3,3-trimethylcyclohexan, 2,3-Bis(8-isocyanatooctyl)-4-octyl-5-hexylcyclohexen, Tetramethylxylylendiisocyanate (TMXDI) wie m-Tetramethylxylylendiisocyanat oder Mischungen aus diesen Polyisocyanaten. Auch der Einsatz unterschiedlicher Dimere und Trimere der genannten Diisocyanate wie Uretdione und Isocyanurate ist natürlich möglich. Bevorzugt ist der Einsatz von aliphatischen Diisocyanaten, wie Hexamethylendiisocyanat, Isophorondiisocyanat (IPDI), Dicyclohexylmethan-4,4'-diisocyanat, 2,4- oder 2,6-Diisocyanato-1-methylcyclohexan und/oder m-Tetramethylxylylendiisocyanat (m-TMXDI). Als aliphatisch wird ein Isocyanat dann bezeichnet, wenn die Isocyantgruppen an aliphatische Gruppen angebunden sind, das heißt in alpha-Position zu einer Isocyanatgruppe kein aromatischer Kohlenstoff vorhanden ist.

Zur Herstellung der Präpolymere (Z.1.1) werden die Polyisocyanate in der Regel unter Bildung von Urethanen mit Polyolen, insbesondere Diolen, umgesetzt.

Beispiele geeigneter Polyole sind gesättigte oder olefinisch ungesättigte Polyesterpolyole und/oder Polyetherpolyole. Insbesondere werden als Polyole Polyesterpolyole, insbesondere solche mit einem zahlenmittleren Molekulargewicht von 400 bis 5000 g/mol (Messmethode siehe Beispielteil), eingesetzt. Solche Polyesterpolyole, bevorzugt Polyesterdiole, können auf bekannte Weise durch Umsetzung von entsprechenden Polycarbonsäuren, bevorzugt Dicarbonsäuren, und/oder deren Anhydriden mit entsprechenden Polyolen, bevorzugt Diolen, durch Veresterung hergestellt werden. Natürlich können gegebenenfalls zusätzlich auch anteilig Monocarbonsäuren und/oder Monoalkohole zur Herstellung eingesetzt werden. Die Polyesterdiole sind bevorzugt gesättigt, insbesondere gesättigt und linear.

Beispiele für geeignete aromatische Polycarbonsäuren zur Herstellung solcher Polyesterpolyole, bevorzugt Polyesterdiole, sind Phthalsäure, Isophthalsäure und Terephthalsäure, von denen Isophthalsäure vorteilhaft ist und deshalb bevorzugt verwendet wird. Beispiele für geeignete aliphatische Polycarbonsäuren sind Oxalsäure, Malonsäure, Bernsteinsäure, Glutarsäure, Adipinsäure, Pimelinsäure, Korksäure, Azelainsäure, Sebacinsäure, Undecandicarbonsäure und Dodecandicarbonsäure oder auch Hexahydrophthalsäure, 1,3-Cyclohexandicarbonsäure, 1,4-Cyclohexandicarbonsäure, 4-Methylhexahydrophthalsäure, Tricyclodecandicarbonsäure sowie Tetrahydrophthalsäure. Ebenfalls eingesetzt werden können als Dicarbonsäuren Dimerfettsäuren beziehungsweise dimerisierte Fettsäuren, bei denen es sich bekanntermaßen um Gemische handelt, die durch Dimerisierung von ungesättigten Fettsäuren hergestellt werden und beispielsweise unter den Handelsbezeichnungen Radiacid (Firma Oleon) oder Pripol (Firma Croda) zu erhalten sind. Der Einsatz solcher Dimerfettsäuren zur Herstellung von Polyesterdiolen ist im Rahmen der vorliegenden bevorzugt. Bevorzugt eingesetzte Polyole zur Herstellung der Präpolymere (Z.1.1) sind also Polyesterdiole, die unter Einsatz von Dimerfettsäuren hergestellt wurden. Insbesondere bevorzugt sind Polyesterdiole, bei deren Herstellung mindestens 50 Gew.-%, bevorzugt 55 bis 75 Gew.-%, der eingesetzten Dicarbonsäuren Dimerfettsäuren sind.

Beispiele für entsprechende Polyole zur Herstellung von Polyesterpolyolen, bevorzugt Polyesterdiolen, sind Ethylenglykol, 1,2- oder 1,3-Propandiol, 1,2-, 1,3- oder 1,4-Butandiol, 1,2-, 1,3-, 1,4- oder 1,5-Pentandiol, 1,2-, 1,3-, 1,4-, 1,5- oder 1,6-Hexandiol, Hydroxypivalinsäureneopentylester, Neopentylglykol, Diethylenglykol, 1,2-, 1,3- oder 1,4-Cyclohexandiol, 1,2-, 1,3- oder 1,4-Cyclohexandimethanol und Trimethylpentandiol. Bevorzugt werden also Diole eingesetzt. Solche Polyole beziehungsweise Diole können natürlich auch direkt zur Herstellung des Präpolymers (Z.1.1) eingesetzt werden, das heißt direkt mit Polyisocyanaten umgesetzt werden.

Weiterhin zur Herstellung der Präpolymere (Z.1.1) eingesetzt werden können auch Polyamine wie Diamine und/oder Aminoakohole. Beispielhaft seien als Diamine Hydrazin, Alkyl- oder Cycloalkyldiamine wie Propylendiamin und 1-Amino-3-aminomethyl-3,5,5-trimethylcyclohexan und als Aminoalkohole Ethanolamin oder Diethanolamin genannt.

Die Präpolymere (Z.1.1) enthalten anionische und/oder in anionische Gruppen überführbare Gruppen (das heißt Gruppen, die durch den Einsatz bekannter und auch weiter unten genannter Neutralisationsmittel wie Basen in anionische Gruppen überführt werden können). Wie der Fachmann weiß, handelt es sich hierbei um beispielsweise Carbonsäure-, Sulfonsäure- und/oder Phosphonsäuregruppen, insbesondere bevorzugt Carbonsäuregruppen (funktionelle Gruppen, die durch Neutralisationsmittel in anionische Gruppen überführt werden können) sowie aus den vorgenannten funktionellen Gruppen abgeleitete anionische Gruppen wie insbesondere Carboxylat-, Sulfonat- und/oder Phosphonatgruppen, bevorzugt Carboxylatgruppen. Durch die Einführung solcher Gruppen wird bekanntermaßen die Wasserdispergierbarkeit erhöht. Je nach gewählten Bedingungen können die genannten Gruppen anteilig oder nahezu vollständig in der einen Form (beispielsweise Carbonsäure) oder anderen Form (Carboxylat) vorliegen. Ein bestimmender Einflussfaktor liegt beispielsweise im Einsatz der schon angesprochenen und weiter unten noch genauer beschriebenen Neutralisationsmittel. Wird das Präpolymer (Z.1.1) mit solchen Neutralisationsmitteln vermischt, so wird, je nach Menge des Neutralisationsmittels, eine entsprechende Menge der Carbonsäuregruppen in Carboxylatgruppen überführt. Unabhängig davon, in welcher Form die genannten Gruppen vorliegen, wird im Rahmen der vorliegenden Erfindung der besseren Übersichtlichkeit halber aber häufig eine einheitliche Benennung gewählt. Wird beispielsweise für ein Polymer wie für ein Präpolymer (Z.1.1) eine bestimmte Säurezahl angegeben oder wird ein solches Polymer als carboxyfunktionell bezeichnet, sind hiermit immer sowohl die Carbonsäuregruppen als auch die Carboxylatgruppen umfasst. Soll in dieser Hinsicht eine Differenzierung stattfinden, wird dies beispielsweise anhand des Neutralisierungsgrads getan.

Zur Einführung der genannten Gruppen können bei der Herstellung der Präpolymere (Z.1.1) Ausgangsverbindungen eingesetzt werden, die neben bei der Herstellung von Urethanbindungen umzusetzenden Gruppen, bevorzugt Hydroxylgruppen, noch die oben genannten Gruppen, beispielsweise Carbonsäuregruppen, enthalten. Auf diese Weise werden die entsprechenden Gruppen ins Präpolymer eingeführt.

Als entsprechende Verbindungen zur Einführung der bevorzugten Carbonsäuregruppen kommen, sofern Carboxylgruppen-haltig, Polyetherpolyole und/oder Polyesterpolyole in Betracht. Bevorzugt eingesetzt werden allerdings jedenfalls niedermolekulare Verbindungen, die mindestens eine Carbonsäuregruppe und mindestens eine gegenüber Isocyanatgruppen reaktive funktionelle Gruppe, bevorzugt Hydroxylgruppen, aufweisen. Der Ausdruck "niedermolekulare Verbindung" ist im Rahmen der vorliegenden Erfindung so zu verstehen, dass es sich im Gegensatz zu höhermolekularen Verbindungen, insbesondere Polymeren, um solche handelt, denen als vorzugsweise monomeren Verbindungen ein diskretes Molekulargewicht zugeordnet werden kann. Eine niedermolekulare Verbindung ist also insbesondere kein Polymer, denn letztere stellen sich immer als Mischung von Molekülen dar und müssen über mittlere Molekulargewichte beschrieben werden. Vorzugsweise ist unter dem Begriff niedermolekulare Verbindung zu verstehen, dass die entsprechenden Verbindungen ein Molekulargewicht von weniger als 300 g/mol aufweisen. Bevorzugt ist der Bereich von 100 bis 200 g/mol.

In diesem Sinne bevorzugte Verbindungen sind beispielsweise Monocarbonsäuren enthaltend zwei Hydroxylgruppen wie beispielsweise Dihydroxypropionsäure, Dihydroxybernsteinsäure und Dihydroxybenzoesäure. Ganz besonders sind alpha, alpha Dimethylolalkansäuren wie 2,2-Dimethylolessigsäure, 2,2-Dimethylolpropionsäure, 2,2-Dimethylolbuttersäure und 2,2-Dimethylolpentansäure, insbesondere die 2,2-Dimethylolpropionsäure.

Die Präpolymere (Z.1.1) sind also bevorzugt carboxyfunktionell. Sie besitzen, bezogen auf den Festkörper, bevorzugt eine Säurezahl von 10 bis 35 mg KOH/g, insbesondere 15 bis 23 mg KOH/g (Messmethode siehe Beispielteil).

Das zahlenmittlere Molekulargewicht der Präpolymere kann breit variieren und liegt beispielsweise im Bereich von 2000 bis 20000 g/mol, bevorzugt von 3500 bis 6000 g/mol (Messmethode siehe Beispielteil).

Das Präpolymer (Z.1.1) ist Isocyanatgruppen-haltig. Bevorzugt besitzt es, bezogen auf den Festkörper, einen Isocyanatgehalt von 0,5 bis 6,0 Gew.-%, bevorzugt 1,0 bis 5,0 Gew.-%, insbesondere bevorzugt 1,5 bis 4,0 Gew.-% (Messmethode sie Beispielteil).

Da das Präpolymer (Z.1.1) Isocyanatgruppen-haltig ist, wird die Hydroxylzahl des Präpolymers augenscheinlich in der Regel sehr niedrig sein. Bevorzugt ist die Hydroxylzahl des Präpolymers, bezogen auf den Festkörper, kleiner als 15 mg KOH/g, insbesondere kleiner 10 mg KOH/g, nochmals bevorzugt kleiner 5 mg KOH/g (Messmethode siehe Beispielteil).

Die Herstellung der Präpolymere (Z.1.1) kann nach bekannten und etablierten Methoden in Masse oder Lösung erfolgen, insbesondere bevorzugt durch Umsetzung der Ausgangsverbindungen in organischen Lösemitteln, wie bevorzugt Methylethylketon bei Temperaturen von beispielsweise 60 bis 120°C, und gegebenenfalls unter Einsatz von zur Polyurethanherstellung typischen Katalysatoren. Solche Katalysatoren sind dem Fachmann bekannt, ein Beispiel ist Dibutylzinnlaurat. Dabei ist selbstverständlich so vorzugehen, dass das Verhältnis der Ausgangskomponenten so gewählt wird, dass das Produkt, das heißt das Präpolymer (Z.1.1) Isocyanatgruppen enthält. Ebenfalls unmittelbar ersichtlich ist, dass die Lösemittel so ausgewählt werden sollten, dass diese keine unerwünschten Reaktionen mit den funktionellen Gruppen der Ausgangsverbindungen eingehen, gegenüber diesen Gruppen also insoweit inert sind, dass sie nicht die Umsetzung dieser funktionellen Gruppen behindern. Bevorzugt wird die Herstellung bereits in einem wie weiter unten beschriebenen organischen Lösemittel (Z.2) durchgeführt, da dieses ohnehin in der in Stufe (I) des Verfahrens herzustellenden Zusammensetzung (Z) vorhanden sein muss.

Wie bereits oben angegeben, können die im Präpolymer (Z.1.1) vorhandenen in anionische Gruppen überführbare Gruppen anteilig auch als entsprechend anionische Gruppen vorliegen, beispielsweise durch den Einsatz eines Neutralisationsmittels. Auf diese Weise kann die Wasserdispergierbarkeit der Präpolymere (Z.1.1) und damit auch des Intermediats (Z.1) eingestellt werden.

Als Neutralisationsmittel kommen insbesondere die bekannten basischen Neutralisationsmittel wie beispielsweise Carbonate, Hydrogencarbonate oder Hydroxide von Alkali- und Erdalkalimetallen wie beispielsweise LiOH, NaOH, KOH oder Ca(OH)₂ in Betracht. Ebenso zur Neutralisation geeignet sind und im Rahmen der vorliegenden Erfindung bevorzugt eingesetzt werden organische, stickstoffhaltige Basen wie Amine wie Ammoniak, Trimethylamin, Triethylamin, Tributylamine, Dimethylanilin, Triphenylamin, Dimethylethanolamin, Methyldiethanolamin oder Triethanolamin sowie deren Mischungen.

Die Neutralisation des Präpolymers (Z.1.1) mit den Neutralisationsmitteln, insbesondere mit den stickstoffhaltigen, organischen Basen, kann nach der Herstellung des Präpolymers in organischer Phase, das heißt in Lösung mit einem organischen Lösemittel, insbesondere einem wie unten beschriebenen Lösemittel (Z.2) erfolgen. Natürlich kann das Neutralisationsmittel auch bereits während beziehungsweise vor Beginn der eigentlichen Polymerisation zugegeben werden, wobei dann beispielsweise die Carbonsäuregruppen-haltigen Ausgangsverbindungen neutralisiert werden.

Wenn eine Neutralisation der in anionische Gruppen überführbaren Gruppen, insbesondere der Carbonsäuregruppen, gewünscht wird, kann das Neutralisationsmittel beispielsweise in einer solchen Menge zugesetzt werden, dass ein Anteil von 35 bis 65 % der Gruppen neutralisiert ist (Neutralisationsgrad). Bevorzugt ist ein Bereich von 40 bis 60 % (Berechnungsmethode siehe Beispielteil).

Bevorzugt ist, dass das Präpolymer (Z.1.1) nach seiner Herstellung und vor seinem Einsatz zur Herstellung des Intermediats (Z.1) wie beschrieben neutralisiert wird.

Die hier beschriebene Herstellung des Intermediats (Z.1) umfasst die Umsetzung des beschriebenen Präpolymers (Z.1.1) mit mindestens einem, bevorzugt genau einem von einem Polyamin (Z.1.2) abgeleiteten Polyamin (Z.1.2a).

Das Polyamin (Z.1.2a) enthält zwei maskierte primäre Aminogruppen und ein oder zwei freie sekundäre Aminogruppen.

Unter maskierten Aminogruppen sind bekanntermaßen solche zu verstehen, in denen die an sich in freien Aminogruppen vorhandenen Wasserstoffreste am Stickstoff durch reversible Umsetzung mit einem Maskierungsmittel subsituiert sind. Aufgrund der Maskierung können die Aminogruppen nicht wie freie Aminogruppen über Kondensations- oder Additionsreaktionen umgesetzt werden, sind also in dieser Hinsicht nicht reaktiv und unterscheiden sich damit von freien Aminogruppen. Erst die Wiederentfernung des reversibel angelagerten Maskierungsmittels, wodurch wiederum die freien Aminogruppen entstehen, ermöglicht dann augenscheinlich die an sich bekannten Reaktionen der Aminogruppen. Das Prinzip ähnelt damit dem Prinzip der auf dem Gebiet der Polymerchemie ebenfalls bekannten blockierten beziehungsweise maskierten Isocyanate.

Die primären Aminogruppen des Polyamins (Z.1.2a) können mit den an sich bekannten Maskierungsmitteln maskiert sein, beispielsweise mit Ketonen und/oder Aldehyden. Bei einer solchen Maskierung entstehen dann also unter Freisetzung von Wasser Ketimine und/oder Aldimine, welche keine Stickstoff-Wasserstoff-Bindungen mehr enthalten, sodass keine typischen Kondensations- oder Additionsreaktionen einer Aminogruppen mit einer weiteren funktionellen Gruppe wie einer Isocyanatgruppe stattfinden können.

Reaktionsbedingungen zur Herstellung eines solchen maskierten primären Amins, beispielsweise eines Ketimins, sind bekannt. So kann beispielsweise unter Zuführung von Wärme zu einer Mischung eines primären Amins mit einem Überschuss eines Ketons, welches gleichzeitig als Lösemittel für das Amin fungiert, eine entsprechende Maskierung realisiert werden. Bevorzugt wird das anfallende Reaktionswasser während der Reaktion entfernt, um die ansonsten mögliche Rückreaktion (Demaskierung) der reversiblen Maskierung zu verhindern.

Auch die Reaktionsbedingungen für eine Demaskierung von maskierten primären Aminogruppen sind an sich bekannt. So ist beispielsweise bereits die Überführung eines maskierten Amins in die wässrige Phase ausreichend, um durch den dann bestehenden Konzentrationsdruck des Wassers das Gleichgewicht wieder auf die Seite der Demaskierung zu verschieben und dadurch unter Verbrauch von Wasser freie primäre Aminogruppen sowie ein freies Keton zu erzeugen.

Aus oben Gesagtem folgt, dass im Rahmen der vorliegenden Erfindung eindeutig zwischen maskierten und freien Aminogruppen unterschieden wird. Wird allerdings eine Aminogruppe weder als maskiert noch als frei spezifiziert, ist hierunter eine freie Aminogruppe zu verstehen.

Bevorzugte Maskierungsmittel zur Maskierung der primären Aminogruppen des Polyamins (Z.1.2a) sind Ketone. Unter den Ketonen sind solche besonders bevorzugt, bei denen es sich um ein wie weiter unten beschriebenes organisches Lösemittel (Z.2) handelt. Denn diese Lösemittel (Z.2) müssen ohnehin in der in Stufe (I) des Verfahrens herzustellenden Zusammensetzung (Z) vorhanden sein. Bereits oben angegeben ist, dass die Herstellung entsprechender mit einem Keton maskierter primärer Amine besonders gut in einem Überschuss des Ketons gelingt. Durch den Einsatz von Ketonen (Z.2) zur Maskierung kann also der entsprechend bevorzugte Herstellungsprozess von maskierten Aminen zur Anwendung kommen, ohne dass das gegebenenfalls ungewünschte Maskierungsmittel aufwendig abgetrennt werden muss. Stattdessen kann die Lösung des maskierten Amins direkt eingesetzt werden, um das Intermediat (Z.1) herzustellen. Bevorzugte Maskierungsmittel sind Aceton, Methylethylketon, Methylisobutylketon, Diisopropylketon, Cyclopentanon oder Cyclohexanon, besonders bevorzugt sind die Ketone (Z.2) Methylethylketon und Methylisobutylketon.

Die bevorzugte Maskierung mit Ketonen und/oder Aldehyden, insbesondere Ketonen und die dabei erfolgende Herstellung von Ketiminen und/oder Aldiminen hat zudem den Vorteil, dass selektiv primäre Aminogruppen maskiert werden. Vorhandene sekundäre Aminogruppen können augenscheinlich nicht maskiert werden und bleiben damit frei. Daher kann ein Polyamin (Z.1.2a), welches neben den zwei maskierten primären Aminogruppen auch eine oder zwei freie sekundäre Aminogruppen enthält, problemlos über die genannten bevorzugten Maskierungsreaktionen aus einem entsprechenden Polyamin (Z.1.2), welches freie sekundäre und primäre Aminogruppen enthält, hergestellt werden.

Die Polyamine (Z.1.2a) können durch Maskierung der primären Aminogruppen von Polyaminen (Z.1.2) enthaltend zwei primäre Aminogruppen und eine oder zwei sekundäre Aminogruppe hergestellt werden. In Frage kommen letztlich alle an sich bekannten aliphatischen, aromatischen oder araliphatischen (gemischt aliphatisch-aromatischen) Polyamine (Z.1.2) mit zwei primären Aminogruppen und einer oder zwei sekundären Aminogruppen. Dies bedeutet, dass neben den genannten Aminogruppen an sich beliebige aliphatische, aromatische oder araliphatische Gruppen vorhanden sein können. Beispielsweise möglich sind einbindige Gruppen, die als endständige Gruppen an einer sekundären Aminogruppe angeordnet sind, oder zweibindige Gruppen, die zwischen zwei Aminogruppen angeordnet sind.

Als aliphatisch werden im Rahmen der vorliegenden Erfindung alle organischen Gruppen bezeichnet, die nicht aromatisch sind. Beispielsweise kann es sich bei den neben den genannten Aminogruppen vorhandenen Gruppen um aliphatische Kohlenwasserstoffgruppen handeln, das heißt Gruppen, die ausschließlich aus Kohlenstoff und Wasserstoff bestehen und nicht aromatisch sind. Diese aliphatischen Kohlenwasserstoffgruppen können linear, verzweigt oder cyclisch sein, wobei sie gesättigt oder ungesättigt sein können. Natürlich können diese Gruppen auch sowohl cyclische und lineare oder verzweigte Anteile enthalten. Möglich ist auch, dass aliphatische Gruppen Heteroatome enthalten, insbesondere in Form von verbrückenden Gruppen wie Ether-, Ester-, Amid- und/oder Urethangruppen. Mögliche aromatische Gruppen sind ebenfalls bekannt und bedürfen keiner weiteren Erläuterung.

Bevorzugt ist, dass die Polyamine (Z.1.2a) zwei maskierte primäre Aminogruppen und ein oder zwei freie sekundäre Aminogruppen besitzen und sie als primäre Aminogruppen ausschließlich maskierte primäre Aminogruppen und als sekundäre Aminogruppen ausschließlich freie sekundäre Aminogruppen besitzen.

Bevorzugt besitzen die Polyamine (Z.1.2a) insgesamt drei oder vier Aminogruppen, wobei diese ausgewählt sind aus der Gruppe der maskierten primären Aminogruppen und der freien sekundären Aminogruppen.

Ganz besonders bevorzugte Polyamine (Z.1.2a) sind solche, die aus zwei maskierten primären Aminogruppen, ein oder zwei freien sekundären Aminogruppen sowie aliphatisch-gesättigten Kohlenwasserstoffgruppen bestehen.

Analoge bevorzugte Ausführungsformen gelten für die Polyamine (Z.1.2), wobei in diesen dann statt maskierten primären Aminogruppen freie primäre Aminogruppen vorhanden sind.

Beispiele von bevorzugten Polyaminen (Z.1.2), aus denen auch durch Maskierung der primären Aminogruppen Polyamine (Z.1.2a) hergestellt werden können, sind Diethylentriamin, 3-(2-Aminoethyl)aminopropylamin, Dipropylentriamin sowie N1-(2-(4-(2-Aminoethyl)piperazin-1-yl)ethyl)ethane-1,2-diamin (eine sekundäre Aminogruppe, zwei zu blockierende primäre Aminogruppen) und Triethylentetramin sowie N,N'-Bis(3-aminopropyl)-ethylendiamin (zwei sekundäre Aminogruppen, zwei zu blockierende primäre Aminogruppen).

Dem Fachmann ist klar, dass schon aus rein synthesetechnischen Gründen nicht immer ein theoretisch-idealisierter quantitativer Umsatz bei der Maskierung von primären Aminogruppen stattfinden kann. Wird beispielweise eine bestimmte Menge eines Polyamins maskiert, kann bei der Maskierung beispielsweise ein Anteil von 95 mol-% oder mehr der primären Aminogruppen maskiert werden (IR-spektroskopisch bestimmbar, vergleiche Beispielteil). Besitzt ein Polyamin im nicht maskierten Zustand beispielsweise zwei freie primäre Aminogruppen und werden die primären Aminogruppen einer bestimmten Menge dieses Amins dann maskiert, so wird im Rahmen der vorliegenden Erfindung angegeben, dass dieses Amin zwei maskierte primäre Aminogruppen aufweist, wenn ein Anteil von mehr als 95 mol-% der in der eingesetzten Menge vorhandenen primären Aminogruppen maskiert sind. Dies ist einerseits der schon genannten Tatsache, dass synthesetechnisch nicht immer ein quantitativer Umsatz realisiert werden kann, geschuldet. Andererseits bedeutet die Tatsache, dass mehr als 95 mol-% der primären Aminogruppen maskiert sind, dass der größte Anteil der Gesamtmenge der zur Maskierung eingesetzten Amine tatsächlich ausschließlich maskierte primäre Aminogruppen, nämlich genau zwei maskierte primäre Aminogruppen, enthält.

Die Herstellung des Intermediats (Z.1) umfasst die Umsetzung des Präpolymers (Z.1.1) mit dem Polyamin (Z.1.2a) durch Additionsreaktion von Isocyanatgruppen aus (Z.1.1) mit freien sekundären Aminogruppen aus (Z.1.2a). Diese an sich bekannte Umsetzung führt dann zur Anbindung des Polyamins (Z.1.2a) an das Präpolymer (Z.1.1) unter Ausbildung von Harnstoffbindungen, wodurch letztlich das Intermediat (Z.1) gebildet wird. Es versteht sich von selbst, dass bei der Herstellung des Intermediats (Z.1) bevorzugt also keine anderen Amine mit freien oder maskierten sekundären oder freien oder maskierten primären Aminogruppen eingesetzt werden.

Die Herstellung des Intermediats (Z.1) kann nach bekannten und etablierten Methoden in Masse oder Lösung erfolgen, insbesondere bevorzugt durch Umsetzung von (Z.1.1) mit (Z.1.2a) in organischen Lösemitteln. Unmittelbar ersichtlich ist, dass die Lösemittel so ausgewählt werden sollten, dass diese keine unerwünschten Reaktionen mit den funktionellen Gruppen der Ausgangsverbindungen eingehen, sich gegenüber diesen Gruppen also inert oder weitgehend inert verhalten. Bevorzugt wird als Lösemittel bei der Herstellung zumindest anteilig bereits ein wie weiter unten beschriebenes organisches Lösemittel (Z.2), insbesondere Methylethylketon, eingesetzt, da dieses ohnehin in der in Stufe (I) des Verfahrens herzustellenden Zusammensetzung (Z) vorhanden sein muss. Dabei wird bevorzugt eine Lösung eines Präpolymers (Z.1.1) in einem Lösemittel (Z.2) mit einer Lösung eines Polyamins (Z.1.2a) in einem Lösemittel (Z.2), vermischt, wobei die beschriebene Umsetzung stattfinden kann.

Natürlich kann das so hergestellte Intermediat (Z.1) bei oder nach der Herstellung mit schon oben beschriebenen Neutralisationsmitteln auf die ebenfalls oben für das Präpolymer (Z.1.1) beschriebene Weise neutralisiert werden. Bevorzugt ist aber, dass das Präpolymer (Z.1.1) bereits in wie oben beschriebener Art vor seinem Einsatz zur Herstellung des Intermediats (Z.1) neutralisiert wird, sodass eine Neutralisierung bei oder nach der Herstellung von (Z.1) nicht mehr relevant ist. In einem solchen Fall ist also der Neutralisationsgrad des Präpolymers (Z.1.1) mit dem Neutralisationsgrad des Intermediats (Z.1) gleichzusetzen. Erfolgt im Rahmen des Verfahrens überhaupt keine weitere Zugabe von Neutralisationsmitteln, so ist demnach auch der Neutralisationsgrad der in den schließlich hergestellten erfindungsgemäßen Dispersionen (PD) enthaltenen Polymeren mit dem Neutralisationsgrad des Präpolymers (Z.1.1) gleichzusetzen.

Das Intermediat (Z.1) besitzt maskierte primäre Aminogruppen. Dies ist augenscheinlich dadurch zu erreichen, dass bei der Umsetzung des Präpolymers (Z.1.1) und des Polyamins (Z.1.2a) die freien sekundären Aminogruppen zur Reaktion gebracht werden, jedoch die maskierten primären Aminogruppen nicht umgesetzt werden. Denn wie schon oben beschrieben wird durch die Maskierung erreicht, dass keine typischen Kondensations- oder Additionsreaktionen mit weiteren funktionellen Gruppen wie Isocyanatgruppen stattfinden können. Selbstverständlich bedeutet dies, dass die Bedingungen bei der Umsetzung so zu wählen sind, dass die maskierten Aminogruppen auch maskiert bleiben, um hierdurch ein Intermediat (Z.1) bereitzustellen. Entsprechende Bedingungen weiß der Fachmann einzustellen und werden beispielsweise durch die ohnehin bevorzugte Reaktion in organischen Lösemitteln realisiert.

Das Intermediat (Z.1) ist Isocyanatgruppen-haltig. Demnach muss bei der Umsetzung von (Z.1.1) und (Z.1.2a) das Verhältnis dieser Komponenten selbstverständlich so gewählt werden, dass das Produkt, das heißt das Intermediat (Z.1), Isocyanatgruppen enthält.

Da wie oben beschrieben bei der Umsetzung von (Z.1.1) mit (Z.1.2a) freie sekundäre Aminogruppen mit Isocyanatgruppen umgesetzt werden, die primären Aminogruppen aber aufgrund der Maskierung nicht umgesetzt werden, ist damit zunächst unmittelbar klar, dass bei dieser Umsetzung das molare Verhältnis von Isocyanatgruppen von (Z.1.1) zu freien sekundären Aminogruppen von (Z.1.2a) größer 1 sein muss. Dieses Merkmal ergibt sich implizit, nichtsdestotrotz eindeutig und unmittelbar aus dem erfindungswesentlichen Merkmal, dass das Intermediat (Z.1) Isocyanatgruppen-haltig ist.

Bevorzugt ist allerdings, dass bei der Umsetzung ein wie folgt definierter Überschuss an Isocyanatgruppen vorliegt. Die molaren Mengen (n) von Isocyanatgruppen, freien sekundären Aminogruppen und maskierten primären Aminogruppen genügen in dieser bevorzugten Ausführungsform der folgenden Bedingung: [n (Isocyanatgruppen von (Z.1.1)) - n (freie sekundäre Aminogruppen von (Z.1.2a))] / n (maskierte primäre Aminogruppen von (Z.1.2a)) = 1,2/1 bis 4/1, bevorzugt 1,5/1 bis 3/1, ganz besonders bevorzugt 1,8/1 bis 2,2/1, nochmals bevorzugt 2/1.

In diesen bevorzugten Ausführungsformen besitzt das Intermediat (Z.1), welches durch Umsetzung von Isocyanatgruppen von (Z.1.1) mit den freien sekundären Aminogruppen von (Z.1.2a) entsteht, im Verhältnis zu den maskierten primären Aminogruppen einen Überschuss von Isocyanatgruppen. Dies wird letztlich dadurch erreicht, dass das molare Verhältnis von Isocyanatgruppen von (Z.1.1) zu der Gesamtmenge von freien sekundären Aminogruppen und maskierten primären Aminogruppen von (Z.1.2a) so groß gewählt wird, dass auch nach der Herstellung von (Z.1) und dem entsprechenden Verbrauch von Isocyanatgruppen durch die Umsetzung mit den freien sekundären Aminogruppen ein entsprechender Überschuss der Isocyanatgruppen verbleibt.

Hat beispielsweise das Polyamin (Z.1.2a) eine freie sekundäre Aminogruppe und zwei maskierte primäre Aminogruppen, so wird das molare Verhältnis zwischen den Isocyanatgruppen von (Z.1.1) zu dem Polyamin (Z.1.2a) in der ganz besonders bevorzugten Ausführungsform mit 5/1 eingestellt. Der Verbrauch von einer Isocyanatgruppe bei der Umsetzung mit der freien sekundären Aminogruppe würde dann bedeuten, dass für die oben genannte Bedingung 4/2 (beziehungsweise 2/1) realisiert ist.

Der Anteil des Intermediats (Z.1) beträgt von 15 bis 65 Gew.-%, bevorzugt von 25 bis 60 Gew.-%, nochmals bevorzugt von 30 bis 55 Gew.-%, insbesondere bevorzugt von 35 bis 52,5 Gew.-% und in einer ganz besonderen Ausführungsform von 40 bis 50 Gew.-%, jeweils bezogen auf die Gesamtmenge der Zusammensetzung (Z).

Die Bestimmung des Anteils eines Intermediats (Z.1) kann wie folgt durchgeführt werden: Es wird der Festkörper einer Mischung, die neben dem Intermediat (Z.1) lediglich organische Lösemittel enthält, bestimmt (Messmethode zur Bestimmung des Festkörpers (auch Festkörpergehalt oder Feststoffgehalt genannt) siehe Beispielteil). Der Festkörper entspricht dann der Menge des Intermediats (Z.1). Durch Berücksichtigung des Festkörpers der Mischung kann damit der Anteil des Intermediats (Z.1) an der Zusammensetzung (Z) ermittelt beziehungsweise festgelegt werden. Da das Intermediat (Z.1) bevorzugt ohnehin in einem organischen Lösemittel hergestellt wird, nach der Herstellung also ohnehin in einer Mischung vorliegt, die neben dem Intermediat lediglich organische Lösemittel enthält, ist dies die Methode der Wahl.

Die Zusammensetzung (Z) enthält zudem mindestens ein spezielles organisches Lösemittel (Z.2).

Die Lösemittel (Z.2) besitzen bei einer Temperatur von 20°C eine Löslichkeit in Wasser von höchstens 38 Gew.-% (Messmethode siehe Beispielteil). Bevorzugt ist die Löslichkeit in Wasser bei einer Temperatur von 20°C kleiner 30 Gew.-%. Ein bevorzugter Bereich ist von 1 bis 30 Gew.-%.

Demzufolge besitzt das Lösemittel (Z.2) eine eher moderate Löslichkeit in Wasser, ist insbesondere nicht vollständig mischbar mit Wasser beziehungsweise besitzt keine unbegrenzte Löslichkeit in Wasser. Vollständig mischbar mit Wasser ist ein Lösemittel dann, wenn es in beliebigen Verhältnissen mit Wasser vermischt werden kann, ohne dass es zu einer Entmischung, das heißt Zweiphasenbildung kommt.

Beispiele von Lösemitteln (Z.2) sind Methylethylketon, Methylisobutylketon, Diisobutylketon, Diethylether, Dibutylether, Dipropylenglykoldimethylether, Ethylenglykoldiethylether, Toluol, Methylacetat, Ethylacetat, Butylacetat, Propylencarbonat, Cyclohexanon oder Gemische dieser Lösemittel. Bevorzugt ist Methylethylketon, welches bei 20°C eine Löslichkeit in Wasser von 24 Gew.-% aufweist.

Keine Lösemittel (Z.2) sind damit Lösemittel wie Aceton, N-Methyl-2-pyrrolidon, N-Ethyl-2-pyrrolidon, Tetrahydrofuran, Dioxan, N-Formylmorpholin, Dimethylformamid oder Dimethylsulfoxid.

Durch die Auswahl der speziellen Lösemittel (Z.2) mit nur begrenzter Wasserlöslichkeit wird insbesondere erreicht, dass bei der in Schritt (II) des Verfahrens erfolgenden Dispergierung der Zusammensetzung (Z) in wässriger Phase nicht direkt eine homogene Lösung gebildet werden kann. Es wird angenommen, dass die stattdessen vorliegende Dispersion ermöglicht, dass die unter Schritt (II) stattfindenden Vernetzungsreaktionen (Additionsreaktionen von freien primären Aminogruppen und Isocyanatgruppen unter Bildung von Harnstoffbindungen) in eingeschränkten Volumen ablaufen, wodurch letztlich die Bildung der wie oben definierten Mikropartikel ermöglicht wird.

Bevorzugte Lösemittel (Z.2) besitzen neben der beschriebenen Wasserlöslichkeit einen Siedepunkt von höchstens 120°C, besonders bevorzugt von höchstens 90°C (bei Normaldruck, das heißt 1,013 bar). Dies hat Vorteile bei dem weiter unten beschriebenen Schritt (III) des Verfahrens, das heißt der zumindest teilweisen Entfernung des mindestens einen organischen Lösemittels (Z.2) aus der Dispersion, die in Schritt (II) des Verfahrens hergestellt wird. Denn augenscheinlich können bei Einsatz der in diesem Sinne bevorzugten Lösemittel (Z.2) diese Lösemittel beispielsweise destillativ entfernt werden, ohne das gleichzeitig signifikante Mengen des in Schritt (II) des Verfahrens eingebrachten Wassers entfernt werden. Somit entfällt beispielsweise das aufwendige Nachgeben von Wasser zum Erhalt des wässrigen Charakters der Dispersion (PD).

Der Anteil des mindestens einen organischen Lösemittels (Z.2) beträgt von 35 bis 85 Gew.-%, bevorzugt von 40 bis 75 Gew.-%, nochmals bevorzugt von 45 bis 70 Gew.-%, insbesondere bevorzugt von 47,5 bis 65 Gew.-% und in einer ganz besonderen Ausführungsform von 50 bis 60 Gew.-%, jeweils bezogen auf die Gesamtmenge der Zusammensetzung (Z).

Im Rahmen der vorliegenden Erfindung hat sich gezeigt, dass durch die gezielte Kombination eines wie oben spezifizierten Anteils des Intermediats (Z.1) an der Zusammensetzung (Z) und der Auswahl der speziellen Lösemittel (Z.2) nach den in der Folge beschriebenen Schritten (II) und (III) Polyurethan-Polyharnstoff-Dispersionen bereitgestellt werden können, die Polyurethan-Polyharnstoff-Partikel mit der erforderlichen Teilchengröße enthalten, die zudem den erforderlichen Gelanteil aufweisen. Die beschriebenen Komponenten (Z.1) und (Z.2) machen in Summe bevorzugt mindestens 90 Gew.-% der Zusammensetzung (Z) aus. Bevorzugt machen die beiden Komponenten mindestens 95 Gew.-%, insbesondere mindestens 97,5 Gew.-% der Zusammensetzung (Z) aus. Ganz besonders bevorzugt besteht die Zusammensetzung (Z) aus diesen beiden Komponenten. In diesem Zusammenhang sei darauf hingewiesen, dass im Falle des Einsatzes von wie oben beschriebenen Neutralisationsmitteln diese Neutralisationsmittel bei der Berechnung der Menge eines Intermediats (Z.1) dem Intermediat zugerechnet werden. Denn in diesem Fall besitzt das Intermediat (Z.1) jedenfalls anionische Gruppen, die auf den Einsatz des Neutralisationsmittels zurückgehen. Das nach der Bildung dieser anionischen Gruppen vorhandene Kation wird demzufolge ebenfalls dem Intermediat zugerechnet.

Sofern die Zusammensetzung (Z) neben den Komponenten (Z.1) und (Z.2) noch andere Komponenten enthält, handelt es sich hierbei bevorzugt lediglich um organische Lösemittel. Bevorzugt entspricht der Festkörper der Zusammensetzung (Z) damit dem Anteil des Intermediats (Z.1) an der Zusammensetzung (Z). Die Zusammensetzung (Z) besitzt somit bevorzugt einen Festkörpergehalt von 15 bis 65 Gew.-%, bevorzugt von 25 bis 60 Gew.-%, nochmals bevorzugt von 30 bis 55 Gew.-%, insbesondere bevorzugt von 35 bis 52,5 Gew.-% und in einer ganz besonderen Ausführungsform von 40 bis 50 Gew.-%.

Eine besonders bevorzugte Zusammensetzung (Z) enthält also in Summe mindestens 90 Gew.-% der Komponenten (Z.1) und (Z.2) und enthält neben dem Intermediat (Z.1) ausschließlich organische Lösemittel.

Ein Vorteil der Zusammensetzung (Z) liegt darin, dass sie ohne den Einsatz von umwelt- und gesundheitsschädlichen organischen Lösemitteln wie N-Methyl-2-pyrrolidon, Dimethylformamid, Dioxan, Tetrahydrofuran und N-Ethyl-2-pyrrolidon hergestellt werden kann. Demzufolge enthält die Zusammensetzung (Z) bevorzugt weniger als 10 Gew.-%, bevorzugt weniger als 5 Gew.-%, nochmals bevorzugt weniger als 2,5 Gew.-% an organischen Lösemitteln ausgewählt aus der Gruppe bestehend aus N-Methyl-2-pyrrolidon, Dimethylformamid, Dioxan, Tetrahydrofuran und N-Ethyl-2-pyrrolidon. Bevorzugt ist die Zusammensetzung (Z) vollständig frei von diesen organischen Lösemitteln.

In einem zweiten Schritt (II) des hier beschriebenen Verfahrens wird die Zusammensetzung (Z) in wässriger Phase dispergiert.

Bekannt ist und auch aus bereits oben Gesagtem folgt, dass damit im Schritt (II) eine Demaskierung der maskierten primären Aminogruppen des Intermediats (Z.1) realisiert wird. Denn durch die Überführung eines maskierten Amins in die wässrige Phase wird unter Verbrauch von Wasser das reversibel angelagerte Maskierungsmittel freigesetzt und es werden freie primäre Aminogruppen gebildet.

Ebenfalls klar ist damit, dass die so entstandenen freien primären Aminogruppen dann mit ebenfalls vorhandenen Isocyanatgruppen des Intermediats (Z.1) beziehungsweise des aus dem Intermediat (Z.1) entstanden demaskierten Intermediats durch Additionsreaktion unter Bildung von Harnstoffbindungen umgesetzt werden.

Bekannt ist auch, dass die Überführung in die wässrige Phase bedeutet, dass grundsätzlich die Möglichkeit besteht, dass Isocyanatgruppen des Intermediats (Z.1) beziehungsweise des aus dem Intermediat (Z.1) entstanden demaskierten Intermediats mit dem Wasser unter Abspaltung von Kohlenstoffdioxid zu freien primären Aminogruppen reagieren, welche dann wiederum mit noch vorhandenen Isocyanatgruppen umgesetzt werden können.

Die oben genannten Reaktionen und Umsetzungen verlaufen selbstverständlich parallel zueinander. Letztlich entsteht dabei durch beispielsweise intermolekulare und intramolekulare Umsetzung beziehungsweise Vernetzung eine Dispersion enthaltend Polyurethan-Polyharnstoff-Partikel mit definierter mittlerer Teilchengröße und definiertem Vernetzungsgrad beziehungsweise Gelanteil.

In Schritt (II) des hier beschriebenen Verfahrens wird also die Zusammensetzung (Z) in Wasser dispergiert, wobei eine Demaskierung der maskierten primären Aminogruppen des Intermediats (Z.1) und eine Umsetzung der so entstandenen freien primären Aminogruppen mit den Isocyanatgruppen des Intermediats (Z.1) sowie den Isocyanatgruppen des aus dem Intermediat (Z.1) entstandenen demaskierten Intermediats durch Additionsreaktion erfolgt.

Schritt (II) des erfindungsgemäßen Verfahrens, das heißt die Dispergierung in wässriger Phase, kann auf an sich beliebige Weise erfolgen. Das heißt, es kommt letztlich nur darauf an, dass die Zusammensetzung (Z) mit Wasser beziehungsweise einer wässrigen Phase gemischt wird. Bevorzugt kann die Zusammensetzung (Z), welche nach der Herstellung beispielsweise bei Raumtemperatur, das heißt 20 bis 25°C, oder bei gegenüber Raumtemperatur erhöhter Temperatur von beispielsweise 30 bis 60°C vorliegen kann, in Wasser eingerührt werden, wodurch eine Dispersion entsteht. Das vorgelegte Wasser hat dabei beispielsweise Raumtemperatur. Es kann in reinem Wasser (deionisiertem Wasser) dispergiert werden, das heißt die wässrige Phase besteht lediglich aus Wasser, was bevorzugt ist. Natürlich kann die wässrige Phase neben Wasser auch anteilig typische Hilfsstoffe wie typische Emulgatoren und Schutzkolloide enthalten. Eine Zusammenstellung geeigneter Emulgatoren und Schutzkolloide findet sich beispielsweise in Houben Weyl, Methoden der organischen Chemie, Band XIV/1 Makromolekulare Stoffe, Georg Thieme Verlag, Stuttgart 1961, S 411 ff.

Von Vorteil ist es, wenn in Stufe (II) des Verfahrens, das heißt bei der Dispergierung der Zusammensetzung (Z) in wässriger Phase, das Gewichtsverhältnis von organischen Lösemitteln und Wasser so gewählt wird, dass die resultierende Dispersion ein Gewichtsverhältnis von Wasser zu organischen Lösemitteln von größer 1, bevorzugt von 1,05 bis 2/1, insbesondere bevorzugt von 1,1 bis 1,5/1 aufweist.

In Schritt (III) des hier beschriebenen Verfahrens erfolgt die zumindest teilweise Entfernung des mindestens einen organischen Lösemittels (Z.2) aus der in Schritt (II) erhaltenen Dispersion. Natürlich können in Schritt (III) des Verfahrens auch weitere Lösemittel, die beispielsweise gegebenenfalls in der Zusammensetzung (Z) vorhanden waren, entfernt werden.

Die Entfernung des mindestens einen organischen Lösemittels (Z.2) und gegebenenfalls weiterer organischer Lösemittel kann auf beliebige bekannte Weise, beispielsweise durch Vakuumdestillation bei gegenüber Raumtemperatur leicht erhöhten Temperaturen von beispielsweise 30 bis 60°C erfolgen.

Die erhaltene Polyurethan-Polyharnstoff-Dispersion (PD) ist wässrig (zur grundsätzlichen Definition von "wässrig" siehe weiter oben).

Ein besonderer Vorteil der erfindungsgemäßen Dispersion (PD) ist, dass sie mit nur sehr geringen Anteilen an organischen Lösemitteln formuliert werden kann, trotzdem aber die eingangs beschriebenen erfindungsgemäßen Vorteile ermöglicht. Die erfindungsgemäße Dispersion (PD) enthält bevorzugt weniger als 7,5 Gew.-%, insbesondere bevorzugt weniger als 5 Gew.-%, ganz besonders bevorzugt weniger als 2,5 Gew.-% organische Lösemittel (Messmethode siehe Beispielteil).

Der Anteil des Polyurethan-Polyharnstoff-Polymers in der Dispersion (PD) beträgt bevorzugt 25 bis 55 Gew.-%, bevorzugt 30 bis 50 Gew.-%, nochmals bevorzugt 35 bis 45 Gew.-%, jeweils bezogen auf die Gesamtmenge der Dispersion (Bestimmung analog der oben für das Intermediat (Z.1) beschriebenen Bestimmung über den Festkörpergehalt).

Der Anteil von Wasser in der Dispersion (PD) beträgt bevorzugt 45 bis 75 Gew.-%, bevorzugt 50 bis 70 Gew.-%, nochmals bevorzugt 55 bis 65 Gew.-%, jeweils bezogen auf die Gesamtmenge der Dispersion.

Es ist bevorzugt, dass die erfindungsgemäße Dispersion (PD) zu mindestens 90 Gew.-%, bevorzugt mindestens 92,5 Gew.-%, ganz besonders bevorzugt zu mindestens 95 Gew.-% und nochmals bevorzugt zu mindestens 97,5 Gew.-% aus den Polyurethan-Polyharnstoff-Partikeln und Wasser besteht (der zugehörige Wert ergibt sich durch Aufsummierung der Menge der Partikel (das heißt des Polymers, bestimmt über den Festkörpergehalt) und der Menge Wasser). Es hat sich gezeigt, dass die erfindungsgemäßen Dispersionen trotz dieses geringen Anteils von weiteren Komponenten wie insbesondere organischen Lösemitteln in jedem Fall sehr stabil, insbesondere lagerstabil, sind. Aus diese Weise werden zwei relevante Vorteile vereint. Zum einen werden Dispersionen bereitgestellt, die in wässrigen Basislacken eingesetzt werden können und dort zu den eingangs und auch in den nachstehenden Beispielen beschriebenen anwendungstechnischen Vorteilen führen. Zum zweiten aber wird eine angemessene Formulierungsfreiheit bei der Herstellung von wässrigen Basislacken erreicht. Das heißt, dass in den Basislacken zusätzliche Anteile organischer Lösemittel eingesetzt werden können, die beispielsweise notwendig sind, um verschiedene Komponenten angemessen zu formulieren. Dabei wird dann aber nicht der grundsätzlich wässrige Charakter des Basislacks gefährdet. Im Gegenteil können die Basislacke trotzdem mit vergleichsweise niedrigen Anteilen organischer Lösemittel formuliert werden, weisen also ein besonders gutes ökologisches Profil auf.

Nochmals bevorzugter ist, dass die Dispersion neben dem Polymer lediglich Wasser und gegebenenfalls organische Lösemittel, beispielsweise in Form von Restanteilen, die in Stufe (III) des Verfahrens nicht vollständig abgetrennt worden sind, enthält. Demzufolge beträgt der Festkörper der Dispersion (PD) bevorzugt 25 bis 55 %, bevorzugt 30 bis 50 %, nochmals bevorzugt 35 bis 45 % und stimmt darunter nochmals bevorzugt mit dem Anteil des Polymers an der Dispersion überein.

Ein Vorteil der Dispersion (PD) liegt darin, dass sie ohne den Einsatz von umweit- und gesundheitsschädlichen organischen Lösemitteln wie N-Methyl-2-pyrrolidon, Dimethylformamid, Dioxan, Tetrahydrofuran und N-Ethyl-2-pyrrolidon hergestellt werden kann. Demzufolge enthält die Dispersion (PD) bevorzugt weniger als 7,5 Gew.-%, bevorzugt weniger als 5 Gew.-%, nochmals bevorzugt weniger als 2,5 Gew.-% an organischen Lösemitteln ausgewählt aus der Gruppe bestehend aus N-Methyl-2-pyrrolidon, Dimethylformamid, Dioxan, Tetrahydrofuran und N-Ethyl-2-pyrrolidon. Bevorzugt ist die Dispersion (PD) vollständig frei von diesen organischen Lösemitteln.

Das in der Dispersion vorhandene Polyurethan-Polyharnstoff-Polymer besitzt, bezogen auf den Festkörper, bevorzugt eine Säurezahl von 10 bis 35 mg KOH/g, insbesondere von 15 bis 23 mg KOH/g (Messmethode siehe Beispielteil).

Das in der Dispersion vorhandene Polyurethan-Polyharnstoff-Polymer besitzt bevorzugt kaum oder keine Hydroxylgruppen. Die OH-Zahl des Polymers liegt, bezogen auf den Festkörper, bevorzugt kleiner als 15 mg KOH/g, insbesondere kleiner 10 mg KOH/g, nochmals bevorzugt kleiner 5 mg KOH/g (Messmethode siehe Beispielteil).

Der Anteil der mindestens einen Dispersionen (PD), bezogen auf das Gesamtgewicht des erfindungsgemäßen wässrigen Basislacks, beträgt bevorzugt 1,0 bis 60 Gew.-%, besonders bevorzugt 2,5 bis 50 Gew.-% und ganz besonders bevorzugt 5 bis 40 Gew.-%.

Der Anteil der aus den Dispersionen (PD) stammenden Polymere beträgt, bezogen auf das Gesamtgewicht des erfindungsgemäßen wässrigen Basislacks, vorzugsweise von 0,4 bis 24,0 Gew.-%, bevorzugt 1,0 bis 20,0 Gew.-%, besonders bevorzugt 2,0 bis 16,0 Gew.-%

Die Bestimmung beziehungsweise Festlegung des Anteils der aus den erfindungsgemäß einzusetzenden Dispersionen (PD) stammenden Polymere am Basislack kann über die Bestimmung des Festkörpers (auch genannt nicht-flüchtiger Anteil, Festkörpergehalt oder Festkörperanteil) einer Dispersion (PD), die in dem Basislack eingesetzt werden soll, erfolgen. Analoges gilt für die Anteile weiterer Komponenten, beispielsweise einer Dispersion (wD).

Der erfindungsgemäße Basislack enthält mindestens eine, bevorzugt genau eine spezielle wässrige Dispersion (wD), welche ein spezielles Polymerisat enthält.

Die Herstellung des Polymerisats umfasst die aufeinanderfolgende radikalische Emulsionspolymerisation von drei unterschiedlichen Mischungen (A), (B) und (C) von olefinisch ungesättigten Monomeren. Es handelt sich also um eine mehrstufige radikalische Emulsionspolymerisation, wobei i. zunächst die Mischung (A) polymerisiert wird, dann ii. in Anwesenheit des unter i. hergestellten Polymerisats die Mischung (B) polymerisiert wird und weiterhin iii. in Anwesenheit des unter ii. hergestellten Polymerisats die Mischung (C) polymerisiert wird. Alle drei Monomermischungen werden also über eine jeweils separat durchgeführte radikalische Emulsionspolymerisation (das heißt Stufe oder auch Polymerisationsstufe) polymerisiert, wobei diese Stufen aufeinanderfolgend stattfinden. Die Stufen können, zeitlich betrachtet, direkt hintereinander stattfinden. Möglich ist es genauso, dass nach Abschluss einer Stufe die entsprechende Reaktionslösung für eine gewisse Zeitspanne gelagert und/oder in ein anderes Reaktionsgefäß überführt wird und erst dann die nächste Stufe stattfindet. Bevorzugt umfasst die Herstellung des speziellen mehrstufigen Polymerisats neben der Polymerisation der Monomerenmischungen (A), (B) und (C) keine weiteren Polymerisationsschritte.

Der Begriff der radikalischen Emulsionspolymerisation ist dem Fachmann bekannt und wird zudem in der Folge nochmals genauer erläutert.

Bei einer solchen Polymerisation werden olefinisch ungesättigten Monomere in wässrigem Medium unter Einsatz von mindestens einem wasserlöslichen Initiator und in Anwesenheit mindestens eines Emulgators polymerisiert.

Entsprechende wasserlösliche Initiatoren sind ebenfalls bekannt. Bevorzugt wird der mindestens eine wasserlösliche Initiator ausgewählt aus der Gruppe bestehend aus Kalium-, Natrium- oder Ammoniumperoxodisulfat, Wasserstoffperoxid, tert.-Butylhydroperoxid, 2,2'-Azobis(2-amidoisopropan)dihydrochlorid, 2,2'-Azo- bis-(N,N'-dimethylenisobutyramidin)dihydrochlorid, 2,2'-Azo- bis-(4-cyanopentansäure) sowie Mischungen der vorgenannten Initiatoren, beispielsweise Wasserstoffperoxid und Natriumpersulfat. Ebenfalls der genannten bevorzugten Gruppe zugehörig sind die an sich bekannten Redox-Initiatorsyteme.

Unter Redox-Initiatorsystemen sind insbesondere solche Initiatoren zu verstehen, die mindestens eine peroxidhaltige Verbindung in Kombination mit mindestens einem Redox-Coinitiator, beispielsweise reduzierend wirkenden Schwefelverbindungen wie beispielsweise Bisulfiten, Sulfiten, Thiosulfaten, Dithioniten oder Tetrathionaten von Alkalimetallen und Ammoniumverbindungen, Natriumhydroxymethansulfinat-Dihydrat und/oder Thioharnstoff, enthalten. So kann man Kombinationen von Peroxodisulfaten mit Alkalimetall- oder Ammoniumhydrogensulfiten einsetzen, beispielsweise Ammoniumperoxodisulfat und Ammoniumdisulfit. Das Gewichtsverhältnis von peroxidhaltigen Verbindungen zu den Redox-Coinitiatoren beträgt vorzugsweise 50 : 1 bis 0,05 : 1.

In Kombination mit den Initiatoren können zusätzlich Übergangsmetallkatalysatoren eingesetzt werden, wie beispielsweise Eisen-, Nickel-, Kobalt-, Mangan-, Kupfer-, Vanadium, oder Chromsalze, wie Eisen-II-sulfat, Kobalt-II-chlorid, Nickel-II-sulfat, Kupfer-I-chlorid, Mangan-II-acetat, Vanadium-III-acetat, Mangan-II-chlorid. Bezogen auf die Gesamtmasse der bei einer Polymerisation eingesetzten olefinisch ungesättigten Monomere werden diese Übergangsmetallsalze üblicherweise in Mengen von 0,1 bis 1000 ppm eingesetzt. So kann man Kombinationen von Wasserstoffperoxid mit Eisen-II-Salzen einsetzen, wie beispielsweise 0,5 bis 30 Gew.-% Wasserstoffperoxid und 0,1 bis 500 ppm Mohrsches Salz, wobei die Anteilsbereiche jeweils bezogen auf das Gesamtgewicht der in der jeweiligen Polymerisationsstufe eingesetzten Monomere sind.

Die Initiatoren werden bevorzugt in einer Menge von 0,05 bis 20 Gew.-%, bevorzugt 0,05 bis 10, besonders bevorzugt von 0,1 bis 5 Gew.-%, bezogen auf das Gesamtgewicht der in der jeweiligen Polymerisationsstufe eingesetzten Monomere, eingesetzt.

Eine Emulsionspolymerisation verläuft in einem Reaktionsmedium, dass Wasser als kontinuierliches Medium und den mindestens einen Emulgator in Form von Micellen enthält. Die Polymerisation wird durch Zerfall des wasserlöslichen Initiators im Wasser gestartet. Die wachsende Polymerkette lagert sich in die Emulgator-Micellen ein und die weitere Polymerisation findet dann in den Micellen statt. Neben den Monomeren, dem mindestens einen wasserlöslichen Initiator und dem mindestens einen Emulgator besteht die Reaktionsmischung also hauptsächlich aus Wasser. Bevorzugt machen die genannten Komponenten, das heißt Monomere, wasserlöslicher Initiator, Emulgator und Wasser, mindestens 95 Gew.-% der Reaktionsmischung aus. Bevorzugt besteht die Reaktionsmischung aus diesen Komponenten.

Es ist also augenscheinlich möglich, dass mindestens ein Emulgator in jeder einzelnen Polymerisationsstufe zugegeben wird. Genauso möglich ist aber auch, dass nur in einer (in der ersten) oder zwei Polymerisationsstufe(n) (in der ersten und in einer weiteren Stufe) mindestens ein Emulgator zugegeben wird. Die Menge an Emulgator wird dann so gewählt, dass auch für die Stufen, in denen keine separate Zugabe erfolgt, eine ausreichende Menge Emulgator vorhanden ist.

Auch Emulgatoren sind grundsätzlich bekannt. Es können nichtionische oder ionische Emulgatoren, auch zwitterionische, gegebenenfalls auch Mischungen der vorgenannten Emulgatoren, verwendet werden.

Bevorzugte Emulgatoren sind gegebenenfalls ethoxylierte und/oder propoxylierte Alkanole mit 10 bis 40 Kohlenstoffatomen. Sie können unterschiedliche Ethoxylierungsbeziehungsweise Propoxylierungsgrade aufweisen (beispielsweise Addukte, die mit aus 5 bis 50 Moleküleinheiten bestehenden Poly(oxy)ethylen- und/oder Poly(oxy)propylenketten modifiziert sind). Es können auch sulfatierte, sulfonierte oder phosphatierte Derivate der genannten Produkte eingesetzt werden. Solche Derivate werden in der Regel in neutralisierter Form eingesetzt.

Besonders bevorzugte Emulgatoren sind neutralisierte Dialkylsulfobernsteinsäureester oder Alkyldiphenyloxiddisulfonate geeignet, beispielsweise kommerziell erhältlich als EF-800 der Fa. Cytec.

Die Emulsionspolymerisationen werden zweckmäßigerweise bei einer Temperatur von 0 bis 160°C, vorzugsweise von 15 bis 95°C, nochmals bevorzugt 60 bis 95°C durchgeführt. Dabei wird bevorzugt unter Ausschluss von Sauerstoff gearbeitet, vorzugsweise unter Inertgasatmosphäre. In der Regel wird die Polymerisation bei Normaldruck durchgeführt, jedoch ist auch die Anwendung von niedrigeren Drücken oder höheren Drücken möglich. Insbesondere wenn Polymerisationstemperaturen angewendet werden, die oberhalb des bei Normaldruck bestehenden Siedepunktes von Wasser, der eingesetzten Monomere und/oder der organischen Lösemittel liegen, werden in der Regel höhere Drücke gewählt.

Die einzelnen Polymerisationsstufen bei der Herstellung des speziellen Polymerisats können beispielsweise als so genannte "verhungernde Polymerisationen" (auch als "starve feed", "starve fed" oder "starved feed"-Polymerisationen bekannt) durchgeführt werden.

Als verhungernde Polymerisation im Sinne der vorliegenden Erfindung wird eine Emulsionspolymerisation angesehen, bei der der Gehalt an freien olefinisch ungesättigten Monomeren in der Reaktionslösung (auch genannt Reaktionsmischung) während der gesamten Reaktionsdauer minimiert wird. Das heißt, dass die Zudosierung der olefinisch ungesättigten Monomere so erfolgt, dass in der Reaktionslösung ein Anteil freier Monomere von 6,0 Gew.-%, bevorzugt 5,0 Gew.-%, besonders bevorzugt 4,0 Gew.-%, besonders vorteilhaft 3,5 Gew.-%, jeweils bezogen auf die Gesamtmenge der in der jeweiligen Polymerisationsstufe eingesetzten Monomere, während der gesamten Reaktionsdauer nicht überschritten wird. Darunter nochmals bevorzugt sind Konzentrationsbereiche der olefinisch ungesättigten Monomere von 0,01 bis 6,0 Gew.-%, bevorzugt 0,02 bis 5,0 Gew.-%, besonders bevorzugt 0,03 bis 4,0 Gew.-%, insbesondere 0,05 bis 3,5 Gew.-%. Beispielsweise kann der höchste während der Reaktion zu detektierende Gewichtsanteil bei 0,5 Gew.-%, 1,0 Gew.-%, 1,5 Gew.-%, 2,0 Gew.-%, 2,5 Gew.-% oder 3,0 Gew.-% liegen, während alle weiteren detektierten Werte dann unterhalb der hier angegebenen Werte liegen. Die Gesamtmenge (auch genannt Gesamtgewicht) der in der jeweiligen Polymerisationsstufe eingesetzten Monomere entspricht für Stufe i. augenscheinlich der Gesamtmenge der Monomerenmischung (A), für Stufe ii. der Gesamtmenge der Monomerenmischung (B) und für Stufe iii. der Gesamtmenge der Monomerenmischung (C).

Die Konzentration der Monomere in der Reaktionslösung kann dabei beispielsweise gaschromatographisch bestimmt werden. Dabei wird eine Probe der Reaktionslösung nach Probenentnahme sofort mit flüssigem Stickstoff abgekühlt und mit 4-Methoxyphenol als Inhibitor versetzt. Im nächsten Schritt wird die Probe in Tetrahydrofuran gelöst und anschließend wird zur Ausfällung des zum Zeitpunkt der Probenentnahme entstandenen Polymerisats n-Pentan hinzugegeben. Dann wird die flüssige Phase (Überstand) gaschromatographisch untersucht, wobei eine polare und eine unpolare Säule zur Bestimmung der Monomere eingesetzt werden und ein Flammenionisationsdetektor verwendet wird. Typische Parameter für die gaschromatographische Bestimmung sind die folgenden: 25 m Silica-Kapillarsäule mit 5% Phenyl- ,1% Vinyl-Methylpolysiloxan-Phase oder 30 m Silica-Kapillarsäule mit 50% Phenyl 50% Methyl-polysiloxan-Phase, Trägergas Wasserstoff, Splitinjektor 150°C, Ofentemperatur 50 bis 180°C, Flammionisationsdetektor, Detektortemperatur 275°C, interner Standard Isobutylacrylat. Die Bestimmung der Konzentration der Monomere erfolgt im Rahmen der vorliegenden Erfindung bevorzugt gaschromatographisch, insbesondere unter Einhaltung der oben genannten Parameter.

Der Anteil der freien Monomere kann auf verschiedene Art und Weisen gesteuert werden.

Eine Möglichkeit den Anteil der freien Monomere gering zu halten ist es, die Dosiergeschwindigkeit der Mischung der olefinisch ungesättigten Monomere zur eigentlichen Reaktionslösung, in der die Monomere mit dem Initiator in Kontakt kommen, sehr niedrig zu wählen. Wenn die Zudosiergeschwindigkeit so niedrig ist, dass alle Monomere praktisch sofort reagieren können, wenn sie in der Reaktionslösung sind, kann sichergestellt werden, dass der Anteil der freien Monomere minimiert wird.

Neben der Dosiergeschwindigkeit ist es wichtig, dass immer ausreichend Radikale in der Reaktionslösung vorhanden sind, so dass die zudosierten Monomere jeweils möglichst schnell zur Reaktion gebracht werden können. Auf diese Weise ist ein weiteres Kettenwachstum des Polymerisats garantiert und der Anteil an freiem Monomer wird gering gehalten.

Dazu sind die Reaktionsbedingungen bevorzugt so zu wählen, dass mit dem Initiatorzulauf schon vor Beginn der Dosierung der olefinisch ungesättigten Monomeren begonnen wird. Bevorzugt wird mit der Dosierung mindestens 5 Minuten vorher begonnen, besonders bevorzugt mindestens 10 Minuten vorher. Bevorzugt wird mindestens 10 Gew.-% des Initiators, besonders bevorzugt mindestens 20 Gew.-%, ganz besonders bevorzugt mindestens 30 Gew.-% des Initiators, jeweils bezogen auf die Gesamtmenge an Initiator, vor Beginn der Dosierung der olefinisch ungesättigten Monomeren zugegeben.

Es ist bevorzugt eine Temperatur zu wählen, die einen konstanten Zerfall des Initiators ermöglicht.

Die Initiatormenge ist ebenfalls ein wichtiger Faktor für das ausreichende Vorhandensein von Radikalen in der Reaktionslösung. Die Menge an Initiator ist so zu wählen, dass zu jeder Zeit ausreichend Radikale zur Verfügung stehen, so dass die zudosierten Monomere reagieren können. Wird die Menge an Initiator erhöht, können auch größere Mengen an Monomeren zur gleichen Zeit zur Reaktion gebracht werden.

Ein weiterer Faktor, der die Reaktionsgeschwindigkeit bestimmt, ist die Reaktivität der Monomere.

Die Kontrolle des Anteils der freien Monomere kann also durch das Zusammenspiel von Initiatormenge, Geschwindigkeit der Initiatorzugabe, Geschwindigkeit der Monomerenzugabe und durch die Auswahl der Monomere gesteuert werden. Sowohl die Verlangsamung der Dosierung, als auch die Erhöhung der Initiatormenge, sowie der frühzeitige Beginn mit der Zugabe des Initiators dienen dem Ziel, die Konzentration der freien Monomere unter den oben genannten Grenzen zu halten.

Zu jedem Zeitpunkt der Reaktion kann die Konzentration der freien Monomere gaschromatographisch, wie oben beschrieben, bestimmt werden.

Sollte bei dieser Analyse eine Konzentration an freien Monomeren bestimmt werden, die nahe an den Grenzwert für die verhungernde Polymerisation kommt, beispielsweise aufgrund geringer Anteile von hoch reaktiven olefinisch ungesättigten Monomeren, können die oben genannten Parameter zur Steuerung der Reaktion genutzt werden. Es kann in diesem Fall beispielsweise die Dosiergeschwindigkeit der Monomere verringert oder die Menge an Initiator erhöht werden.

Im Rahmen der vorliegenden Erfindung ist es bevorzugt, dass die Polymerisationsstufen ii. und iii. unter verhungernden Bedingungen durchgeführt werden. Dies hat den Vorteil, dass die Bildung neuer Partikelnuklei im Rahmen dieser beiden Polymerisationsstufen auf effektive Weise minimiert wird. Stattdessen gelingt es, die nach Stufe i. bestehenden Partikel (daher nachstehend auch Saat genannt) in Stufe ii. durch die Polymerisation der Momomermischung B weiterwachsen zu lassen (daher nachstehend auch Kern genannt). Ebenso gelingt es, die nach Stufe ii. bestehenden Partikel (nachstehend auch Polymerisat umfassend Saat und Kern genannt) in Stufe iii. durch die Polymerisation der Momomermischung C weiterwachsen zu lassen (daher nachstehend auch Schale genannt), sodass schließlich ein Polymerisat umfassend Partikel enthaltend Saat, Kern und Schale resultiert.

Bei den Mischungen (A), (B) und (C) handelt es sich um Mischungen von olefinisch ungesättigten Monomeren. Geeignete olefinisch ungesättigte Monomere können einfach oder mehrfach olefinisch ungesättigt sein.

In der Folge werden zunächst grundsätzlich einsetzbare und im Rahmen aller Mischungen (A), (B) und (C) geeignete und gegebenenfalls bevorzugte Monomere beschrieben. Auf spezifische bevorzugte Ausführungsformen der einzelnen Mischungen wird danach eingegangen.

Beispiele geeigneter einfach olefinisch ungesättigter Monomere umfassen insbesondere (meth)acrylat-basierte einfach olefinisch ungesättigte Monomere, Allylgruppen-haltige einfach olefinisch ungesättigte Monomere und weitere Vinylgruppen-haltige einfach olefinisch ungesättigte Monomere wie beispielsweise vinylaromatische Monomere. Der Begriff (meth)acryl beziehungsweise (Meth)acryat umfasst im Rahmen der vorliegenden Erfindung sowohl Methacrylate als auch Acrylate. Bevorzugt werden jedenfalls, aber nicht zwingend ausschließlich, (meth)acrylat-basierte einfach olefinisch ungesättigte Monomere eingesetzt.

Bei den (meth)acrylat-basierten, einfach olefinisch ungesättigten Monomeren kann es sich beispielsweise um (Meth)acrylsäure und Ester, Nitrile oder Amide der (Meth)acrylsäure handeln.

Bevorzugt sind Ester der (Meth)acrylsäure, mit einem Rest R, der nicht olefinisch ungesättigt ist. 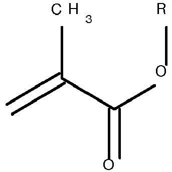 beziehungsweise

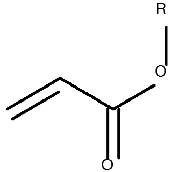

Der Rest R kann gesättigt-aliphatisch, aromatisch oder gemischt gesättigt-aliphatisch-aromatisch sein. Als aliphatisch werden im Rahmen der vorliegenden Erfindung alle organischen Reste bezeichnet, die nicht aromatisch sind. Bevorzugt ist der Rest R aliphatisch.

Der gesättigt-aliphatische Rest kann ein reiner Kohlenwasserstoffrest sein oder er kann Heteroatome aus verbrückenden Gruppen (beispielsweise Sauerstoff aus Ether- oder Estergruppen) enthalten und/oder mit funktionellen Gruppen enthaltend Heteroatome (beispielsweise Alkoholgruppen) substituiert sein. Im Rahmen der vorliegenden Erfindung wird also klar unterschieden zwischen verbrückenden Gruppen enthaltend Heteroatome und funktionellen Gruppen enthaltend Heteroatome (das heißt endständigen funktionellen Gruppen enthaltend Heteroatome).

Bevorzugt werden jedenfalls, aber nicht zwingend ausschließlich, Monomere eingesetzt, in denen der gesättigt-aliphatische Rest R ein reiner Kohlenwasserstoffrest (Alkylrest) ist, also keine Heteroatome aus verbrückenden Gruppen (beispielsweise Sauerstoff aus Ethergruppen) enthält und auch nicht mit funktionellen Gruppen (beispielsweise Alkoholgruppen) substituiert ist.

Für den Fall, dass R ein Alkylrest ist, kann es sich beispielsweise um einen linearen, verzweigten oder cyclischen Alkylrest handeln. Natürlich kann ein solcher Alkylrest auch lineare und cyclische beziehungsweise verzweigte und cyclische Strukturanteile aufweisen. Bevorzugt hat der Alkylrest 1 bis 20, besonders bevorzugt 1 bis 10 Kohlenstoffatome.

Besonders bevorzugte einfach ungesättigte Ester der (Meth)acrylsäure mit einem Alkylrest sind Methyl(meth)acrylat, Ethyl(meth)acrylat, Propyl(meth)acrylat, Isopropyl(meth)acrylat, n-Butyl(meth)acrylat, Isobutyl(meth)acrylat, tert-Butyl(meth)acrylat, Amyl(meth)acrylat, Hexyl(meth)acrylat, Ethylhexyl(meth)acrylat, 3,3,5-Trimethylhexyl(meth)acrylat, Stearyl(meth)acrylat, Lauryl(meth)acrylat, Cycloalkyl(meth)acrylate, wie Cyclopentyl(meth)acrylat, Isobornyl(meth)acrylat sowie Cyclohexyl(meth)acrylat wobei n- und tert-Butyl(meth)acrylat und Methylmethacrylat ganz besonders bevorzugt sind.

Weitere geeignete Reste R sind beispielsweise gesättigt-aliphatische Reste, die funktionelle Gruppen enthaltend Heteroatome (beispielsweise Alkoholgruppen oder Phosphorsäureestergruppen) umfassen.

Geeignete einfach ungesättigte Ester der (Meth)acrylsäure mit einem mit einer oder mehreren Hydroxylgruppen substituierten gesättigt-aliphatischen Rest sind 2-Hydroxyethyl(meth)acrylat, 2-Hydroxypropyl(meth)acrylat, 3-Hydroxypropyl (meth)acrylat, 3-Hydroxybutyl(meth)acrylat und 4-Hydroxybutyl(meth)acrylat, wobei 2-Hydroxyethyl(meth)acrylat ganz besonders bevorzugt ist.

Geeignete einfach ungesättigte Ester der (Meth)acrylsäure mit Phosphorsäureestergruppen sind beispielsweise Phosphorsäureester von Polypropyleneglycolmonomethacrylat, wie das kommerziell erhältliche Sipomer PAM 200 der Firma Rhodia.

Bei möglichen weiteren Vinylgruppen-haltigen einfach olefinisch ungesättigten Monomeren handelt es sich um von den oben beschriebenen acrylat-basierten Monomeren verschiedenen Monomere mit einem Rest R' an der Vinylgruppe, der nicht olefinisch ungesättigt ist.

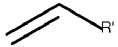

Der Rest R' kann gesättigt-aliphatisch, aromatisch oder gemischt gesättigt-aliphatisch-aromatisch sein, wobei aromatische und gemischt gesättigt-aliphatisch-aromatische Reste, in denen die aliphatischen Anteile Alkylgruppen darstellen, bevorzugt sind.

Besonders bevorzugte weitere Vinylgruppen-haltige einfach olefinisch ungesättigte Monomere sind insbesondere Vinyltoluol, alpha-Methylstyrol und insbesondere Styrol.

Möglich sind auch Vinylgruppen-haltige einfach ungesättigte Monomere, in denen der Rest R' die folgende Struktur hat: 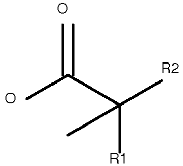 wobei die Reste R1 und R2 Alkylreste insgesamt 7 Kohlenstoffatomen enthalten. Solche Monomere sind unter dem Namen VeoVa 10 bei der Firma Momentive kommerziell erhältlich.

Weitere grundsätzlich geeignete Monomere sind olefinisch ungesättigte Monomere wie Acrylnitril, Methacrylnitril, Acrylamid, Methacrylamid, N,N-Dimethylacrylamid, Vinylacetat, Vinylpropionat, Vinylchlorid, N-Vinylpyrrolidon, N-Vinylcaprolactam, N-Vinylformamid, N-Vinylimidazol, N-Vinyl-2-Methylimidazolin sowie weitere ungesättigte alpha-beta-Carbonsäuren.

Beispiele geeigneter mehrfach olefinisch ungesättigter Monomere umfassen Ester der (Meth)acrylsäure mit einem olefinisch ungesättigten Rest R". Bei dem Rest R" kann es sich beispielsweise um einen Allylrest oder um einen (Meth)acrylsäurerest handeln. 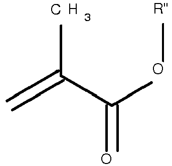 beziehungsweise

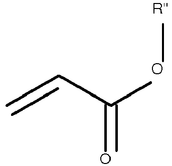

Bevorzugte mehrfach olefinisch ungesättigte Monomere umfassen Ethylenglykoldi(meth)acrylat, 1,2-Propylenglykoldi(meth)acrylat, 2,2-Propylenglykoldi(meth)acrylat, Butandiol-1,4-di(meth)acrylat, Neopentylglykoldi-(meth)acrylat, 3-Methylpentandioldi(meth)acrylat, Diethylenglykoldi(meth)acrylat, Triethylenglykoldi(meth)acrylat, Tetraethylenglykoldi(meth)acrylat, Dipropylenglykol-di(meth)acrylat, Tripropylenglykoldi(meth)acrylat, Hexandioldi(meth)acrylat und Allyl(meth)acrylat.

Darüber hinaus umfassen bevorzugte mehrfach olefinisch ungesättigte Verbindungen Acrylsäure- und Methacrylsäureester von Alkoholen mit mehr als zwei OH-Gruppen, wie zum Beispiel Trimethylolpropantri(meth)acrylat oder Glycerintri(meth)acrylat, aber auch Trimethylolpropandi(meth)acrylatmonoallylether, Trimethylolpropan(meth)acrylat-diallylether, Pentaerythrittri(meth)acrylatmonoallylether, Pentaerythritdi(meth)acrylat-diallylether, Pentaerythrit(meth)acrylattriallylether, Triallylsaccharose, und Pentaallylsaccharose.

Möglich sind auch Allylether von mono- oder mehrwertigen Alkoholen, wie beispielsweise Trimethylolpropanmonoallylether.

Sofern eingesetzt, was bevorzugt ist, sind als mehrfach olefinisch ungesättigte Monomere Hexandioldiacrylat und/oder Allyl(meth)acrylat bevorzugt.

Hinsichtlich der in den einzelnen Polymerisationsstufen eingesetzten Monomermischungen (A), (B) und (C) sind spezielle, in der Folge dargelegte Bedingungen einzuhalten.

Zunächst ist festzuhalten, dass die Mischungen (A), (B) und (C) jedenfalls unterschiedliche voneinander sind. Sie enthalten also jeweils unterschiedliche Monomere und/oder unterschiedliche Anteile mindestens eines bestimmten Monomers.

Die Mischung (A) enthält bevorzugt, aber nicht zwingend mindestens 50 Gew.-%, nochmal bevorzugt mindestens 55 Gew.-%, von olefinisch ungesättigten Monomeren mit einer Wasserlöslichkeit von kleiner 0,5 g/l bei 25°C. Ein entsprechendes bevorzugtes Monomer ist Styrol.

Die Löslichkeit der Monomere in Wasser kann über eine Gleichgewichtseinstellung mit dem Gasraum oberhalb der wässrigen Phase bestimmt werden (analog der Literatur X.-S. Chai, Q.X. Hou, F.J. Schork, Journal of Applied Polymer Science Vol. 99, 1296-1301 (2006)).

Dazu wird in einem 20 ml Gasraumprobenröhrchen zu einem definierten Volumen an Wasser, bevorzugt 2 ml, eine so große Masse des jeweiligen Monomers gegeben, dass sich diese Masse jedenfalls nicht vollständig in dem gewählten Volumen Wasser lösen kann. Zusätzlich wird ein Emulgator (10 ppm, bezogen auf Gesamtmasse der Probenmischung) hinzugegeben. Um die Gleichgewichtskonzentration zu erhalten, wird die Mischung ständig geschüttelt. Die überstehende Gasphase wird gegen Inertgas ausgetauscht, so dass sich wieder ein Gleichgewicht einstellt. In der entnommenen Gasphase wird jeweils der Anteil der zu detektieren Substanz gemessen (bevorzugt mittels Gaschromatographie). Die Gleichgewichtskonzentration in Wasser kann bestimmt werden, indem der Anteil des Monomers in der Gasphase graphisch ausgewertet wird. Die Steigung der Kurve ändert sich von einem nahezu konstanten Wert (S1) zu einer signifikant negativen Steigung (S2) sobald der überschüssige Monomeranteil aus der Mischung entfernt wurde. Die Gleichgewichtskonzentration ist dabei an dem Schnittpunkt der Geraden mit der Steigung S1 und der Geraden mit der Steigung S2 erreicht. Die beschriebene Bestimmung wird bei 25°C durchgeführt.

Bevorzugt enthält die Monomerenmischung (A) keine hydroxyfunktionellen Monomere. Ebenfalls bevorzugt enthält die Monomerenmischung (A) keine säurefunktionellen Monomere.

Ganz besonders bevorzugt enthält die Monomerenmischung (A) gar keine Monomere mit funktionellen Gruppen enthaltend Heteroatome. Dies bedeutet, dass Heteroatome, sofern vorhanden, lediglich in Form von verbrückenden Gruppen vorhanden sind. Dies ist beispielsweise der Fall in den oben beschriebenen (meth)acrylat-basierten, einfach olefinisch ungesättigten Monomeren, die als Rest R einen Alkylrest besitzen.

Bevorzugt enthält die Monomerenmischung (A) ausschließlich einfach olefinisch ungesättigte Monomere.

In einer besonders bevorzugten Ausführungsform enthält die Monomermischung (A) mindestens einen einfach ungesättigten Ester der (Meth)acrylsäure mit einem Alkylrest und mindestens ein Vinylgruppen-haltiges einfach olefinisch ungesättigtes Monomer mit einem an der Vinylgruppe angeordneten Rest, der aromatisch ist oder der gemischt gesättigt-aliphatisch-aromatisch ist, wobei dann die aliphatischen Anteile des Rests Alkylgruppen sind.

Die in der Mischung (A) enthaltenen Monomere werden so ausgewählt, dass ein daraus hergestelltes Polymer eine Glasübergangstemperatur von 10 bis 65°C, bevorzugt von 30 bis 50°C besitzt.

Die Glasübergangstemperatur T_{g} wird im Rahmen der Erfindung experimentell in Anlehnung an DIN 51005 "Thermische Analyse (TA) - Begriffe" und DIN 53765 "Thermische Analyse - Dynamische Differenzkalorimetrie (DDK)" bestimmt. Dabei wird eine Probe von 15 mg in ein Probenpfännchen eingewogen und in ein DSC-Gerät eingeführt. Es wird auf die Starttemperatur abgekühlt und im Anschluss daran ein 1. und 2. Messlauf bei einer Inertgasspülung (N₂) von 50 ml/min mit einer Heizrate von 10 K/min durchgeführt, wobei zwischen den Messläufen wieder auf die Starttemperatur abgekühlt wird. Die Messung erfolgt üblicherweise im Temperaturbereich von etwa 50 °C niedriger als die erwartete Glasübergangstemperatur bis etwa 50 °C höher als die Glasübergangstemperatur. Als Glasübergangstemperatur wird im Rahmen der vorliegenden Erfindung in Anlehnung an DIN 53765, Punkt 8.1, diejenige Temperatur im 2. Messlauf bezeichnet, bei der die Hälfte der Änderung der spezifischen Wärmekapazität (0,5 Delta cₚ) erreicht ist. Sie wird aus dem DDK-Diagramm (Auftragung des Wärmestroms gegen die Temperatur) ermittelt. Es handelt sich um die Temperatur, die dem Schnittpunkt der Mittellinie zwischen den extrapolierten Basislinien vor und nach dem Glasübergang mit der Messkurve entspricht.

Wird im Rahmen der vorliegenden Erfindung auf eine offizielle Norm ohne Hinweis auf den offiziellen Gültigkeitszeitraum verwiesen, ist hiermit selbstverständlich die zum Anmeldetag geltende Fassung der Norm oder, falls zu diesem Zeitpunkt keine geltende Fassung besteht, die letzte geltende Fassung gemeint.

Für eine zielführende Abschätzung der bei der Messung zu erwartenden Glasübergangstemperatur kann die bekannte Fox-Gleichung herangezogen werden. Da die Fox-Gleichung eine gute Näherung darstellt, die auf den Glasübergangstemperaturen der Homopolymere und deren Gewichtsteilen ohne Einbeziehung des Molekulargewichts basiert, kann sie als zielführendes Hilfsmittel für den Fachmann bei der Synthese eingesetzt werden, sodass eine gewünschte Glasübergangstemperatur über wenige zielgerichtete Versuche eingestellt werden kann.

Das in Stufe i. durch die Emulsionspolymerisation der Monomerenmischung (A) hergestellte Polymerisat (auch genannt Polymer) wird auch als Saat bezeichnet.

Die Saat besitzt bevorzugt eine Teilchengröße von 20 bis 125 nm (Messmethode siehe Beispielteil).

Die Mischung (B) enthält bevorzugt mindestens ein mehrfach olefinisch ungesättigtes Monomer, besonders bevorzugt mindestens ein zweifach olefinisch ungesättigtes Monomer. Ein entsprechendes bevorzugtes Monomer ist Hexandioldiacrylat.

Bevorzugt enthält die Monomerenmischung (B) keine hydroxyfunktionellen Monomere. Ebenfalls bevorzugt enthält die Monomerenmischung (B) keine säurefunktionellen Monomere.

Ganz besonders bevorzugt enthält die Monomerenmischung (B) gar keine Monomere mit funktionellen Gruppen enthaltend Heteroatome. Dies bedeutet, dass Heteroatome, sofern vorhanden, lediglich in Form von verbrückenden Gruppen vorhanden sind. Dies ist beispielsweise der Fall in den oben beschriebenen (meth)acrylat-basierten, einfach olefinisch ungesättigten Monomeren, die als Rest R einen Alkylrest besitzen.

In einer besonders bevorzugten Ausführungsform enthält die Monomermischung (B) neben dem mindestens einen mehrfach olefinisch ungesättigten Monomer jedenfalls noch folgende Monomere. Zum einen mindestens einen einfach ungesättigten Ester der (Meth)acrylsäure mit einem Alkylrest und zum anderen mindestens ein Vinylgruppen-haltiges einfach olefinisch ungesättigtes Monomer mit einem an der Vinylgruppe angeordneten Rest, der aromatisch ist oder der gemischt gesättigt-aliphatisch-aromatisch ist, wobei dann die aliphatischen Anteile des Rests Alkylgruppen sind.

Der Anteil von mehrfach ungesättigten Monomeren beträgt bevorzugt von 0,05 bis 3 mol.-%, bezogen auf die molare Gesamtmenge von Monomeren der Monomerenmischung (B).

Die in der Mischung (B) enthaltenen Monomere werden so ausgewählt, dass ein daraus hergestelltes Polymer eine Glasübergangstemperatur von -35 bis 15°C, bevorzugt von -25 bis +7°C besitzt.

Das in Stufe ii. durch die Emulsionspolymerisation der Monomerenmischung (B) in Anwesenheit der Saat hergestellte Polymerisat wird auch als Kern bezeichnet. Nach der Stufe ii. resultiert also ein Polymerisat, welches Saat und Kern umfasst.

Das Polymerisat, welches nach der Stufe ii. erhalten wird, besitzt bevorzugt eine Teilchengröße von 80 bis 280 nm, bevorzugt 120 bis 250 nm.

Die in der Mischung (C) enthaltenen Monomere werden so ausgewählt, dass ein daraus hergestelltes Polymer eine Glasübergangstemperatur von -50 bis 15°C, bevorzugt von -20 bis +12°C besitzt.

Die olefinisch ungesättigten Monomere der Mischung (C) werden dabei bevorzugt so ausgewählt, dass das resultierende Polymerisat, umfassend Saat, Kern und Schale, eine Säurezahl von 10 bis 25 hat.

Demzufolge enthält die Mischung (C) bevorzugt mindestens eine alpha-beta ungesättigte Carbonsäure, insbesondere bevorzugt (Meth)acrylsäure.

Die olefinisch ungesättigten Monomere der Mischung (C) werden zudem bevorzugt so ausgewählt, dass das resultierende Polymerisat, umfassend Saat, Kern und Schale, eine OH-Zahl von 0 bis 30, bevorzugt 10 bis 25 hat.

Bei allen vorstehend genannten Säurezahlen und OH-Zahlen im Zusammenhang mit der Dispersion (wD) handelt es sich um auf Basis der insgesamt eingesetzten Monomerenmischungen berechnete Werte.

In einer besonders bevorzugten Ausführungsform enthält die Monomermischung (C) mindestens eine alpha-beta ungesättigte Carbonsäure und mindestens einen einfach ungesättigten Ester der (Meth)acrylsäure mit einem mit einer Hydroxylgruppe substituierten Alkylrest.

In einer ganz besonders bevorzugten Ausführungsform enthält die Monomermischung (C) mindestens eine alpha-beta ungesättigte Carbonsäure, mindestens einen einfach ungesättigten Ester der (Meth)acrylsäure mit einem mit einer Hydroxylgruppe substituierten Alkylrest und mindestens einen einfach ungesättigten Ester der (Meth)acrylsäure mit einem Alkylrest.

Sofern im Rahmen der vorliegenden Erfindung von einen Alkylrest ohne weitere Spezifizierung gesprochen wird, ist hierunter immer ein reiner Alkylrest ohne funktionelle Gruppen und Heteroatome zu verstehen.

Das in Stufe iii. durch die Emulsionspolymerisation der Monomerenmischung (C) in Anwesenheit von Saat und Kern hergestellte Polymerisat wird auch als Schale bezeichnet. Nach der Stufe iii. resultiert also ein Polymerisat, welches Saat, Kern und Schale umfasst.

Das Polymerisat besitzt nach seiner Herstellung eine Teilchengröße von 100 bis 500 nm, bevorzugt 125 bis 400 nm, ganz besonders bevorzugt von 130 bis 300 nm.

Bevorzugt werden die Anteile der Monomerenmischungen wie folgt aufeinander abgestimmt. Der Anteil der Mischung (A) beträgt von 0,1 bis 10 Gew.-%, der Anteil der Mischung (B) von 60 bis 80 Gew.-% und der Anteil der Mischung (C) von 10 bis 30 Gew.-%, jeweils bezogen auf die Summe der Einzelmengen der Mischungen (A), (B) und (C).

Die wässrige Dispersion (wD) besitzt bevorzugt einen pH-Wert von 5,0 bis 9,0, nochmals bevorzugt 7,0 bis 8,5, ganz besonders bevorzugt 7,5 bis 8,5. Der pH-Wert kann bereits während der Herstellung, beispielsweise durch den Einsatz von wie weiter unten genannten Basen, konstant gehalten werden oder auch nach der Herstellung des Polymerisats gezielt eingestellt werden.

In ganz besonders bevorzugten Ausführungsformen gilt, dass die wässrige Dispersion (wD) einen pH-Wert von 5,0 bis 9,0 aufweist und das darin enthaltene mindestens eine Polymerisat eine Teilchengröße von 100 bis 500 nm aufweist. Nochmals bevorzugtere Bereichskombinationen sind: pH-Wert von 7,0 bis 8,5 und eine Teilchengröße von 125 bis 400 nm, nochmals bevorzugt pH-Wert von 7,5 bis 8,5 und eine Teilchengröße von 130 bis 300 nm.

Bevorzugt werden die beschriebenen Stufen i. bis iii. ohne Zusatz von zur Einstellung des pH-Werts bekannten Säuren oder Basen durchgeführt. Werden bei der Herstellung des Polymerisats dann beispielsweise carboxyfunktionelle Monomere eingesetzt, was im Rahmen der Stufe iii. bevorzugt ist, so kann der pH-Wert der Dispersion nach Abschluss der Stufe iii. bei kleiner 7 liegen. Demzufolge ist eine Zugabe von Base notwendig, um den pH-Wert auf einen höheren Wert, wie beispielsweise einen Wert in den bevorzugten Bereichen, einzustellen.

Aus oben Gesagtem folgt, dass der pH-Wert bevorzugt nach der Stufe iii. entsprechend eingestellt wird beziehungsweise eingestellt werden muss, insbesondere durch Zugabe einer Base wie einer organischen, stickstoffhaltigen Base wie einem Amin wie Ammoniak, Trimethylamin, Triethylamin, Tributylamine, Dimethylanilin, Triphenylamin, N,N-Dimethylethanolamin, Methyldiethanolamin oder Triethanolamin, sowie durch Zugabe von Natriumhydrogencarbonat oder Boraten und auch Mischungen der vorgenannten Substanzen. Dies schließt aber nicht aus, dass der pH-Wert auch vor, während oder nach den Emulsionspolymerisationen oder auch zwischen den einzelnen Emulsionspolymerisationen eingestellt werden kann. Ebenfalls möglich ist, dass durch die Wahl der Monomere die Einstellung des pH-Werts auf einen gewünschten Wert gar nicht notwendig ist.

Dabei wird die Messung des pH-Wertes bevorzugt mit einem pH-Meter (beispielsweise Mettler-Toledo S20 SevenEasy pH Meter) mit einer kombinierten pH-Elektrode (beispielsweise Mettler-Toledo InLab® Routine) durchgeführt.

Der Festkörper der Dispersion (wD) beträgt bevorzugt von 15 bis 40 % nochmals bevorzugt 20 bis 30 %.

Die Dispersion (wD) ist wässrig (zur grundsätzlichen Definition siehe oben). Für die wässrige Dispersion (wD) gilt bevorzugt, dass sie einen Anteil von 55 bis 75 Gew.-%, insbesondere bevorzugt 60 bis 70 Gew.-%, jeweils bezogen auf das Gesamtgewicht der Dispersion, Wasser enthält.

Nochmals bevorzugt ist, dass die prozentuale Summe aus dem Festkörper der Dispersion (wD) und dem Anteil von Wasser an der Dispersion (wD) bei mindestens 80 Gew.-%, bevorzugt bei mindestens 90 Gew.-% liegt. Darunter bevorzugt sind Bereiche von 80 bis 99 Gew.-%, insbesondere 90 bis 97,5 Gew.-%. In dieser Angabe wird der Festkörper, der traditionell nur die Einheit "%" besitzt, in "Gew.-%" angegeben. Da der Festkörper letztlich auch eine prozentuale Gewichtsangabe darstellt, ist diese Form der Darstellung gerechtfertigt. Hat also beispielsweise eine Dispersion einen Festkörper von 25 % und einen Wassergehalt von 70 Gew.-%, so beträgt die oben definierte prozentuale Summe aus dem Festkörper und dem Anteil von Wasser 95 Gew.-%.

Demzufolge besteht die Dispersion weitestgehend aus Wasser und dem speziellen Polymerisat und enthält umweltbelastende Komponenten wie insbesondere organische Lösemittel nicht oder nur in geringen Anteilen.

Der Anteil der mindestens einen Dispersionen (wD), bezogen auf das Gesamtgewicht des erfindungsgemäßen wässrigen Basislacks, beträgt bevorzugt 1,0 bis 60 Gew.-%, besonders bevorzugt 2,5 bis 50 Gew.-% und ganz besonders bevorzugt 5 bis 40 Gew.-%.

Der Anteil der aus den Dispersionen (wD) stammenden Polymerisate beträgt, bezogen auf das Gesamtgewicht des erfindungsgemäßen wässrigen Basislacks, vorzugsweise von 0,3 bis 17,0 Gew.-%, bevorzugt 0,7 bis 14,0 Gew.-%, besonders bevorzugt 1,4 bis 11,0 Gew.-%.

Im Rahmen der vorliegenden Erfindung ist hinsichtlich der im Basislack einzusetzenden Komponenten, beispielsweise einer Dispersion (PD), einer Dispersion (wD) oder auch eines Melaminharzes, folgendes Prinzip zu beachten (hier beschrieben für eine Dispersion (wD). Im Falle einer möglichen Spezifizierung auf Basislacke enthaltend bevorzugte Dispersionen (wD) in einem speziellen Anteilsbereich gilt folgendes. Die Dispersionen (wD), die nicht in die bevorzugte Gruppe fallen, können selbstverständlich weiterhin im Basislack enthalten sein. Der spezielle Anteilsbereich gilt dann nur für die bevorzugte Gruppe von Dispersionen (wD). Bevorzugt ist allerdings, dass für den Gesamtanteil von Dispersionen (wD) bestehend aus Dispersionen aus der bevorzugten Gruppe und Dispersionen, die nicht in die bevorzugte Gruppe fallen, ebenfalls der spezielle Anteilsbereich gilt.

Würde also eine Beschränkung auf einen Anteilsbereich von 2,5 bis 50 Gew.-% und eine bevorzugte Gruppe von Dispersionen (wD) durchgeführt werden, so gilt dieser Anteilsbereich augenscheinlich zunächst nur für die bevorzugte Gruppe an Dispersionen (wD). Bevorzugt wäre dann aber, dass insgesamt von allen ursprünglich umfassten Dispersionen bestehend aus Dispersionen aus der bevorzugten Gruppe und Dispersionen, die nicht in die bevorzugte Gruppe fallen, ebenfalls von 2,5 bis 50 Gew.-% enthalten sind. Werden also 35 Gew.-% von Dispersionen (wD) der bevorzugten Gruppe eingesetzt, so können höchstens 15 Gew.-% der Dispersionen der nicht bevorzugten Gruppe eingesetzt werden.

Der erfindungsgemäße Basislack enthält bevorzugt mindestens ein Pigment. Hierunter zu verstehen sind an sich bekannte farbgebende und/oder optisch effektgebende Pigmente.

Solche Farbpigmente und Effektpigmente sind dem Fachmann werden beispielsweise in Römpp-Lexikon Lacke und Druckfarben, Georg Thieme Verlag, Stuttgart, New York, 1998, Seite 176 und 451, beschrieben. Die Begriffe farbgebendes Pigment und Farbpigment sind ebenso wie die Begriffe optisch effektgebendes Pigment und Effektpigment austauschbar.

Bevorzugte Effektpigmente sind beispielsweise plättchenförmige Metalleffektpigmente wie blättchenförmige Aluminiumpigmente, Goldbronzen, feuergefärbte Bronzen und/oder Eisenoxid-Aluminiumpigmente, Perglanzpigmente wie Fischsilber, basisches Bleicarbonat, Bismutoxidchlorid und/oder Metalloxid-Glimmer-Pigmente und/oder sonstige Effektpigmente wie blättchenförmiges Graphit, blättchenförmiges Eisenoxid, Mehrschicht-Effekt-Pigmente aus PVD-Filmen und/oder Liquid Crystal Polymer-Pigmente. Besonders bevorzugt sind plättchenförmige Metalleffektpigmente, insbesondere blättchenförmige Aluminiumpigmente.

Als typische Farbpigmente zu nennen sind insbesondere anorganische farbgebende Pigmente wie Weißpigmente wie Titandioxid, Zink-Weiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Der Anteil der Pigmente liegt vorzugsweise im Bereich von 1,0 bis 40,0 Gew.-%, bevorzugt 2,0 bis 35,0 Gew.-%, besonders bevorzugt 5,0 bis 30,0 Gew.-%, jeweils bezogen auf das Gesamtgewicht des wässrigen Basislacks.

Der wässrige Basislack enthält bevorzugt noch mindestens ein von den in den Dispersionen (wD) und (PD) enthaltenen Polymeren verschiedenes Polymer als Bindemittel, insbesondere mindestens ein Polymer ausgewählt aus der Gruppe bestehend aus Polyurethanen, Polyestern, Polyacrylaten und/oder Mischpolymerisaten der genannten Polymere, insbesondere Polyester und/oder Polyurethan-Polyacrylate. Bevorzugte Polyester werden beispielsweise in DE 4009858 A1 in Spalte 6, Zeile 53 bis Spalte 7, Zeile 61 und Spalte 10, Zeile 24 bis Spalte 13, Zeile 3 oder WO 2014/033135 A2, Seite 2, Zeile 24 bis Seite 7, Zeile 10 sowie Seite 28, Zeile 13 bis Seite 29, Zeile 13 beschrieben. Bevorzugte Polyurethan-Polyacrylat-Mischpolymerisate (acrylierte Polyurethane) und deren Herstellung werden beispielsweise in WO 91/15528 A1, Seite 3, Zeile 21 bis Seite 20, Zeile 33 sowie in DE 4437535 A1, Seite 2, Zeile 27 bis Seite 6, Zeile 22 beschrieben. Die beschriebenen Polymere als Bindemittel sind bevorzugt hydroxyfunktionell und besitzen insbesondere bevorzugt eine OH-Zahl im Bereich von 15 bis 200 mg KOH/g, besonders bevorzugt von 20 bis 150 mg KOH/g. Besonders bevorzugt enthalten die Basislacke mindestens ein hydroxyfunktionelles Polyurethan-Polyacrylat-Mischpolymerisat, nochmals bevorzugt mindestens ein hydroxyfunktionelles Polyurethan-Polyacrylat-Mischpolymerisat sowie mindestens einen hydroxyfunktionellen Polyester.

Der Anteil der weiteren Polymere als Bindemittel kann breit variieren und liegt vorzugsweise im Bereich von 1,0 bis 25,0 Gew.-%, bevorzugt 3,0 bis 20,0 Gew.-%, besonders bevorzugt 5,0 bis 15,0 Gew.-%, jeweils bezogen auf das Gesamtgewicht des Basislacks.

Zudem kann der erfindungsgemäße Basislack mindestens ein an sich bekanntes typisches Vernetzungsmittel enthalten. Sofern er ein Vernetzungsmittel enthält, handelt es sich bevorzugt um mindestens ein Aminoplastharz und/oder mindestens ein blockiertes Polyisocyanat, bevorzugt ein Aminoplastharz. Unter den Aminoplastharzen sind insbesondere Melaminharze bevorzugt.

Sofern der Basislack Vernetzungsmittel enthält, liegt der Anteil dieser Vernetzungsmittel, insbesondere Aminoplastharze und/oder blockierte Polyisocyanate, besonders bevorzugt Aminoplastharze, darunter bevorzugt Melaminharze, vorzugsweise im Bereich von 0,5 bis 20,0 Gew.-%, bevorzugt 1,0 bis 15,0 Gew.-%, besonders bevorzugt 1,5 bis 10,0 Gew.-%, jeweils bezogen auf das Gesamtgewicht des Basislacks.

Der Basislack kann zudem mindestens einen Verdicker enthalten. Als Verdicker eignen sich anorganische Verdicker aus der Gruppe der Schichtsilikate wie Lithium-Aluminium-Magnesium Silikate. Ebenfalls enthalten kann der Basislack mindestens einen organischen Verdicker, beispielsweise einen (Meth)acrylsäure-(Meth)acrylatCopolymerisat-Verdicker oder einen Polyurethan-Verdicker. Eingesetzt werden können dabei beispielsweise an sich bekannte organische Assoziativverdicker, wie beispielsweise die bekannten Polyurethan-Assoziativverdicker. Als Assoziativverdicker werden bekanntermaßen wasserlösliche Polymere bezeichnet, welche an den Kettenenden oder in Seitenketten stark hydrophobe Gruppen aufweisen und/oder deren hydrophile Ketten im Inneren hydrophobe Blöcke oder Bündelungen enthalten. Dadurch besitzen diese Polymere einen Tensid-Charakter und sind in wässriger Phase zur Bildung von Mizellen fähig. Ähnlich wie bei den Tensiden verbleiben die hydrophilen Bereiche in der wässrigen Phase, während sich die hydrophoben Bereiche in die Teilchen von Polymerdispersionen einlagern, auf der Oberfläche von weiteren festen Teilchen wie Pigmenten und/oder Füllstoffen adsorbieren und/oder Mizellen in der wässrigen Phase ausbilden. Letztlich wird eine verdickende Wirkung erzielt, ohne dass es zu einem erhöhten Absetzverhalten kommt.

Die genannten Verdicker sind kommerziell erhältlich. Der Anteil der Verdicker liegt vorzugsweise im Bereich von 0,1 bis 5,0 Gew.-%, bevorzugt 0,2 bis 3,0 Gew.-%, besonders bevorzugt 0,3 bis 2,0 Gew.-%, jeweils bezogen auf das Gesamtgewicht des Basislacks.

Darüber hinaus kann der Basislack noch mindestens einen weiteren Zusatzstoff enthalten. Beispiele für derartige Zusatzstoffe sind rückstandsfrei oder im Wesentlichen rückstandsfrei thermisch zersetzbare Salze, von den bereits genannten Polymeren als Bindemittel verschiedene physikalisch, thermisch und/oder mit aktinischer Strahlung härtbare Polymere als Bindemittel, weitere Vernetzungsmittel, organische Lösemittel, Reaktivverdünner, transparente Pigmente, Füllstoffe, molekulardispers lösliche Farbstoffe, Nanopartikel, Lichtschutzmittel, Antioxidantien, Entlüftungsmittel, Emulgatoren, Slipadditive, Polymerisationsinhibitoren, Initiatoren für radikalische Polymerisationen, Haftvermittler, Verlaufsmittel, filmbildende Hilfsmittel, Sag-Control-Agents (SCAs), Flammschutzmittel, Korrosionsinhibitoren, Wachse, Sikkative, Biozide und Mattierungsmittel. Solche Zusatzstoffe werden in den üblichen und bekannten Mengen eingesetzt.

Der Festkörpergehalt des Basislacks kann je nach den Erfordernissen des Einzelfalls variieren. In erster Linie richtet sich der Festkörpergehalt nach der für die Applikation, insbesondere Spritzapplikation, erforderlichen Viskosität. Es ist von besonderem Vorteil, dass der erfindungsgemäß einzusetzende Basislack bei vergleichsweise hohen Festkörpern trotzdem eine Viskosität aufweisen kann, die eine angemessene Applikation zulässt.

Vorzugsweise liegt der Festkörpergehalt des Basislacks bei mindestens 16,5 %, bevorzugt mindestens 18,0 %, nochmals bevorzugt mindestens 20,0 %.

Bei den genannten Bedingungen, das heißt bei den genannten Festkörpergehalten, weisen bevorzugte Basislacke bei 23°C und einer Scherbelastung von 1000 1/s eine Viskosität von 40 bis 150 mPa·s, insbesondere 70 bis 120 mPa·s auf (genaueres zur Messmethode siehe Beispielteil). Im Rahmen der vorliegenden Erfindung wird eine Viskosität in diesem Bereich bei der angegebenen Scherbelastung als Spritzviskosität (Verarbeitungsviskosität) bezeichnet. Bekanntermaßen werden Beschichtungsmittel bei Spritzviskosität appliziert, das heißt sie besitzen unter den dann vorliegenden Bedingungen (hohe Scherbelastung) eine Viskosität, die insbesondere nicht zu hoch ist, um eine effektive Applikation zu ermöglichen. Dies bedeutet, dass die Einstellung der Spritzviskosität wichtig ist, um einen Lack überhaupt durch Spritzverfahren applizieren zu können und um zu gewährleisten, dass sich auf dem zu beschichtenden Substrat ein vollständiger, gleichmäßiger Beschichtungsfilm ausbilden kann.

Der erfindungsgemäß einzusetzende Basislack ist wässrig (zur grundsätzlichen Definition von "wässrig" siehe oben).

Der Anteil von Wasser am Basislack beträgt bevorzugt von 35 bis 70 Gew.-%, nochmals bevorzugt 45 bis 65 Gew.-%, jeweils bezogen auf das Gesamtgewicht des Basislacks. Nochmals bevorzugt ist, dass die prozentuale Summe aus dem Festkörper des Basislacks und dem Anteil von Wasser am Basislack bei mindestens 70 Gew.-%, bevorzugt bei mindestens 75 Gew.-% liegt. Darunter bevorzugt sind Bereiche von 75 bis 95 Gew.-%, insbesondere 80 bis 90 Gew.-%.

Dies bedeutet insbesondere, dass bevorzugte Basislacke grundsätzlich umweltbelastende Komponenten wie insbesondere organische Lösemittel im Verhältnis zum Festkörper des Basislacks zu nur geringen Anteilen enthalten. Bevorzugt ist das Verhältnis aus dem flüchtigen organischen Anteil des Basislacks (in Gew.-%) und dem Festkörper des Basislacks (analog obiger Darstellung hier in Gew.-%) von 0,05 bis 0,7, nochmals bevorzugt von 0,15 bis 0,6. Als flüchtiger organischer Anteil gilt im Rahmen der vorliegenden Erfindung der Anteil des Basislacks, der weder zum Anteil Wasser noch zum Festkörper gerechnet wird.

Ein weiterer Vorteil des Basislacks liegt darin, dass er ohne den Einsatz von umweit- und gesundheitsschädlichen organischen Lösemitteln wie N-Methyl-2-pyrrolidon, Dimethylformamid, Dioxan, Tetrahydrofuran und N-Ethyl-2-pyrrolidon hergestellt werden kann. Demzufolge enthält der Basislack bevorzugt weniger als 10 Gew.-%, bevorzugt weniger als 5 Gew.-%, nochmals bevorzugt weniger als 2,5 Gew.-% an organischen Lösemitteln ausgewählt aus der Gruppe bestehend aus N-Methyl-2-pyrrolidon, Dimethylformamid, Dioxan, Tetrahydrofuran und N-Ethyl-2-pyrrolidon. Bevorzugt ist der Basislack vollständig frei von diesen organischen Lösemitteln.

Das Verhältnis des Anteil der mindestens einen Dispersionen (PD) und des Anteils der mindestens einen Dispersion (wD), jeweils bezogen auf das Gesamtgewicht des erfindungsgemäßen wässrigen Basislacks, kann je nach den Anforderungen des Einzelfalls angepasst werden und in einem weiten Bereich variieren. Selbiges gilt somit für das Verhältnis der Anteile der aus den Dispersionen (PD) und (wD) stammenden Polymeren (jeweils bestimmt über den Festkörper).

Die Herstellung der Basislacke kann unter Einsatz der für die Herstellung von Basislacken üblichen und bekannten Mischverfahren und Mischaggregaten erfolgen.

Weiterhin Gegenstand der vorliegenden Erfindung ist ein Verfahren zur Herstellung einer Mehrschichtlackierung, bei dem mindestens eine Basislackschicht unter Einsatz mindestens eines erfindungsgemäßen wässrigen Basislacks hergestellt wird.

Alle vorstehend genannten Ausführungen hinsichtlich des erfindungsgemäßen Basislacks gelten auch für das erfindungsgemäße Verfahren. Dies gilt insbesondere auch für alle bevorzugten, besonders bevorzugten und ganz besonders bevorzugten Merkmale. Insbesondere bevorzugt enthält der Basislack ein Pigment, ist also pigmentiert.

Demzufolge Gegenstand der vorliegenden Erfindung ist ein Verfahren, bei dem
(1) ein wässriger Basislack auf ein Substrat aufgebracht wird,
(2) aus dem in Stufe (1) aufgebrachten Lack ein Polymerfilm gebildet wird,
(3) auf die so erhaltene Basislackschicht ein Klarlack aufgebracht wird und anschließend
(4) die Basislackschicht zusammen mit der Klarlackschicht gehärtet wird,
welches dadurch gekennzeichnet ist, dass der in Stufe (1) eingesetzte wässrige Basislack ein erfindungsgemäßer Basislack ist.

Das besagte Verfahren wird bevorzugt zur Herstellung von farbgebenden Mehrschichtlackierungen, effektgebenden Lackierungen und farb- und effektgebenden Lackierungen eingesetzt.

Die Applikation des erfindungsgemäß einzusetzenden wässrigen Basislacks erfolgt üblicherweise auf mit Füller oder Grundierfüller vorbehandelte Metall- oder Kunststoffsubstrate. Gegebenenfalls kann der besagte Basislack auch direkt auf dem Kunststoffuntergrund aufgebracht werden.

Soll ein Metallsubstrat beschichtet werden, so wird dieses vor der Applikation des Füllers oder Grundierfüllers bevorzugt noch mit einer Elektrotauchlackierung beschichtet.

Wird ein Kunststoffsubstrat beschichtet, so wird dieses vor der Applikation des Füllers oder Grundierfüllers bevorzugt noch oberflächenaktivierend vorbehandelt. Die hierzu am häufigsten angewendeten Verfahren sind das Beflammen, die Plasmabehandlung und die Corona-Entladung. Bevorzugt wird das Beflammen eingesetzt.

Die Applikation des erfindungsgemäßen wässrigen Basislacks auf ein Metallsubstrat kann in den im Rahmen der Automobilindustrie üblichen Schichtdicken im Bereich von beispielsweise 5 bis 100 Mikrometer, bevorzugt 5 bis 60 Mikrometer erfolgen. Dabei werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heissspritzapplikation wie zum Beispiel Hot-Air-Heissspritzen.

Nach der Applikation des wässrigen Basislacks kann dieser nach bekannten Methoden getrocknet werden. Beispielsweise können (1-Komponenten)-Basislacke, welche bevorzugt sind, bei Raumtemperatur für 1 bis 60 Minuten abgelüftet werden und darauf folgend bevorzugt bei gegebenenfalls leicht erhöhten Temperaturen von 30 bis 90°C getrocknet werden. Unter Ablüften und Trocknung ist im Rahmen der vorliegenden Erfindung ein Abdunsten von organischen Lösemitteln und/oder Wasser zu verstehen, wodurch der Lack trockener, aber noch nicht gehärtet wird beziehungsweise noch kein vollständig vernetzter Lackfilm gebildet wird.

Dann wird ein handelsüblicher Klarlack nach ebenfalls gängigen Methoden appliziert, wobei die Schichtdicken wiederum in den gängigen Bereichen, beispielsweise 5 bis 100 Mikrometer, liegen. Bevorzugt sind Zweikomponentenklarlacke.

Nach der Applikation des Klarlacks kann dieser bei Raumtemperatur für beispielsweise 1 bis 60 Minuten abgelüftet und gegebenenfalls getrocknet werden. Dann wird der Klarlack zusammen mit dem applizierten Basislack gehärtet. Dabei finden beispielsweise Vernetzungsreaktionen statt, wodurch eine erfindungsgemäße farb- und/oder effektgebende mehrschichtige Lackierung auf einem Substrat hergestellt wird. Die Härtung erfolgt bevorzugt thermisch bei Temperaturen von 60 bis 200°C.

Alle im Rahmen der vorliegenden Erfindung angegebenen Schichtdicken verstehen sich als Trockenschichtdicken. Es handelt sich also um die Schichtdicke der jeweils gehärteten Schicht. Ist also angegeben, dass ein Lack in einer bestimmten Schichtdicke aufgetragen wird, so ist darunter zu verstehen, dass der Lack so aufgetragen wird, dass die genannte Schichtdicke nach der Härtung resultiert.

Die Beschichtung von Kunststoffsubstraten erfolgt im Grunde genommen analog zu der von Metallsubstraten. Allerdings wird hier im Allgemeinen bei deutlich niedrigeren Temperaturen von 30 bis 90 °C gehärtet, um keine Beschädigung und/oder Deformation des Substrats zu erzeugen.

Mit Hilfe des erfindungsgemäßen Verfahrens können also metallische und nichtmetallische Substrate, insbesondere Kunststoffsubstrate, vorzugsweise Automobilkarosserien oder Teile davon lackiert werden.

In einer besonderen Ausführungsform des erfindungsgemäßen Verfahrens wird wie schon eingangs beschrieben im Vergleich zu einem Standardprozess auf einen Härtungsschritt verzichtet. Dies bedeutet insbesondere, dass ein gemeinsam zu härtender Aufbau aus einem oder mindestens zwei Basislackschichten, das heißt jedenfalls einem erstem Basislack und einem zweitem Basislack, sowie einem Klarlack auf einem Substrat aufgebaut und anschließend gemeinsam gehärtet. Mindestens einer der eingesetzten Basislacke ist dabei ein erfindungsgemäßer Basislack. In einem Aufbau umfassend mindestens zwei Basislackschichten kann also der erste Basislack oder der zweite Basislack ein erfindungsgemäßer Basislack sein. Genauso möglich und im Rahmen der vorliegenden Erfindung bevorzugt ist es, dass beide Basislacke erfindungsgemäße Basislacke sind.

Der beschriebene Aufbau wird dabei beispielsweise auf einem gegebenenfalls oberflächenaktivierend vorbehandelten Kunststoffsubstrat oder einem mit einer gehärteten Elektrotauchlackierung versehenen Metallsubstrat aufgebaut.

Besonders bevorzugt ist dabei der Aufbau auf mit einer gehärteten Elektrotauchlackschicht versehenen Metallsubstraten. In dieser Ausführungsform ist es also entscheidend, dass alle auf der gehärteten Elektrotauchlackierung aufgebrachten Beschichtungsmittel gemeinsam gehärtet werden. Auch wenn selbstverständlich ein separates Ablüften und/oder Zwischentrocknen möglich ist, wird keine der Schichten separat in den gehärteten Zustand überführt.

Härtung und gehärteter Zustand sind im Rahmen der vorliegenden Erfindung gemäß der allgemeinen fachmännischen Auslegung zu verstehen. Demnach versteht sich unter Härtung einer Beschichtungsschicht die Überführung einer solchen Schicht in den gebrauchsfertigen Zustand, das heißt also in einen Zustand, in der das mit der jeweiligen Beschichtungsschicht ausgestattete Substrat transportiert, gelagert und bestimmungsgemäß verwendet werden kann. Eine gehärtete Beschichtungsschicht ist also insbesondere nicht mehr weich oder klebrig, sondern als fester Beschichtungsfilm konditioniert, der auch bei weiterer Aussetzung mit wie weiter unten beschriebenen Härtungsbedingungen seine Eigenschaften wie Härte oder Haftung auf dem Untergrund nicht mehr wesentlich ändert.

Gegenstand der vorliegenden Erfindung ist auch ein Verfahren zur Reparatur von Mehrschichtlackierungen, insbesondere solchen, die nach dem oben beschriebenen Verfahren hergestellt worden sind.

Demzufolge handelt es sich um ein Verfahren zur Reparatur einer Mehrschichtlackierung, bei dem ein oder nacheinander mindestens zwei Basislackschichten und danach eine Klarlackschicht auf einem Substrat hergestellt werden, wobei als Substrat eine Mehrschichtlackierung, die Fehlstellen besitzt eingesetzt wird und wobei alle während des Reparaturverfahrens aufgebrachten Beschichtungsmittel gemeinsam gehärtet werden. Mindestens einer der eingesetzten Basislacke ist dann ein erfindungsgemäßer Basislack.

Bekanntermaßen ist es üblich und damit auch im Rahmen des Verfahrens zur Reparatur möglich, dass die Fehlstellen zuvor angeschliffen werden. Weiterhin üblich und möglich ist es, dass das Reparaturverfahren lediglich zur lokalen Ausbesserung von Fehlstellen ("Spot Repair") oder zur kompletten Überlackierung einer Mehrschichtlackierung, die Fehlstellen aufweist, (Doppellackierung) eingesetzt wird.

Der Einsatz der erfindungsgemäßen Basislacke führt zu Mehrschichtlackierungen, die neben ausgezeichneten ästhetischen Eigenschaften zudem sehr gute Haftungseigenschaften aufweisen. Dies gilt sowohl für den Bereich der Originallackierung, als auch für die Reparaturlackierung.

### Beispiele

### Methodenbeschreibung

### 1. Feststoffgehalt (Festkörper, nicht flüchtiger Anteil)

Die Bestimmung des nicht-flüchtigen Anteils erfolgt gemäß DIN EN ISO 3251 (Datum: Juni 2008). Dabei werden 1 g Probe in eine vorher getrocknete Aluminiumschale eingewogen und 60 Minuten bei 125 °C im Trockenschrank getrocknet, im Exsikkator abgekühlt, und dann zurückgewogen. Der Rückstand bezogen auf die Gesamtmenge der eingesetzten Probe entspricht dem nichtflüchtigen Anteil. Das Volumen des nicht-flüchtigen Anteils kann falls erforderlich gegebenenfalls gemäß DIN 53219 (Datum: August 2009) bestimmt werden.

### 2. Schichtdicken

Die Bestimmung der Schichtdicken erfolgt nach DIN EN ISO 2808 (Datum: Mai 2007), Verfahren 12A unter Verwendung des Messgerätes MiniTest® 3100 - 4100 der Firma ElektroPhysik.

### 3. Bestimmung der Lagerstabilität

Zur Bestimmung der Lagerstabilität von Beschichtungsmitteln werden diese vor und nach einer Lagerung bei 40 °C für 2 Wochen mit einem der DIN 53019-1 (Datum: September 2008) entsprechenden und nach DIN 53019-2 (Datum: Februar 2001) kalibrierten Rotationsviskosimeter unter temperierten Bedingungen (23,0 °C ± 0,2 °C) untersucht. Dabei werden die Proben zunächst 5 Minuten mit einer Scherrate von 1000 s⁻¹ (Belastungsphase) und anschließend 8 Minuten mit einer Scherrate von 1 s⁻¹ (Entlastungsphase) geschert.

Das mittlere Viskositätsniveau während der Belastungsphase (Hochscherviskosität) sowie das Niveau nach 8 Minuten Entlastungsphase (Niederscherviskosität) werden aus den Messdaten ermittelt und die Werte vor und nach Lagerung miteinander verglichen indem die jeweiligen prozentualen Änderungen berechnet werden. Eine betragsmäßige Veränderung von maximal 15 % wird als akzeptabel angesehen.

### 4. Beurteilung des Auftretens von Kochern und Läufern

Zur Bestimmung der Kocher- und Läuferneigung werden in Anlehnung an DIN EN ISO 28199-1 (Datum: Januar 2010) und DIN EN ISO 28199-3 (Datum: Januar 2010) Mehrschichtlackierungen nach der folgenden allgemeinen Vorschrift hergestellt:
Ein mit einer gehärteten kathodischen Elektrotauchlackschicht (KTL) (CathoGuard® 800 der Firma BASF Coatings GmbH) beschichtetes Lochblech der Abmessungen 57 cm x 20 cm aus Stahl (gemäß DIN EN ISO 28199-1, Punkt 8.1, Ausführung A) wird analog DIN EN ISO 28199-1, Punkt 8.2 (Ausführung A) vorbereitet. Anschließend erfolgt in Anlehnung an DIN EN ISO 28199-1, Punkt 8.3 die Applikation eines wässrigen Basislacks elektrostatisch in einem Einmalauftrag als Keil mit einer Zielschichtdicke (Schichtdicke des getrockneten Materials) im Bereich von 0 µm bis 40 µm. Die resultierende Basislackschicht wird nach einer Ablüftzeit bei 18-23°C von 10 Minuten (Läuferprüfung) beziehungsweise ohne vorherige Ablüftzeit (Kocherprüfung) im Umluftofen für 5 Minuten bei 80 °C zwischengetrocknet. Im Falle der Prüfung auf Läufer werden die Bleche dabei senkrecht stehend abgelüftet und zwischengetrocknet.

Die Bestimmung der Kochergrenze, das heißt derjenigen Basislackschichtdicke, ab der Kocher auftreten, erfolgt nach DIN EN ISO 28199-3, Punkt 5.

Die Bestimmung der Läuferneigung wird nach DIN EN ISO 28199-3, Punkt 4 durchgeführt. Zusätzlich zu der Schichtdicke, bei der ein Läufer die Länge von 10 mm ab Unterkante des Loches überschreitet, wird diejenige Schichtdicke bestimmt, ab der eine erste Läuferneigung an einem Loch visuell zu beobachten ist.

### 5. Lackierung von Wasserbasislack-Keilaufbauten

Zur Beurteilung des Auftretens von Nadelstichen sowie des schichtdickenabhängigen Verlaufs werden keilförmige Mehrschichtlackierungen nach den folgenden allgemeinen Vorschriften hergestellt:
Variante A: Erster Wasserbasislack als Keil, zweiter Wasserbasislack als Konstantschicht
   Ein mit einer gehärteten Standard-KTL (CathoGuard® 800 der Firma BASF Coatings) beschichtetes Stahlblech der Abmessungen 30 x 50 cm wird an einer Längskante mit zwei Klebstreifen (Tesaband, 19 mm) versehen, um nach der Beschichtung Schichtdickendifferenzen ermitteln zu können.
   Der erste Wasserbasislack wird elektrostatisch als Keil mit einer Zielschichtdicke (Schichtdicke des getrockneten Materials) von 0-30 µm aufgetragen. Anschließend erfolgt eine Ablüftung für 3 Minuten bei Raumtemperatur, bevor nach Entfernen eines der beiden Klebestreifen der zweite Wasserbasislack ebenfalls elektrostatisch in einem Einmalauftrag appliziert wird. Die Zielschichtdicke (Schichtdicke des getrockneten Materials) beträgt 13-16 µm. Nach einer erneuten Ablüftzeit von 4 Minuten bei Raumtemperatur wird der Aufbau im Umluftofen für 10 Minuten bei 60 °C zwischengetrocknet.
   Nach Entfernen des zweiten Klebestreifens wird auf den zwischengetrockneten Aufbau per Fließbecherpistole manuell ein handelsüblicher Zweikomponenten-Klarlack (ProGloss® der Firma BASF Coatings GmbH) mit einer Zielschichtdicke (Schichtdicke des getrockneten Materials) von 40-45 µm aufgetragen. Die resultierende Klarlackschicht wird während 10 Minuten bei Raumtemperatur (18 bis 23 °C) abgelüftet; anschließend erfolgt die Härtung im Umluftofen bei 140 °C für weitere 20 Minuten.
Variante B: Erster Wasserbasislack als Konstantschicht, zweiter Wasserbasislack als Keil
   Ein mit einer gehärteten Standard-KTL (CathoGuard® 800 der Firma BASF Coatings) beschichtetes Stahlblech der Abmessungen 30 x 50 cm wird an einer Längskante mit zwei Klebstreifen (Tesaband, 19 mm) versehen, um nach der Beschichtung Schichtdickendifferenzen ermitteln zu können.
   Der erste Wasserbasislack wird elektrostatisch mit einer Zielschichtdicke (Schichtdicke des getrockneten Materials) von 18-22 µm aufgetragen. Anschließend erfolgt eine Ablüftung für 3 Minuten bei Raumtemperatur, bevor nach Entfernen eines der beiden Klebestreifen der zweite Wasserbasislack ebenfalls elektrostatisch in einem Einmalauftrag als Keil appliziert wird. Die Zielschichtdicke (Schichtdicke des getrockneten Materials) beträgt 0-30 µm. Nach einer erneuten Ablüftzeit von 4 Minuten bei Raumtemperatur wird der Aufbau im Umluftofen für 10 Minuten bei 60 °C zwischengetrocknet.
   Nach Entfernen des zweiten Klebestreifens wird auf den zwischengetrockneten Aufbau per Fließbecherpistole manuell ein handelsüblicher Zweikomponenten-Klarlack (ProGloss® der Firma BASF Coatings GmbH) mit einer Zielschichtdicke (Schichtdicke des getrockneten Materials) von 40-45 µm aufgetragen. Die resultierende Klarlackschicht wird während 10 Minuten bei Raumtemperatur (18 bis 23 °C) abgelüftet; anschließend erfolgt die Härtung im Umluftofen bei 140 °C für weitere 20 Minuten.
Variante C: Ein Wasserbasislack als Keil
   Ein mit einer gehärteten Standard-KTL (CathoGuard® 800 der Firma BASF Coatings) beschichtetes Stahlblech der Abmessungen 30 x 50 cm wird an einer Längskante mit zwei Klebstreifen (Tesaband, 19 mm) versehen, um nach der Beschichtung Schichtdickendifferenzen ermitteln zu können.

Der Wasserbasislack wird elektrostatisch als Keil mit einer Zielschichtdicke (Schichtdicke des getrockneten Materials) von 0-30 µm aufgetragen. Nach einer Ablüftzeit von 4 Minuten bei Raumtemperatur wird der Aufbau im Umluftofen für 10 Minuten bei 80 °C zwischengetrocknet.

Nach Entfernen des Klebestreifens wird auf die zwischengetrocknete Wasserbasislackschicht per Fließbecherpistole manuell ein handelsüblicher Zweikomponenten-Klarlack (ProGloss® der Firma BASF Coatings GmbH) mit einer Zielschichtdicke (Schichtdicke des getrockneten Materials) von 40-45 µm aufgetragen. Die resultierende Klarlackschicht wird während 10 Minuten bei Raumtemperatur (18 bis 23 °C) abgelüftet; anschließend erfolgt die Härtung im Umluftofen bei 140 °C für weitere 20 Minuten.

### 6. Beurteilung des Auftretens von Nadelstichen

Zur Beurteilung des Auftretens von Nadelstichen werden gemäß der Methoden zur Lackierung von Wasserbasislack-Keilaufbauten (Variante A beziehungsweise B) Mehrschichtlackierungen hergestellt und anschließend visuell nach der folgenden allgemeinen Vorschrift bewertet:
Die Trockenschichtdicke des gesamten Wasserbasislack-Aufbaus, bestehend aus dem ersten und dem zweiten Wasserbasislack, wird kontrolliert und für den Basislack-Schichtdickenkeil werden die Bereiche von 0-20 µm sowie von 20 µm bis zum Ende des Keils auf dem Stahlblech markiert.

Die Auswertung der Nadelstiche erfolgt visuell in den zwei getrennten Bereichen des Wasserbasislack-Keils. Je Bereich wird die Anzahl der Nadelstiche ausgezählt. Alle Ergebnisse werden auf eine Fläche von 200 cm² normiert. Zusätzlich wird gegebenenfalls protokolliert, ab welcher Trockenschichtdicke des Wasserbasislack-Keils keine Nadelstiche mehr auftreten.

### 7. Beurteilung der Haftungseigenschaften nach Schwitzwasser

Zur Beurteilung der Schwitzwasserbeständigkeit werden die zu untersuchenden Proben über einen Zeitraum von 10 Tagen in einer Klimakammer nach Prüfklima CH nach DIN EN ISO 6270-2:2005-09 gelagert. Anschließend wurden die jeweiligen Bleche 1 Stunde sowie 24 Stunden nach Entnahme aus der Klimakammer visuell bezüglich Blasenbildung sowie hinsichtlich der Haftungseigenschaften untersucht.

Das Auftreten von Blasen wurde folgendermaßen durch eine Kombination von 2 Werten beurteilt:
- Die Anzahl der Blasen wurde durch eine Mengenangabe von 1 bis 5 bewertet, wobei mit m1 sehr wenige und m5 sehr viele Blasen bezeichnet wurden.
- Die Größe der Blasen wurde durch eine Größenangabe ebenfalls von 1 bis 5 bewertet, wobei mit g1 sehr kleine und g5 sehr große Blasen bezeichnet wurden.

Die Bezeichnung m0g0 bedeutet demzufolge eine blasenfreie Lackierung nach Schwitzwasserlagerung und stellt bezüglich Blasenbildung ein iO-Ergebnis dar.

Die Steinschlaghaftung nach Schwitzwasserbelastung wurde nach DIN EN ISO 20567-1, Verfahren B untersucht. Die Beurteilung des sich ergebenden Schadensbildes erfolgte ebenfalls nach DIN EN ISO 20567-1.

Des Weiteren wurden Dampfstrahltests nach DIN 55662, Verfahren B durchgeführt. Das Anbringen der Ritze (Andreaskreuz) erfolgte dabei mit einem Ritzstichel nach Sikkens (siehe DIN EN ISO 17872 Anhang A). Die Beurteilung der Ergebnisse des Dampfstrahltests wurde nach DIN 55662 durchgeführt, wobei insbesondere maximale Breite der Ablösungen in Millimetern bestimmt wurde.

Des Weiteren wurden Dampfstrahlprüfungen nach DIN 55662, Verfahren B (Anbringen eines Andreaskreuzes mit einem Ritzstichel nach Sikkens gemäß DIN EN ISO 17872 Anhang A), auf Substraten, an denen zuvor ein Steinschlagtest nach DIN EN ISO 20567-1, Verfahren B erfolgte, durchgeführt. Zur visuellen Auswertung des Schadensbildes wurde folgende Skala benutzt:
KW0 = keine Veränderung der Probe
KW1 = geringfügige Auswaschung der vorhandenen Schäden
KW2 = deutlich sichtbare Auswaschung der vorhanden Schäden in einer Lackschicht
KW3 = vollständige Enthaftung einer Lackschicht im Bereich des Strahls
KW4 = vollständige Enthaftung einer Lackschicht über den Strahlbereich hinaus
KW5 = Ablösen der kompletten Lackschicht bis zum Substrat

### 8. Isocyanatgehalt

Die Ermittlung des Isocyanat-Gehalts, im Folgenden auch als NCO-Gehalt bezeichnet, wurde durch Zugabe eines Überschusses einer 2%igen N,N-Dibutylamin-Lösung in Xylol zu einer homogenen Lösung der Proben in Aceton / N-Ethylpyrrolidon (1:1 Vol.-%) durch potentiometrische Rücktitration des Amin-Überschusses mit einer 0,1N Salzsäure in Anlehnung an die DIN EN ISO 3251, DIN EN ISO 11909 und DIN EN ISO14896 bestimmt. Über den Anteil eines Polymers (Festkörper) in Lösung kann auf den NCO-Gehalt des Polymers bezogen auf Festkörper zurückgerechnet werden.

### 9. Hydroxylzahl

Die Hydroxylzahl wurde in Anlehnung an R.-P. Krüger, R. Gnauck und R. Algeier, Plaste und Kautschuk, 20, 274 (1982), mittels Essigsäureanhydrid in Gegenwart von 4-Dimethylaminopyridin als Katalysator in einer Tetrahydrofuran (THF) / Dimethylformamid (DMF)-Lösung bei Raumtemperatur ermittelt, wobei der verbliebene Überschuss an Essigsäureanhydrid nach Acetylierung vollständig hydrolysiert wurde und die Essigsäure mit alkoholischer Kaliumhydroxid-Lösung potentiometrisch zurücktitriert wurde. Acetylierungszeiten von 60 min reichten in allen Fällen aus, um einen vollständigen Umsatz zu garantieren.

### 10. Säurezahl

Die Säurezahl wurde in Anlehnung an die DIN EN ISO 2114 in homogener Lösung aus Tetrahydrofuran (THF) / Wasser (9 Vol.-Teile THF und 1 Vol.-Teil destilliertes Wasser) mit ethanolischer Kaliumhydroxid-Lösung bestimmt.

### 11. Aminäguivalentmasse

Die Aminäquivalentmasse (Lösung) dient der Ermittlung des Amingehalts einer Lösung und wurde wie folgt bestimmt. Es wurde die zu untersuchende Probe bei Raumtemperatur in Eisessig gelöst und gegen 0,1N Perchlorsäure in Eisessig in Gegenwart von Kristallviolett titriert. Aus der Einwaage der Probe und dem Verbrauch an Perchlorsäure erhielt man die Aminäquivalentmasse (Lösung), die Masse der Lösung des basischen Amins, die nötig ist, ein Mol Perchlorsäure zu neutralisieren.

### 12. Maskierungsgrad der primären Aminogruppen

Der Maskierungsgrad der primären Aminogruppen wurde mittels IR-Spektrometrie mit einem FT-IR-Spektrometer Nexus (Fa. Nicolet) unter Zuhilfenahme einer IR-Küvette (d=25mm, KBr-Fenster) am Absorptionsmaximum bei 3310 cm⁻¹ anhand von Konzentrationsreihen der verwendeten Amine und Normierung auf das Absorptionsmaximum bei 1166 cm⁻¹ (interner Standard) bei 25°C ermittelt.

### 13. Lösunasmittelaehalt

Der Gehalt eines organischen Lösungsmittels an einer Mischung, beispielsweise einer wässrigen Dispersion, wurde mittels Gaschromatographie (Agilent 7890A, 50m Silica-Kapillarsäule mit Polyethylenglykol-Phase bzw. 50m Silica-Kapillarsäule mit Polydimethylsiloxan-Phase, Trägergas Helium, Splitinjektor 250°C, Ofentemperatur 40 - 220°C, Flammionisationsdetektor, Detektortemperatur 275°C, interner Standard n-Propylglykol) ermittelt.

### 14. Zahlenmittleres Molekulargewicht

Die zahlenmittlere Molmasse (Mₙ) wurde, soweit nicht anders angegeben, mittels eines Dampfdruckosmometers Typ 10.00 (Fa. Knauer) an Konzentrationsreihen in Toluol bei 50°C mit Benzophenon als Eichsubstanz zur Bestimmung der experimentellen Eichkonstante des eingesetzten Messgeräts nach E. Schröder, G. Müller, K.-F. Arndt, "Leitfaden der Polymercharakterisierung", Akademie-Verlag, Berlin, S. 47 - 54, 1982, ermittelt.

### 15. Mittlere Teilchengröße der Partikel in der Dispersion (PD)

Die mittlere Partikelgröße (Volumenmittel) der in den erfindungsgemäß einzusetzenden Dispersionen (PD) enthaltenen Polyurethan-Polyharnstoff-Partikel werden im Rahmen der vorliegenden Erfindung durch Photonenkorrelationsspektroskopie (PCS) in Anlehung an DIN ISO 13321 bestimmt.

Konkret zur Messung eingesetzt wurde ein "Malvern Nano S90" (Fa. Malvern Instruments) bei 25 ± 1 °C. Das Gerät deckt einen Größenbereich von 3 bis 3000 nm ab und war ausgestattet mit einem 4mW He-Ne Laser bei 633 nm. Die Dispersionen (PD) wurden soweit mit partikelfreiem, deionisierten Wasser als Dispergiermedium verdünnt, um sie anschließend in einer 1 ml Polystyrol-Küvette bei geeigneter Streuintensität zu vermessen. Die Auswertung erfolgte mittels digitalem Korrelator unter Zuhilfenahme der Auswertungssoftware Zetasizer Vers. 7.11 (Fa. Malvern Instruments). Es wurde fünf Mal gemessen und die Messungen an einer zweiten, frisch präparierten Probe wiederholt. Die Standardabweichung einer 5-fach Bestimmung betrug ≤ 4%. Die maximale Abweichung des arithmetischen Mittels des Volumenmittels (V-average mean) von fünf Einzelmessungen betrug ± 15 %. Die angegebene mittlere Partikelgröße (Volumenmittel) ist das arithmetische Mittel aus der mittleren Partikelgröße (Volumenmittel) der Einzelpräparationen. Die Überprüfung erfolgte mit Polystyrol-Standards mit zertifizierten Partikelgrößen zwischen 50 bis 3000 nm.

Augenscheinlich wurde die hier beschriebene Mess- und Auswertemethode ebenfalls zur Bestimmung der Teilchengröße des in der wässrigen Dispersion (wD) enthaltenden Polymerisats zur Anwendung gebracht.

### 16. Gelanteil

Der Gelanteil wird im Rahmen der vorliegenden Erfindung gravimetrisch bestimmt. Dabei wurde zunächst aus einer Probe, insbesondere aus einer wässrigen Dispersion (PD), (Einwaage 1,0 g) das enthaltene Polymer über Gefriertrocknung isoliert. Nach Bestimmung der Erstarrungstemperatur, der Temperatur, ab der sich der elektrische Widerstand der Probe bei weiterer Absenkung der Temperatur nicht mehr verändert, erfolgte die Haupttrocknung der vollständig eingefrorenen Probe üblicherweise im Druckbereich des Trocknungsvakuums zwischen 5 mbar und 0,05 mbar, bei einer um 10°C niedrigeren Trocknungstemperatur als der Erstarrungstemperatur. Durch schrittweise Erhöhung der Temperatur der beheizten Stellflächen auf 25°C wurde eine rasche Gefriertrocknung der Polymeren erreicht, wobei nach einer Trocknungsdauer von üblicherweise 12 Stunden die Menge an isoliertem Polymer (Festanteil, ermittelt über die Gefriertrocknung) konstant war und sich auch bei noch längerer Gefriertrocknung nicht mehr änderte. Durch Nachtrocknung bei einer Stellflächentemperatur von 30°C und maximal reduziertem Umgebungsdruck (üblicherweise zwischen 0,05 und 0,03 mbar) wurde eine optimale Trocknung des Polymeren erzielt.

Anschließend wurde das isolierte Polymer für eine Minute bei 130°C im Umluftofen gesintert und danach für 24 Stunden bei 25°C in einem Überschuss Tetrahydrofuran (Verhältnis Tetrahydrofuran zu Festanteil = 300 : 1) extrahiert. Dann wurde der unlösliche Anteil des isolierten Polymers (Gelanteil) über eine geeignete Fritte abgetrennt, 4 Stunden bei 50°C im Umluftofen getrocknet, und anschließend zurückgewogen.

Es wurde ferner sichergestellt, dass bei der Sintertemperatur von 130°C und Variation der Sinterzeiten zwischen einer Minute und zwanzig Minuten der ermittelte Gelanteil der Mikrogel-Partikel unabhängig von der Sinterzeit ist. Es ist also ausgeschlossen, dass bei der Isolierung des polymeren Feststoffs nachgeschaltete Vernetzungsreaktionen den Gelanteil weiter erhöhen.

Der auf diese Weise erfindungsgemäß bestimmte Gelanteil wird auch Gelanteil (gefriergetrocknet) genannt und kann auch in Gew.-% angegeben werden. Denn augenscheinlich handelt es sich um denjenigen auf das Gewicht bezogenen Anteil von Polymer-Partikeln, der wie Eingangs im Zusammenhang mit der Dispersion (PD) beschrieben vernetzt ist und damit als Gel isolierbar ist.

Parallel wurde ein Gelanteil, im Folgenden auch als Gelanteil (130°C) bezeichnet, gravimetrisch bestimmt, indem aus wässriger Dispersion (Einwaage 1,0 g) eine Polymerprobe bei 130°C, 60 min (Festkörper) isoliert wurde. Die Masse des Polymeren wurde bestimmt, um das Polymer anschließend analog zur oben beschriebenen Prozedur 24 Stunden bei 25°C in einem Überschuss an Tetrahydrofuran zu extrahieren, den unlöslichen Anteil (Gelanteil) abzutrennen, zu trocknen und zurück zu wiegen.

### 17. Löslichkeit in Wasser

Die Löslichkeit eines organischen Lösemittels in Wasser wurde bei 20°C wie folgt bestimmt. Das jeweilige organische Lösemittel und Wasser wurden in einem geeigneten Glasgefäß zusammengeben, vermischt und das Gemisch anschließend äquilibriert. Dabei wurden die Mengen von Wasser und dem Lösemittel so gewählt, dass sich nach der Äquilibrierung zwei voneinander getrennte Phasen ergaben. Nach der Äquilibrierung wird über eine Spritze eine Probe aus der wässrigen Phase (das heißt der Phase, die mehr Wasser als organisches Lösemittel enthält) entnommen, im Verhältnis 1/10 mit Tetrahydrofuran verdünnt und mittels Gaschromatographie der Anteil des Lösemittels bestimmt (Bedingungen siehe Punkt 8. Lösungsmittelgehalt).

Sofern sich unabhängig von den Mengen von Wasser und dem Lösemittel keine zwei Phasen ausbilden, ist das Lösemittel in jeglichem Gewichtsverhältnis mit Wasser mischbar. Dieses somit unbegrenzt in Wasser lösliche Lösemittel (beispielsweise Aceton), ist daher jedenfalls kein Lösemittel (Z.2).

### Herstellung von wässrigen Dispersionen (wD) und (PD)

### Dispersionen (wD)

Die in der Folge beschriebene Herstellvorschrift bezieht sich auf Tabelle A.

### Monomerenmischung (A), Stufe i.

80 Gew.-% der Positionen 1 und 2 aus Tabelle A werden in einen Stahlreaktor (5 L Volumen) mit Rückflusskühler gegeben und auf 80°C aufgeheizt. Die restlichen Anteile der unter "Vorlage" in Tabelle A aufgeführten Komponenten werden in einem separaten Gefäß vorgemischt. Dieses Gemisch und davon getrennt die Initiatorlösung (Tabelle A, Position 5 und 6) werden zeitgleich innerhalb von 20 min in den Reaktor zu getropft, wobei in der Reaktionslösung ein Anteil der Monomere, bezogen auf die Gesamtmenge an in Stufe i. eingesetzten Monomeren, von 6,0 Gew.-% während der gesamten Reaktionsdauer nicht überschritten wird. Im Anschluss wird 30 min gerührt.

### Monomerenmischung (B), Stufe ii.

Die in Tabelle A unter "Mono 1" angegebenen Komponenten werden in einem separaten Gefäß vorgemischt. Dieses Gemisch wird innerhalb von 2 Stunden in den Reaktor zu getropft, wobei in der Reaktionslösung ein Anteil der Monomere, bezogen auf die Gesamtmenge an in Stufe ii. eingesetzten Monomeren, von 6,0 Gew.-% während der gesamten Reaktionsdauer nicht überschritten wird. Im Anschluss wird 1 Stunde gerührt.

### Monomerenmischung (C), Stufe iii.

Die in Tabelle A unter "Mono 2" angegebenen Komponenten werden in einem separaten Gefäß vorgemischt. Dieses Gemisch wird innerhalb von 1 Stunde in den Reaktor zu getropft, wobei in der Reaktionslösung ein Anteil der Monomere, bezogen auf die Gesamtmenge an in Stufe iii. eingesetzten Monomeren, von 6,0 Gew.-% während der gesamten Reaktionsdauer nicht überschritten wird. Im Anschluss wird 2 Stunden gerührt. Danach wird das Reaktionsgemisch auf 60°C abgekühlt und das Neutralisationsgemisch (Tabelle A, Positionen 20, 21 und 22) in einem separaten Gefäß vorgemischt. Das Neutralisationsgemisch wird innerhalb von 40 min in den Reaktor zu getropft, wobei der pH-Wert der Reaktionslösung auf einen pH-Wert von 7,5 bis 8,5 eingestellt wird. Anschließend wird das Reaktionsprodukt noch 30 min gerührt, auf 25°C abgekühlt und filtriert.

**Tabelle A: Wässrige Dispersionen (wD)**

| | | **BM2*** | **BM3*** | **BM4** | **BM5** | **BM6** | **BM7** |
|---|---|---|---|---|---|---|---|
| | **Vorlage** | | | | | | |
| 1 | VE-Wasser | 41,81 | 41,81 | 41,81 | 41,81 | 41,81 | 41,81 |
| 2 | EF 800 | 0,18 | 0,18 | 0,18 | 0,18 | 0,18 | 0,18 |
| 3 | Styrol | 0,68 | 0,93 | 0,93 | 0,93 | 0,23 | 0,23 |
| 4 | n-Butylacrylat | 0,48 | 0,23 | 0,23 | 0,23 | 0,93 | 0,93 |
| | **Initiatorlösung** | | | | | | |
| 5 | VE-Wasser | 0,53 | 0,53 | 0,53 | 0,53 | 0,53 | 0,53 |
| 6 | APS | 0,02 | 0,02 | 0,02 | 0,02 | 0,02 | 0,02 |

| | **Mono 1** | | | | | | |
|---|---|---|---|---|---|---|---|
| 7 | VE-Wasser | 12,78 | 12,78 | 12,78 | 12,78 | 12,78 | 12,78 |
| 8 | EF 800 | 0,15 | 0,15 | 0,15 | 0,15 | 0,15 | 0,15 |
| 9 | APS | 0,02 | 0,02 | 0,02 | 0,02 | 0,02 | 0,02 |
| 10 | Styrol | 5,61 | 5,61 | 12,41 | 12,41 | 12,41 | 12,41 |
| 11 | n-Butylacrylat | 13,6 | 13,6 | 6,8 | 6,8 | 6,8 | 6,8 |
| 12 | 1,6-HDDA | 0,34 | 0,34 | 0,34 | 0,34 | 0,34 | 0,34 |

| | **Mono 2** | | | | | | |
|---|---|---|---|---|---|---|---|
| 13 | VE-Wasser | 5,73 | 5,73 | 5,73 | 5,73 | 5,73 | 5,73 |
| 14 | EF 800 | 0,07 | 0,07 | 0,07 | 0,07 | 0,07 | 0,07 |
| 15 | APS | 0,02 | 0,02 | 0,02 | 0,02 | 0,02 | 0,02 |
| 16 | Methacrylsäure | 0,71 | 0,71 | 0,71 | 0,71 | 0,71 | 0,71 |
| 17 | 2-HEA | 0,95 | 0,95 | 0,95 | 0,95 | 0,95 | 0,95 |
| 18 | n-Butylacrylat | 3,74 | 1,87 | 3,74 | 1,87 | 3,74 | 1,87 |
| 19 | MMA | 0,58 | 2,45 | 0,58 | 2,45 | 0,58 | 2,45 |

| | **Neutralisation** | | | | | | |
|---|---|---|---|---|---|---|---|
| 20 | VE-Wasser | 6,48 | 6,48 | 6,48 | 6,48 | 6,48 | 6,48 |
| 21 | Butylglykol | 4,76 | 4,76 | 4,76 | 4,76 | 4,76 | 4,76 |
| 22 | DMEA | 0,76 | 0,76 | 0,76 | 0,76 | 0,76 | 0,76 |

| | | | | | | | |
|---|---|---|---|---|---|---|---|
| ***erfindungsgemäß einsetzbar** | | | | | | | |

Der Festkörper wurde zur Reaktionskontrolle bestimmt. Die Ergebnisse sind in Tabelle B angeben:

**Tabelle B: Festkörper der wässrigen Dispersionen**

| | **BM2*** | **BM3*** | **BM4** | **BM5** | **BM6** | **BM7** |
|---|---|---|---|---|---|---|
| **Festkörpergehalt [%]** | 25,5 | 25,5 | 25,5 | 26 | 27,4 | 26,1 |

| | | | | | | |
|---|---|---|---|---|---|---|
| ***erfindungsgemäß einsetzbar** | | | | | | |

Nach jeder Stufe und nach der abschließenden Neutralisation wurde die Teilchengröße bestimmt. Die Ergebnisse sind in Tabelle C wiedergegeben.

**Tabelle C: Teilchengrößen in Nanometer**

| | | **BM2*** | **BM3*** | **BM4** | **BM5** | **BM6** | **BM7** |
|---|---|---|---|---|---|---|---|
| i | **Nach "Vorlage"** | 90 | 70 | 70 | 70 | 120 | 120 |
| ii | **Nach "Mono 1"** | 150 | 160 | 160 | 180 | 150 | 160 |
| iii | **Nach "Mono 2"** | 190 | 230 | 230 | 250 | 220 | 200 |
| iiii | **nach Neutralisation** | 240 | 290 | 275 | 300 | 250 | 245 |

| | | | | | | | |
|---|---|---|---|---|---|---|---|
| * **erfindungsgemaß einsetzbar** | | | | | | | |

Jede der angegebenen Monomermischungen (A), (B) und (C) (entspricht "Vorlage", "Mono 1" und "Mono 2") wurde einzeln polymerisiert und im Anschluss die jeweilige Glasübergangstemperatur des erhaltenen Polymerisats bestimmt. Zusätzlich wurde die Glasübergangstemperatur für das gesamte Polymerisat nach Neutralisation bestimmt.

Die Ergebnisse sind in Tabelle D angegeben.

**Tabelle D: Glasübergangstemperaturen in °C**

| | | **BM2*** | **BM3*** | **BM4** | **BM5** | **BM6** | **BM7** |
|---|---|---|---|---|---|---|---|
| i | **"Vorlage"** | 30 | 50 | 48 | 50 | -9 | -9 |
| ii | **"Mono 1"** | -11 | -12 | 45 | 45 | 47 | 48 |
| iii | **"Mono 2"** | 4 | 6 | 4 | 4 | 5 | 4 |
| | **gesamtes Polymerisat** | -9 | -7 | 46 | 47 | 45 | 46 |

| | | | | | | | |
|---|---|---|---|---|---|---|---|
| *** erfindungsgemäß einsetzbar** | | | | | | | |

### Dispersion (PD)

Eine Dispersion (PD1) wurde wie folgt hergestellt.

### a) Herstellung einer teilneutralisierten Präpolymerlösung

In einem Reaktionsgefäß, ausgerüstet mit Rührer, Innenthermometer, Rückflußkühler und elektrischer Heizung, wurden 559,7 Gewichtsteile eines linearen Polyesterpolyols und 27,2 Gewichtsteile Dimethylolpropionsäure (Fa. GEO Speciality Chemicals) in 344,5 Gewichtsteilen Methylethylketon unter Stickstoff gelöst. Das lineare Polyesterdiol wurde zuvor aus dimerisierter Fettsäure (Pripol® 1012, Fa. Croda), Isophthalsäure (Fa. BP Chemicals) und Hexan-1,6-diol (Fa. BASF SE) hergestellt (Gewichtsverhältnis der Ausgangsstoffe: dimere Fettsäure zu Isophthalsäure zu Hexan-1,6-diol = 54,00 : 30,02 : 15,98) und wies eine Hydroxylzahl von 73 mg KOH / g Festanteil, eine Säurezahl von 3,5 mg KOH / g Festanteil und eine berechnete, zahlenmittlere Molmasse von 1379 g/mol und eine über Dampfdruckosmometrie bestimmte zahlenmittlere Molmasse von 1350 g/mol auf.

Zu der resultierenden Lösung wurden bei 30°C hintereinander 213,2 Gewichtsteile Dicyclohexylmethan-4,4'-diisocyanat (Desmodur® W, Fa. Bayer MaterialScience) mit einem Isocyanatgehalt von 32,0 Gew.-% und 3,8 Gewichtsteile Dibutylzinndilaurat (Fa. Merck) hinzugegeben. Anschließend wurde unter Rühren auf 80°C erwärmt. Es wurde bei dieser Temperatur weiter gerührt, bis der Isocyanatgehalt der Lösung 1,49 Gew.-% betrug und konstant war. Danach wurden 626,2 Gewichtsteile Methylethylketon zum Präpolymer gegeben und das Reaktionsgemisch auf 40°C abgekühlt. Nach Erreichen von 40°C wurden 11,8 Gewichtsteile Triethylamin (Fa. BASF SE) innerhalb von zwei Minuten zugetropft und weitere 5 Minuten der Ansatz gerührt.

### b) Umsetzung des Präpolymeren mit Diethylentriamindiketimin

Anschließend wurden 30,2 Gewichtsteile einer 71,9 Gew.-% Anlösung von Diethylentriamindiketimin in Methylisobutylketon (Verhältnis Isocyanatgruppen des Präpolymeren zu Diethylentriamindiketimin (mit einer sekundären Aminogruppe): 5 : 1 mol/mol, entspricht zwei NCO-Gruppen pro blockierter, primärer Aminogruppe) innerhalb einer Minute zugemischt, wobei die Reaktionstemperatur nach Zugabe zur Präpolymerlösung kurzzeitig um 1°C anstieg. Die Anlösung von Diethylentriamindiketimin in Methylisobutylketon wurde zuvor durch azeotropes Auskreisen von Reaktionswasser bei der Reaktion von Diethylentriamin (Fa. BASF SE) mit Methylisobutylketon in Methylisobutylketon bei 110 - 140°C hergestellt. Durch Verdünnen mit Methylisobutylketon wurde auf eine Aminäquivalentmasse (Lösung) von 124,0 g/eq eingestellt. Mittels IR-Spektroskopie wurde anhand der Restabsorption bei 3310 cm⁻¹ eine Blockierung der primären Aminogruppen von 98,5% ermittelt.

Der Feststoffgehalt der Isocyanatgruppen-haltigen Polymerlösung wurde mit 45,3 % bestimmt.

### c) Dispergierung und Vakuumdestillation

Nach 30 Minuten Rühren bei 40°C wurde der Inhalt des Reaktors innerhalb von 7 Minuten in 1206 Gewichtsteile deionisiertes Wasser (23°C) dispergiert. Aus der resultierenden Dispersion wurde Methylethylketon bei 45°C unter Vakuum abdestilliert und eventuelle Lösemittel- und Wasserverluste mit deionisiertem Wasser ausgeglichen, so dass ein Feststoffgehalt von 40 Gew.-% resultierte.

Es wurde eine weiße, stabile, feststoffgehaltreiche, niedrigviskose Dispersion mit vernetzten Partikeln erhalten, die auch nach 3 Monaten keinerlei Absetzen aufwies.

Die so erhaltene Mikrogel-Dispersion (PD1) wies folgende Kennzahlen auf:

| | |
|---|---|
| Feststoffgehalt (130°C, 60min, 1g): | 40,2 Gew.-% |
| Methylethylketon-Gehalt (GC): | 0,2 Gew.-% |
| Methylisobutylketon-Gehalt (GC): | 0,1 Gew.-% |
| Viskosität (23°C, Rotationsviskosimeter, Scherrate= 1000/s): | 15 mPas |
| Säurezahl | 17,1 mg KOH / g |
| | Feststoffgehalt |
| Neutralisationsgrad (berechnet) | 49 % |
| pH (23°C) | 7,4 |
| Partikelgröße (Photonenkorrelationsspektroskopie, Volumenmittel) | 167 nm |
| Gelanteil (gefriergetrocknet) | 85,1 Gew.-% |
| Gelanteil (130°C) | 87,3 Gew.-% |

### Herstellung von wässrigen Basislacken

Hinsichtlich der in den nachstehenden Tabellen angegebenen Formulierungsbestandteile und deren Mengen ist folgendes zu berücksichtigen. Wird auf ein Handelsprodukt oder eine anderswo beschriebene Herstellvorschrift verwiesen, ist unabhängig von der jeweils gewählten Hauptbenennung des Bestandteils genau dieses Handelsprodukt oder genau das bei der referenzierten Vorschrift hergestellte Produkt gemeint.

Besitzt also ein Formulierungsbestandteil die Hauptbenennung "Melaminformaldehydharz" und ist dazu ein Handelsprodukt angegeben, so wird das Melaminformaldehydharz als genau dieses Handelsprodukt eingesetzt. Gegebenenfalls im Handelsprodukt vorhandene weitere Bestandteile wie Lösemittel sind also zu berücksichtigen, wenn auf die Menge der Wirksubstanz (des Melaminformaldehydharzes) zurückgeschlossen werden soll.

Wird also für einen Formulierungsbestandteil auf eine Herstellvorschrift verwiesen und resultiert bei dieser Herstellung beispielsweise eine Polymer-Dispersion mit einem bestimmten Festkörper, so wird genau diese Dispersion eingesetzt. Es ist nicht maßgeblich, ob als Hauptbenennung der Begriff "Polymer-Dispersion" oder lediglich die Wirksubstanz, beispielsweise "Polymer", "Polyester" oder "polyurethanmodifiziertes Polyacrylat" gewählt wurde. Dies ist zu berücksichtigen, wenn auf die Menge der Wirksubstanz (des Polymers) zurückgeschlossen werden soll.

Alle in den Tabellen angegebenen Anteile sind Gewichtsteile.

### Pigmentpasten:

### Herstellung der Weißpaste P1

Die Weißpaste wird aus 50 Gewichtsteilen Titan Rutil 2310, 6 Gewichtsteilen eines gemäß Beispiel D, Spalte 16, Z. 37-59 der DE 40 09 858 A1 hergestellten Polyesters, 24,7 Gewichtsteilen einer gemäß der Patentanmeldung EP 022 8003 B2, S. 8, Z. 6 bis 18 hergestellten Bindemitteldispersion, 10,5 Gewichtsteilen deionisiertes Wasser, 4 Gewichtsteilen 2,4,7,9-Tetramethyl-5-decindiol, 52%ig in BG (erhältlich von BASF SE), 4,1 Gewichtsteilen Butylglykol, 0,4 Gewichtsteilen 10%iges Dimethylethanolamin in Wasser sowie 0,3 Gewichtsteilen Acrysol RM-8 (erhältlich von der Firma The Dow Chemical Company) hergestellt.

### Herstellung der Schwarzpaste P2

Die Schwarzpaste wird aus 57 Gewichtsteilen einer gemäß WO 92/15405, S. 13, Z. 13 bis S. 15, Z. 13 hergestellten Polyurethandispersion, 10 Gewichtsteilen Ruß (Ruß Monarch® 1400 der Firma Cabot Corporation), 5 Gewichtsteilen eines Polyesters, hergestellt gemäß Beispiel D, Spalte 16, Z. 37-59 der DE 40 09 858 A1, 6,5 Gewichtsteilen einer 10%igen wässrigen Dimethylethanolamin-Lösung, 2,5 Gewichtsteilen eines handelsüblichen Polyethers (Pluriol® P900, erhältlich von BASF SE), 7 Gewichtsteilen Butyldiglykol und 12 Gewichtsteilen deionisiertem Wasser hergestellt.

### Herstellung der Talkumpaste P3

Die Talkumpaste wird aus 49,7 Gewichtsteilen einer gemäß WO 91/15528, S. 23, Z. 26 bis S. 25, Z. 24 hergestellten wässrigen Bindemitteldispersion, 28,9 Gewichtsteile Steatit (Microtalc IT extra der Firma Mondo Minerals B.V.), 0,4 Gewichtsteilen Agitan 282 (erhältlich von Münzing Chemie GmbH), 1,45 Gewichtsteilen Disperbyk®-184 (erhältlich von BYK-Chemie GmbH), 3,1 Gewichtsteilen eines handelsüblichen Polyethers (Pluriol® P900, erhältlich von BASF SE) und 16,45 Gewichtsteilen deionisiertem Wasser hergestellt.

### Herstellung der Bariumsulfatpaste P4

Die Bariumsulfatpaste wird aus 39 Gewichtsteilen einer gemäß EP 0228003 B2, S. 8, Z. 6 bis 18 hergestellten Polyurethandispersion, 54 Gewichtsteilen Bariumsulfat (Blanc fixe micro der Firma Sachtleben Chemie GmbH), 3,7 Gewichtsteilen Butyl-glykol und 0,3 Gewichtsteilen Agitan 282 (erhältlich von Münzing Chemie GmbH) und 3 Gewichtsteilen deionisiertem Wasser hergestellt.

### Herstellung einer Aluminiumpiament-Schlämme S1

Die Aluminiumpigment-Schlämme wird durch Vermischen mittels eines Rührorgans von 50 Gewichtsteilen Butylglykol sowie 35 Gewichtsteilen des handelsüblichen Effektpigmentes Alu Stapa IL Hydrolan 2192 Nr.5 und 15 Gewichtsteilen des handelsüblichen Effektpigmentes Alu Stapa IL Hydrolan 2197 Nr.5 (jeweils erhältlich von der Firma Altana-Eckart) erhalten.

### Herstellung von erfindungsgemäßen Basislacken WBL Grau A1 und WBL Grau A2

Die in der Tabelle 1.1 aufgeführten Komponenten werden in der angegebenen Reihenfolge zu einer wässrigen Mischung zusammengerührt. Sodann wird 10 min lang gerührt und mit Hilfe von deionisiertem Wasser und Dimethylethanolamin auf einen pH Wert von 8 und eine Spritzviskosität von 90±10 mPa·s bei einer Scherbelastung von 1000 s⁻¹, gemessen mit einem Rotations-Viskosimeter (Gerät Rheolab QC mit Temperiersystem C-LTD80/QC der Firma Anton Paar) bei 23 °C, eingestellt.

**Tabelle 1.1:**

| | **WBL Grau A1** | **WBL Grau A2** |
|---|---|---|
| **Komponente** | | |
| 3%ige Na-Mg-Schichtsilikatlösung | 8,0 | 4,0 |
| Wässrige Dispersion (wD) BM2 | 22,0 | 11,0 |
| Wässrige Dispersion (PD1) | 13,1 | 26,3 |
| Melaminformaldehydharz (Cymel® 203 der Firma Allnex) | 3,4 | 1,7 |
| Polyester; hergestellt gemäß Seite 28, Zeilen 13 bis 33 (Beispiel BE1) WO 2014/033135 A2 | 2,0 | 1,0 |
| Polyester; hergestellt gemäß Beispiel D, Spalte 16, Z. 37-59 der DE 40 09 858 A1 | 6,1 | 7,6 |
| Polyurethanmodifiziertes Polyacrylat; hergestellt gemäß S. 7, Z. 55 bis S.8, Z. 23 der DE 4437535 A1 | 2,2 | 4,4 |
| Wasser, deionisiert | 9,0 | 9,0 |
| Butylglykol | 3,8 | 3,6 |
| 1-Propoxy-2-propanol | 0,9 | 0,4 |
| Isopar® L, erhältlich von Exxon Mobil | 1,1 | 0,6 |
| 2-Ethylhexanol | 0,5 | 0,3 |
| 2,4,7,9-Tetramethyl-5-decindiol, 52%ig in BG (erhältlich von BASF SE) | 1,4 | 1,8 |
| 10%iges Dimethylethanolamin in Wasser | 1,3 | 2,3 |
| Pluriol® P900, erhältlich von BASF SE | 0,7 | 0,9 |
| Hydrosol A170, erhältlich von DHC Solvent Chemie GmbH | 0,3 | 0,2 |
| Weißpaste P1 | 25,0 | 25,0 |
| Schwarzpaste P2 | 1,5 | 1,5 |

### Herstellung von Vergleichs-Basislacken WBL Grau A3 und WBL Grau A4

Die in der Tabelle 1.2 aufgeführten Komponenten werden in der angegebenen Reihenfolge zu einer wässrigen Mischung zusammengerührt. Sodann wird 10 min lang gerührt und mit Hilfe von deionisiertem Wasser und Dimethylethanolamin auf einen pH Wert von 8 und eine Spritzviskosität von 90±10 mPa·s bei einer Scherbelastung von 1000 s⁻¹, gemessen mit einem Rotations-Viskosimeter (Gerät Rheolab QC mit Temperiersystem C-LTD80/QC der Firma Anton Paar) bei 23 °C, eingestellt.

**Tabelle 1.2:**

| | **WBL Grau A3** | **WBL Grau A4** |
|---|---|---|
| **Komponente** | | |
| 3%ige Na-Mg-Schichtsilikatlösung | 12,0 | |
| Wässrige Dispersion (wD) BM2 | 33,0 | |
| Wässrige Dispersion (PD1) | | 39,4 |
| Melaminformaldehydharz (Cymel® 203 der Firma Allnex) | 5,1 | |
| Polyester; hergestellt gemäß Seite 28, Zeilen 13 bis 33 (Beispiel BE1) WO 2014/033135 A2 | 3,0 | |
| Polyester; hergestellt gemäß Beispiel D, Spalte 16, Z. 37-59 der DE 40 09 858 A1 | 4,6 | 9,1 |
| Polyurethanmodifiziertes Polyacrylat; hergestellt gemäß S. 7, Z. 55 bis S.8, Z. 23 der DE 4437535 A1 | | 6,6 |
| Wasser, deionisiert | 9,0 | 9,0 |
| Butylglykol | 4,1 | 3,3 |
| 1-Propoxy-2-propanol | 1,3 | |
| Isopar® L, erhältlich von Exxon Mobile | 1,7 | |
| 2-Ethylhexanol | 0,8 | |
| 2,4,7,9-Tetramethyl-5-decindiol, 52%ig in BG (erhältlich von BASF SE) | 1,0 | 2,2 |
| 10%iges Dimethylethanolamin in Wasser | 0,3 | 3,3 |
| Pluriol® P900, erhältlich von BASF SE | 0,5 | 1,1 |
| Hydrosol A170, erhältlich von DHC Solvent Chemie GmbH | 0,5 | |
| Weißpaste P1 | 25,0 | 25,0 |
| Schwarzpaste P2 | 1,5 | 1,5 |

### Herstellung von erfindungsgemäßen Basislacken WBL Silber B1 und WBL Silber B2

Die in der Tabelle 1.3 aufgeführten Komponenten werden in der angegebenen Reihenfolge zu einer wässrigen Mischung zusammengerührt. Sodann wird 10 min lang gerührt und mit Hilfe von deionisiertem Wasser und Dimethylethanolamin auf einen pH Wert von 8 und eine Spritzviskosität von 90±10 mPa·s bei einer Scherbelastung von 1000 s⁻¹, gemessen mit einem Rotations-Viskosimeter (Gerät Rheolab QC mit Temperiersystem C-LTD80/QC der Firma Anton Paar) bei 23 °C, eingestellt.

**Tabelle 1.3:**

| | **WBL Silber B1** | **WBL Silber B2** |
|---|---|---|
| **Komponente** | | |
| 3%ige Na-Mg-Schichtsilikatlösung | 14,6 | 7,3 |
| Wässrige Dispersion (wD) BM2 | 25,3 | 12,6 |
| Wässrige Dispersion (PD1) | 10,7 | 21,3 |
| Melaminformaldehydharz (Cymel® 203 der Firma Allnex) | 3,1 | 1,6 |
| Polyester; hergestellt gemäß Beispiel D, Spalte 16, Z. 37-59 der DE 40 09 858 A1 | 6,8 | 7,1 |
| Polyurethanmodifiziertes Polyacrylat; hergestellt gemäß S. 7, Z. 55 bis S.8, Z. 23 der DE 4437535 A1 | 5,5 | 5,4 |
| deionisiertes Wasser | 32,4 | 33,2 |
| Butylglykol | 1,3 | 1,1 |
| 1-Propoxy-2-propanol | 2,2 | 1,1 |
| N-Butoxypropanol | 1,6 | 0,8 |
| Isobutanol | 2,7 | 1,4 |
| 2-Ethylhexanol | 2,5 | 1,2 |
| 2,4,7,9-Tetramethyl-5-decindiol, 52%ig in BG (erhältlich von BASF SE) | 1,0 | 2,1 |
| 50 Gew.-%ige Lösung von Rheovis® PU1250 in Butylglykol (Rheovis® PU1250 erhältlich von BASF SE) | 0,5 | 0,2 |
| Rheovis® AS 1130, erhältlich von BASF SE | 1,1 | 1,1 |
| Aluminiumpigment-Schlämme S1 | 13,4 | 13,4 |
| 10%iges Dimethylethanolamin in Wasser | 2,0 | 3,0 |
| Pluriol® P900, erhältlich von BASF SE | 1,2 | 1,1 |
| Byketol®-WS der Firma Altana/BYK-Chemie GmbH | 0,9 | 0,5 |
| Dispex® Ultra FA 4437, erhältlich von BASF SE | 0,1 | 0,3 |

### Herstellung von Veraleichs-Basislacken WBL Silber B3 und WBL Silber B4

Die in der Tabelle 1.4 aufgeführten Komponenten werden in der angegebenen Reihenfolge zu einer wässrigen Mischung zusammengerührt. Sodann wird 10 min lang gerührt und mit Hilfe von deionisiertem Wasser und Dimethylethanolamin auf einen pH Wert von 8 und eine Spritzviskosität von 90±10 mPa·s bei einer Scherbelastung von 1000 s⁻¹, gemessen mit einem Rotations-Viskosimeter (Gerät Rheolab QC mit Temperiersystem C-LTD80/QC der Firma Anton Paar) bei 23 °C, eingestellt.

**Tabelle 1.4:**

| | **WBL Silber B3** | **WBL Silber B4** |
|---|---|---|
| **Komponente** | | |
| 3%ige Na-Mg-Schichtsilikatlösung | 21,9 | |
| Wässrige Dispersion (wD) BM2 | 37,9 | |
| Wässrige Dispersion (PD1) | | 32,0 |
| Melaminformaldehydharz (Cymel® 203 der Firma Allnex) | 4,7 | |
| Polyester; hergestellt gemäß Beispiel D, Spalte 16, Z. 37-59 der DE 40 09 858 A1 | 6,5 | 7,4 |
| Polyurethanmodifiziertes Polyacrylat; hergestellt gemäß S. 7, Z. 55 bis S.8, Z. 23 der DE 4437535 A1 | 5,5 | 5,3 |
| deionisiertes Wasser | 31,5 | 34,1 |
| Butylglykol | 1,4 | 1,0 |
| 1-Propoxy-2-propanol | 3,3 | |
| N-Butoxypropanol | 2,4 | |
| Isobutanol | 4,1 | |
| 2-Ethylhexanol | 3,7 | |
| 2,4,7,9-Tetramethyl-5-decindiol, 52%ig in BG (erhältlich von BASF SE) | | 3,1 |
| 50 Gew.-%ige Lösung von Rheovis® PU1250 in Butylglykol (Rheovis® PU1250 erhältlich von BASF SE) | 0,7 | |
| Rheovis® AS 1130 erhältlich von BASF SE | 1,0 | 1,2 |
| Aluminiumpigment-Schlämme S1 | 13,4 | 13,4 |
| 10%iges Dimethylethanolamin in Wasser | 1,0 | 4,0 |
| Pluriol® P900, erhältlich von BASF SE | 1,4 | 0,9 |
| Byketol®-WS der Firma Altana/BYK-Chemie GmbH | 1,4 | |
| Dispex® Ultra FA 4437, erhältlich von BASF SE | | 0,4 |

### Herstellung von erfindungsgemäßen Basislacken WBL Schwarz B5 bis WBL Schwarz B8

Die in der Tabelle 1.5 aufgeführten Komponenten werden in der angegebenen Reihenfolge zu einer wässrigen Mischung zusammengerührt. Sodann wird 10 min lang gerührt und mit Hilfe von deionisiertem Wasser und Dimethylethanolamin auf einen pH Wert von 8 und eine Spritzviskosität von 90±10 mPa·s bei einer Scherbelastung von 1000 s⁻¹, gemessen mit einem Rotations-Viskosimeter (Gerät Rheolab QC mit Temperiersystem C-LTD80/QC der Firma Anton Paar) bei 23 °C, eingestellt.

**Tabelle 1.5:**

| | **WBL Schwarz B5** | **WBL Schwarz B6** | **WBL Schwarz B7** | **WBL Schwarz B8** |
|---|---|---|---|---|
| **Komponente** | | | | |
| 3%ige Na-Mg-Schichtsilikatlösung | 15,0 | 10,0 | 5,0 | 7,0 |
| Wässrige Dispersion (wD) BM2 | 27,3 | 18,2 | 9,1 | 7,0 |
| Wässrige Dispersion (PD1) | 6,3 | 12,5 | 18,8 | 14,1 |
| Melaminformaldehydharz (Cymel® 203 der Firma Allnex) | 6,9 | 6,9 | 6,9 | |
| Polyester; hergestellt gemäß Seite 28, Zeilen 13 bis 33 (Beispiel BE1) WO 2014/033135 A2 | 3,1 | 3,1 | 3,1 | 2,3 |
| deionisiertes Wasser | 9,1 | 11,3 | 13,2 | 3,0 |
| Butylglykol | 4,0 | 4,0 | 4,0 | 1,4 |
| 2-Ethylhexanol | 2,0 | 2,0 | 2,0 | 1,4 |
| 2,4,7,9-Tetramethyl-5-decindiol, 52%ig in BG (erhältlich von BASF SE) | 0,3 | 0,2 | 0,1 | 0,2 |
| 10%iges Dimethylethanolamin in Wasser | 0,1 | 0,2 | 0,2 | 0,3 |
| 50 Gew.-%ige Lösung von Rheovis® PU1250 in Butylglykol (Rheovis® PU1250 erhältlich von BASF SE) | 0,1 | 0,1 | 0,1 | 0,5 |
| Rheovis® AS 1130, erhältlich von BASF SE | 0,3 | 0,3 | 0,3 | 0,1 |
| Schwarzpaste P2 | 7,5 | 7,5 | 7,5 | 7,5 |
| Talkumpaste P3 | | | | 1,5 |

### Herstellung von Vergleich-Basislacken WBL Schwarz B9 und WBL Schwarz B10

Die in der Tabelle 1.6 aufgeführten Komponenten werden in der angegebenen Reihenfolge zu einer wässrigen Mischung zusammengerührt. Sodann wird 10 min lang gerührt und mit Hilfe von deionisiertem Wasser und Dimethylethanolamin auf einen pH Wert von 8 und eine Spritzviskosität von 90±10 mPa·s bei einer Scherbelastung von 1000 s⁻¹, gemessen mit einem Rotations-Viskosimeter (Gerät Rheolab QC mit Temperiersystem C-LTD80/QC der Firma Anton Paar) bei 23 °C, eingestellt.

**Tabelle 1.6:**

| | **WBL Schwarz B9** | **WBL Schwarz B10** |
|---|---|---|
| **Komponente** | | |
| 3%ige Na-Mg-Schichtsilikatlösung | 7,6 | |
| Wässrige Dispersion (wD) BM2 | 20,3 | |
| Wässrige Dispersion (PD1) | | 22,9 |
| Melaminformaldehydharz (Cymel® 203 der Firma Allnex) | 2,4 | |
| Polyester; hergestellt gemäß Beispiel D, Spalte 16, Z. 37-59 der DE 40 09 858 A1 | 1,7 | 5,3 |
| Polyurethanmodifiziertes Polyacrylat; hergestellt gemäß S. 7, Z. 55 bis S.8, Z. 23 der DE 4437535 A1 | 1,6 | 3,8 |
| deionisiertes Wasser | 6,1 | 7,2 |
| Butylglykol | 0,6 | 1,9 |
| n-Propanol | 0,5 | |
| n-Butoxypropanol | 0,8 | |
| Isopropanol | 0,9 | |
| 2-Ethylhexanol | 1,6 | |
| Isopar® L, erhältlich von Exxon Mobile | 0,5 | |
| 2,4,7,9-Tetramethyl-5-decindiol, 52%ig in BG (erhältlich von BASF SE) | 0,8 | 1,3 |
| NACURE 2500, erhältlich von King Industries, Inc | 0,2 | |
| Schwarzpaste P2 | 7,5 | 7,5 |
| Talkumpaste P3 | 1,9 | |
| Bariumsulfatpaste P4 | 1,8 | |
| 10%iges Dimethylethanolamin in Wasser | 0,2 | 1,6 |
| Pluriol® P900, erhältlich von BASF SE | | 0,6 |
| BYK-346, erhältlich von Altana/BYK-Chemie GmbH | 0,3 | |

Während die erfindungsgemäßen Basislacke jeweils eine Kombination der beiden Dispersionen (PD) und (wD) enthalten (und dabei unterschiedliche Gewichtsverhältnisse der beiden Komponenten repräsentiert sind), enthalten die Vergleich-Basislacke lediglich eine der beiden Dispersionen.

### Anwendungstechnische Untersuchungen der Basislacke sowie unter Einsatz der Basislacke hergestellter Mehrschichtlackierungen

### Lagerstabilität, Läufer, Kocher:

Alle Basislacke A1 bis A4 und B1 bis B10 wurden anhand der oben beschriebenen Methoden hinsichtlich ihrer Lagerstabilität und ihres Läufer- sowie Kocherverhaltens untersucht. Alle Materialien erwiesen sich als lagerstabil; Kocher und Läufer traten bei keinem Basislack auf.

### Nadelstiche:

Folgende keilförmige Mehrschichtaufbauten wurden nach den oben beschriebenen Methoden (Varianten A, B und C) hergestellt und anschließend untersucht (x = Aufbau hergestellt, - = Aufbau nicht vorhanden):

| | Keillackierung | | |
|---|---|---|---|
| | Variante A | Variante B | Variante C |
| WBL Grau A1 mit WBL Silber B1 | X | X | - |
| WBL Grau A2 mit WBL Silber B2 | X | X | - |
| WBL Grau A3 mit WBL Silber B3 | X | X | - |
| WBL Grau A4 mit WBL Silber B4 | X | X | |
| WBL Schwarz B5 | - | - | x |
| WBL Schwarz B6 | - | - | x |
| WBL Schwarz B7 | - | - | x |
| WBL Schwarz B8 | - | - | x |
| WBL Schwarz B9 | - | - | x |
| WBL Schwarz B10 | - | - | x |

Insgesamt zeigt sich, dass alle Basislacke zu Mehrschichtlackierungen mit hervorragenden optischen beziehungsweise ästhetischen Eigenschaften führen.

### Haftungseigenschaften:

A) Es wurde nach folgender allgemeiner Vorschrift vorgegangen, um auf diese Weise Reparaturaufbauten zu simulieren:
Ein mit einer gehärteten kathodischen Elektrotauchlackschicht (KTL) (CathoGuard® 800 der Firma BASF Coatings GmbH) beschichtetes Lochblech der Abmessungen 57 cm x 20 cm aus Stahl (gemäß DIN EN ISO 28199-1, Punkt 8.1, Ausführung A) wird analog DIN EN ISO 28199-1, Punkt 8.2 (Ausführung A) vorbereitet. Anschließend erfolgt in Anlehnung an DIN EN ISO 28199-1, Punkt 8.3 die Applikation eines wässrigen Basislacks WBL Grau A1 bis WBL Grau A4 elektrostatisch in einem Einmalauftrag in einer Zielschichtdicke von 20 µm. Nach einer Ablüftzeit von 3 Minuten bei Raumtemperatur wird ein zweiter wässriger Basislack (WBL Silber 1 bis WBL Silber 4) elektrostatisch appliziert (Zielschichtdicke 15 µm). Nach einer erneuten Ablüftzeit von 4 Minuten bei Raumtemperatur wird der Aufbau im Umluftofen für 5 Minuten bei 60 °C zwischengetrocknet. Dann wird auf den zwischengetrockneten Aufbau per Fließbecherpistole manuell ein handelsüblicher Zweikomponenten-Klarlack (ProGloss® der Firma BASF Coatings GmbH) mit einer Zielschichtdicke von 40-45 µm aufgetragen.
Die resultierende Klarlackschicht wird während 10 Minuten bei Raumtemperatur abgelüftet; anschließend erfolgt die Härtung im Umluftofen bei 140 °C für weitere 20 Minuten.
In einem weiteren Schritt werden die oben genannten Applikationen wiederholt, um so einen Reparaturaufbau zu simulieren, der in der Praxis besonders kritisch bezüglich Haftung ist. Es wurde also derselbe Aufbau nochmal hergestellt, wobei in diesem Fall dann augenscheinlich der erste Basislack nicht auf die gehärtete kathodische Elektrotauchlackschicht, sondern auf die zuvor herstellte Mehrschichtlackierung (beziehungsweise die gehärtete Klarlackschicht) aufgebracht wurde. Die Originalmehrschichtlackierung diente hier also als Substrat für den Aufbau.
Der einzige Unterschied lag zum dem oben genannten Vorgehen lag bei der Temperatur des abschließenden Härtungsschritts. Während oben bei 140°C gehärtet wurde, wurde bei der Reparatur bei zwei jeweils unterschiedlichen Bedingungen vorgegangen, einmal unter sogenannten Unterbrandbedingungen (125 °C anstatt 140 °C), und einmal unter sogenannten Überbrandbedingungen (155 °C anstatt 140 °C).
In allen Fällen war nach Schwitzwasserbelastung ein blasenfreier Aufbau vorhanden (m0g0). Weitere Ergebnisse finden sich in nachstehender Tabelle.

| | | Steinschlag | | Dampfstrahl auf Steinschlag | |
|---|---|---|---|---|---|
| | erfindungsgemäß | Rep 125 °C | Rep 155 °C | Rep 125 °C | Rep 155 °C |
| WBL Grau A1 mit WBL Silber B1 | Ja | 1,5 | 2,0 | KW2 | KW1,5 |
| WBL Grau A2 mit WBL Silber B2 | Ja | 1,5 | 2,0 | KW2 | KW1 |
| WBL Grau A3 mit WBL Silber B3 | nein | 2,5 | 2,5 | KW2,5 | KW2,5 |
| WBL Grau A4 mit WBL Silber B4 | nein | 4,0 | 2,5 | KW4 | KW5 |

Die Ergebnisse zeigen, dass durch den Einsatz der erfindungsgemäßen Basislacke hervorragende Haftungseigenschaften erhalten werden, die zudem deutlich besser sind, als bei den Vergleichssystemen.
B) Es wurde nach folgender allgemeiner Vorschrift vorgegangen, um auf diese Weise Reparaturaufbauten zu simulieren:
Ein mit einer gehärteten kathodischen Elektrotauchlackschicht (KTL) (CathoGuard® 800 der Firma BASF Coatings GmbH) beschichtetes Lochblech der Abmessungen 57 cm x 20 cm aus Stahl (gemäß DIN EN ISO 28199-1, Punkt 8.1, Ausführung A) wird analog DIN EN ISO 28199-1, Punkt 8.2 (Ausführung A) vorbereitet. Anschließend erfolgt in Anlehnung an DIN EN ISO 28199-1, Punkt 8.3 die Applikation eines wässrigen Basislacks WBL Schwarz B5 bis WBL Schwarz B10 elektrostatisch in einem Einmalauftrag in einer Zielschichtdicke von 15 µm. Nach einer Ablüftzeit von 4 Minuten bei Raumtemperatur wird der Aufbau im Umluftofen für 5 Minuten bei 60 °C zwischengetrocknet. Dann wird auf den zwischengetrockneten Aufbau per Fließbecherpistole manuell ein handelsüblicher Zweikomponenten-Klarlack (ProGloss® der Firma BASF Coatings GmbH) mit einer Zielschichtdicke von 40-45 µm aufgetragen. Die resultierende Klarlackschicht wird während 10 Minuten bei Raumtemperatur abgelüftet; anschließend erfolgt die Härtung im Umluftofen bei 140 °C für weitere 20 Minuten.

Analog dem unter A) beschriebenen Vorgehen werden in einem weiteren Schritt die oben genannten Applikationen wiederholt, um so einen Reparaturaufbau zu simulieren. Wiederum lag der einzige Unterschied zum oben genannten Vorgehen bei der Temperatur des abschließenden Härtungsschritts.

In allen Fällen war nach Schwitzwasserbelastung ein blasenfreier Aufbau vorhanden (m0g0). Weitere Ergebnisse finden sich in nachstehender Tabelle.

| | | Steinschlag | | Dampfstrahl auf Steinschlag | |
|---|---|---|---|---|---|
| | erfindungsgemäß | Rep 125 °C | Rep 155 °C | Rep 125 °C | Rep 155 °C |
| WBL Schwarz B5 | Ja | 2,0 | 2,0 | KW1 | KW1 |
| WBL Schwarz B6 | Ja | 2,0 | 2,0 | KW1 | KW1 |
| WBL Schwarz B7 | Ja | 2,0 | 2,0 | KW1 | KW1 |
| WBL Schwarz B8 | Ja | 1,5 | 2,0 | KW1 | KW1 |
| WBL Schwarz B9 | Nein | 2,5 | 2,5 | KW3 | KW3 |
| WBL Schwarz B10 | Nein | 2,0 | 2,0 | KW5 | KW5 |

Die Ergebnisse zeigen wiederum, dass durch den Einsatz der erfindungsgemäßen Basislacke hervorragende Haftungseigenschaften erhalten werden, die zudem deutlich besser sind, als bei den Vergleichssystemen.

Insgesamt zeigen die Ergebnisse, dass nur die erfindungsgemäßen Basislacke geeignet sind, Mehrschichtlackierungen und Reparaturaufbauten bereitzustellen, die ausgezeichnete optische und ästhetische Eigenschaften mit hervorragenden Haftungseigenschaften vereinbaren.

## Patentansprüche

1. Wässriger Basislack enthaltend
mindestens eine wässrige Polyurethan-Polyharnstoff-Dispersion (PD) mit in der Dispersion enthaltenen Polyurethan-Polyharnstoff-Partikeln mit einem Volumenmittel der Teilchengröße von 40 bis 2000 nm, gemessen gemäss Beschreibung, und einem Gelanteil von mindestens 50%, gemessen gemäss Beschreibung, wobei die Polyurethan-Polyharnstoff-Partikel, jeweils in umgesetzter Form,
(Z.1.1) mindestens ein Isocyanatgruppen-haltiges Polyurethan-Präpolymer enthaltend anionische und/oder in anionische Gruppen überführbare Gruppen sowie
(Z.1.2) mindestens ein Polyamin enthaltend zwei primäre Aminogruppen und ein oder zwei sekundäre Aminogruppen
enthalten,
sowie
mindestens eine wässrige Dispersion (wD) enthaltend ein Polymerisat mit einer Teilchengröße von 100 bis 500 nm, dessen Herstellung die aufeinanderfolgende radikalische Emulsionspolymerisation von drei unterschiedlichen Mischungen (A), (B) und (C) von olefinisch ungesättigten Monomeren umfasst,
wobei
ein Polymer, welches aus der Mischung (A) hergestellt wird, eine Glasübergangstemperatur (Dynamische Differenzkalorimetrie, DIN 53765, Aufheizrate 10 K/Minute, 2. Messlauf, Seite/Zeile der Beschreibung) von 10 bis 65°C besitzt,
ein Polymer, welches aus der Mischung (B) hergestellt wird, eine Glasübergangstemperatur von -35 bis 15°C besitzt,
und
ein Polymer, welches aus der Mischung (C) hergestellt wird, eine Glasübergangstemperatur von -50 bis 15°C besitzt.

2. Wässriger Basislack nach Anspruch 1, **dadurch gekennzeichnet, dass** die Monomerenmischung (A) mindestens 50 Gew.-% von Monomeren mit einer Löslichkeit in Wasser von kleiner 0,5 g/l bei 25°C enthält und die Monomerenmischung (B) mindestens ein mehrfach ungesättigtes Monomer enthält.

3. Wässriger Basislack nach Anspruch 1 oder 2 **dadurch gekennzeichnet, dass** der Anteil der Monomermischung (A) von 0,1 bis 10 Gew.-%, der Anteil der Monomerenmischung (B) von 60 bis 80 Gew.-% und der Anteil der Monomerenmischung (C) von 10 bis 30 Gew.-%, jeweils bezogen auf die Summe der Einzelmengen der Mischungen (A), (B) und (C), beträgt.

4. Wässriger Basislack nach einem der Ansprüche 1 bis 3, **dadurch gekennzeichnet, dass** die Monomermischung (B) als mehrfach olefinisch ungesättigte Monomere ausschließlich zweifach olefinisch ungesättigte Monomere enthält.

5. Wässriger Basislack nach einem der Ansprüche 1 bis 4, **dadurch gekennzeichnet, dass** die Monomermischungen (A) und (B) keine hydroxyfunktionellen Monomere und keine säurefunktionellen Monomere enthalten.

6. Wässriger Basislack nach einem der Ansprüche 1 bis 5, **dadurch gekennzeichnet, dass** das Polyamin (Z.1.2) aus ein oder zwei sekundären Aminogruppen, zwei primären Aminogruppen sowie aliphatisch-gesättigten Kohlenwasserstoffgruppen besteht.

7. Wässriger Basislack nach einem der Ansprüche 1 bis 6, **dadurch gekennzeichnet, dass** das Präpolymer (Z.1.1) mindestens ein unter Einsatz von Diolen und Dicarbonsäuren hergestelltes Polyesterdiol enthält, wobei bei der Herstellung dieser Polyesterdiole mindestens 50 Gew.-%, bevorzugt 55 bis 75 Gew.-%, der eingesetzten Dicarbonsäuren Dimerfettsäuren sind.

8. Wässriger Basislack nach einem der Ansprüche 1 bis 7, **dadurch gekennzeichnet, dass** die in der Dispersion enthaltenen Polyurethan-Polyharnstoff-Partikel eine mittlere Teilchengröße von 110 bis 500 nm und einem Gelanteil von mindestens 80 % aufweisen.

9. Wässriger Basislack nach einem der Ansprüche 1 bis 8, **dadurch gekennzeichnet, dass** das Präpolymer (Z.1.1) Carbonsäuregruppen enthält.

10. Wässriger Basislack nach einem der Ansprüche 1 bis 9, **dadurch gekennzeichnet, dass** er zudem mindestens ein von den in den Dispersionen (wD) und (PD) enthaltenen Polymeren unterschiedliches hydroxyfunktionelles Polymer sowie ein Melaminharz enthält.

11. Verfahren zur Herstellung einer Mehrschichtlackierung, umfassend
(1) Herstellung einer Basislackschicht auf einem Substrat oder Herstellung mehrerer direkt aufeinanderfolgender Basislackschichten auf einem Substrat durch Aufbringen eines wässrigen Basislacks oder direkt aufeinanderfolgendes Aufbringen von mehreren wässrigen Basislacken auf das Substrat,
(2) Herstellung einer Klarlackschicht auf der Basislackschicht oder der obersten Basislackschicht,
(3) gemeinsame Härtung der Basislackschicht und der Klarlackschicht oder der Basislackschichten und der Klarlackschicht
**dadurch gekennzeichnet, dass** der Basislack in Stufe (1) oder mindestens einer der in Stufe (1) eingesetzten mehreren Basislacke ein Basislack gemäß einem der Ansprüche 1 bis 10 ist.

12. Verfahren nach Anspruch 11, **dadurch gekennzeichnet, dass** als Substrat ein mit einer gehärteten Elektrotauchlackierung beschichtetes metallisches Substrat dient und alle darauf aufgebrachten Schichten gemeinsam gehärtet werden.

13. Mehrschichtlackierung, die gemäß Anspruch 11 oder 12 herstellbar ist.

14. Reparaturverfahren für eine Mehrschichtlackierung gemäß Anspruch 13, welche Fehlstellen aufweist, wobei bei dem Reparaturverfahren ein Verfahren gemäß Anspruch 11 durchgeführt wird und die Mehrschichtlackierung, welche Fehlstellen aufweist, als Substrat der Stufe (1) eingesetzt wird.

15. Reparaturverfahren nach Anspruch 14, **dadurch gekennzeichnet, dass** alle dabei aufgebrachten Schichten gemeinsam gehärtet werden.

16. Reparaturaufbau, herstellbar nach einem Verfahren gemäß Anspruch 14 oder 15.

## Claims

1. Aqueous basecoat material comprising
at least one aqueous polyurethane-polyurea dispersion (PD) having polyurethane-polyurea particles present in the dispersion with a volume average particle size of 40 to 2000 nm, measured as in the description, and a gel fraction of at least 50%, measured as in the description, where the polyurethane-polyurea particles, in each case in reacted form, comprise
(Z.1.1) at least one polyurethane prepolymer containing isocyanate groups and containing anionic groups and/or groups which can be converted into anionic groups, and
(Z.1.2) at least one polyamine containing two primary amino groups and one or two secondary amino groups, and also
at least one aqueous dispersion (wD) comprising a polymer having a particle size of 100 to 500 nm, and prepared by the successive radical emulsion polymerization of three different mixtures (A), (B) and (C) of olefinically unsaturated monomers,
where
a polymer prepared from the mixture (A) possesses a glass transition temperature (Differential Scanning Calorimetry, DIN 53765, heating rate 10 K/minute, 2nd measurement run, page/line of the description) of 10 to 65°C,
a polymer prepared from the mixture (B) possesses a glass transition temperature of -35 to 15°C,
and
a polymer prepared from the mixture (C) possesses a glass transition temperature of -50 to 15°C.

2. Aqueous basecoat material according to claim 1, **characterized in that** the monomer mixture (A) comprises at least 50 wt% of monomers having a solubility in water of less than 0.5 g/l at 25°C, and the monomer mixture (B) comprises at least one polyunsaturated monomer.

3. Aqueous basecoat material according to claim 1 or 2, **characterized in that** the fraction of the monomer mixture (A) is from 0.1 to 10 wt%, the fraction of the monomer mixture (B) is from 60 to 80 wt% and the fraction of the monomer mixture (C) is from 10 to 30 wt%, based in each case on the sum of the individual amounts of the mixtures (A), (B) and (C).

4. Aqueous basecoat material according to any of claims 1 to 3, **characterized in that** polyolefinically unsaturated monomers present in the monomer mixture (B) are exclusively diolefinically unsaturated monomers.

5. Aqueous basecoat material according to any of claims 1 to 4, **characterized in that** the monomer mixtures (A) and (B) contain no hydroxy-functional monomers and no acid-functional monomers.

6. Aqueous basecoat material according to any of claims 1 to 5, **characterized in that** the polyamine (Z.1.2) consists of one or two secondary amino groups, two primary amino groups and also aliphatically saturated hydrocarbon groups.

7. Aqueous basecoat material according to any of claims 1 to 6, **characterized in that** the prepolymer (Z.1.1) comprises at least one polyesterdiol prepared using diols and dicarboxylic acids, where, in the preparation of these polyesterdiols, at least 50 wt%, preferably 55 to 75 wt%, of the dicarboxylic acids used are dimer fatty acids.

8. Aqueous basecoat material according to any of claims 1 to 7, **characterized in that** the polyurethane-polyurea particles present in the dispersion have an average particle size of 110 to 500 nm and a gel fraction of at least 80%.

9. Aqueous basecoat material according to any of claims 1 to 8, **characterized in that** the prepolymer (Z.1.1) contains carboxylic acid groups.

10. Aqueous basecoat material according to any of claims 1 to 9, **characterized in that** it further comprises at least one hydroxy-functional polymer, different from the polymers present in the dispersions (wD) and (PD), and also a melamine resin.

11. Method for producing a multicoat paint system, comprising
(1) producing a basecoat film on a substrate or producing two or more directly successive basecoat films on a substrate, by applying an aqueous basecoat material or directly successively applying two or more aqueous basecoat materials to the substrate,
(2) producing a clearcoat film on the basecoat film or on the topmost basecoat film,
(3) jointly curing the basecoat film and the clearcoat film, or the basecoat films and the clearcoat film, **characterized in that** the basecoat material in stage (1), or at least one of the two or more basecoat materials used in stage (1), is a basecoat material according to any of claims 1 to 10.

12. Method according to claim 11, **characterized in that** a metallic substrate coated with a cured electrocoat system serves as substrate, and all films applied thereto are jointly cured.

13. Multicoat paint system producible according to claim 11 or 12.

14. Refinish method for a multicoat paint system according to claim 13 that has defects, the refinish method comprising the implementation of a method according to claim 11 and using as stage (1) substrate the multicoat paint system that has defects.

15. Refinish method according to claim 14, **characterized in that** all of the films applied in the method are jointly cured.

16. Refinish system producible by a method according to claim 14 or 15.

## Revendications

1. Peinture de base à l'eau contenant
au moins une dispersion aqueuse de polyuréthane-polyurée (PD), les particules de polyuréthane-polyurée contenues dans la dispersion ayant une granulométrie moyenne en volume de 40 à 2 000 nm, mesurée selon la description, et une proportion de gel d'au moins 50 %, mesurée selon la description, les particules de polyuréthane-polyurée contenant, chacune sous forme ayant réagi,
(Z.1.1) au moins un prépolymère de polyuréthane contenant des groupes isocyanate, contenant des groupes anioniques et/ou pouvant être convertis en des groupes anioniques, ainsi que
(Z.1.2) au moins une polyamine contenant deux groupes amino primaires et un ou deux groupes amino secondaires, ainsi que,
au moins une dispersion aqueuse (wD) contenant un polymère ayant une granulométrie de 100 à 500 nm, dont la fabrication comprend la polymérisation radicalaire en émulsion successivement de trois mélanges différents (A), (B) et (C) de monomères à insaturation oléfinique,
un polymère fabriqué à partir du mélange (A) présentant une température de transition vitreuse (analyse calorimétrique différentielle dynamique, DIN 53765, vitesse de montée en température 10 K/minute, 2^{ème} cycle de mesure, page/ligne de la description) de 10 à 65 °C, un polymère qui est fabriqué à partir du mélange (B) présentant une température de transition vitreuse de -35 à 15 °C,
et
un polymère qui est fabriqué à partir du mélange (C) présentant une température de transition vitreuse de -50 à 15 °C.

2. Peinture de base à l'eau selon la revendication 1, **caractérisée en ce que** le mélange de monomères (A) contient au moins 50 % en poids de monomères ayant une solubilité dans l'eau inférieure à 0,5 g/l à 25 °C, et le mélange de monomères (B) contient au moins un monomère polyinsaturé.

3. Peinture de base à l'eau selon la revendication 1 ou 2, **caractérisée en ce que** la proportion du mélange de monomères (A) est de 0,1 à 10 % en poids, la proportion du mélange de monomères (B) est de 60 à 80 % en poids et la proportion du mélange de monomères (C) est de 10 à 30 % en poids, dans chaque cas par rapport à la somme des quantités individuelles des mélanges (A), (B) et (C).

4. Peinture de base à l'eau selon l'une des revendications 1 à 3, **caractérisée en ce que** le mélange de monomères (B) contient exclusivement, en tant que monomères à polyinsaturation oléfinique, des monomères à deux insaturations oléfiniques.

5. Peinture de base à l'eau selon l'une des revendications 1 à 4, **caractérisée en ce que** les mélanges de monomères (A) et (B) ne contiennent pas de monomères à fonctionnalité hydroxy et ne contiennent pas de monomères à fonctionnalité acide.

6. Peinture de base à l'eau selon l'une des revendications 1 à 5, **caractérisée en ce que** la polyamine (Z.1.2) est constituée d'un ou deux groupes amino secondaires, de deux groupes amino primaires ainsi que de deux groupes hydrocarbonés à saturation aliphatique.

7. Peinture de base à l'eau selon l'une des revendications 1 à 6, **caractérisée en ce que** le prépolymère (Z.1.1) contient au moins un polyesterdiol fabriqué par utilisation de diols et d'acides dicarboxyliques, au moins 50 % en poids, de préférence 55 à 75 % en poids des acides dicarboxyliques utilisés étant, lors de la fabrication de ces polyesterdiols, des acides gras dimères.

8. Peinture de base à l'eau selon l'une des revendications 1 à 7, **caractérisée en ce que** les particules de polyuréthane-polyurée contenues dans la description présentent une granulométrie moyenne de 110 à 500 nm et une proportion de gel d'au moins 80 %.

9. Peinture de base à l'eau selon l'une des revendications 1 à 8, **caractérisée en ce que** le prépolymère (Z.1.1) contient des groupes acide carboxylique.

10. Peinture de base à l'eau selon l'une des revendications 1 à 9, **caractérisée en ce qu'**elle contient en outre au moins un polymère à fonctionnalité hydroxy, différent des polymères contenus dans les dispersions (wD) et (PD), ainsi qu'une résine de mélamine.

11. Procédé de fabrication d'un système multicouche, comprenant
(1) la fabrication d'une couche de peinture de base sur un substrat ou la fabrication de plusieurs couches de peinture de base directement successives sur un substrat par application d'une peinture de base à l'eau ou par application, directement successive, de plusieurs peintures de base à l'eau, sur le substrat,
(2) la fabrication d'une couche de vernis transparent sur la couche de peinture de base ou sur la couche la plus supérieure de peinture de base,
(3) le durcissement commun de la couche de peinture de base et de la couche de vernis transparent ou des couches de peinture de base et de la couche de vernis transparent **caractérisé en ce que** la peinture de base de l'étape (1), ou au moins l'une des nombreuses peintures de base utilisées dans l'étape (1), est une peinture de base selon l'une des revendications 1 à 10.

12. Procédé selon la revendication 11, **caractérisé en ce qu'**on utilise comme substrat un substrat métallique revêtu d'une peinture électrophorétique durcie, et **en ce que** toutes les couches, disposées par-dessus, sont durcies ensemble.

13. Système multicouche qui peut être fabriqué selon la revendication 11 ou 12.

14. Procédé de réparation d'un système multicouche selon la revendication 13 qui présente des défauts, dans lequel, dans le procédé de réparation, on met en œuvre un procédé selon la revendication 11, et on utilise comme substrat de l'étape (1) le système multicouche qui présente des défauts.

15. Procédé de réparation selon la revendication 14, **caractérisé en ce que** toutes les couches appliquées à cette occasion sont durcies ensemble.

16. Structure de réparation pouvant être fabriquée par un procédé selon la revendication 14 ou 15.
